(19) Europäisches Patentamt
European Patent Office
Office européen des brevets

(11) **EP 2 418 517 A2**

(12) **EUROPÄISCHE PATENTANMELDUNG**

(43) Veröffentlichungstag:
**15.02.2012 Patentblatt 2012/07**

(51) Int Cl.:
***G01V 8/20*** *(2006.01)*

(21) Anmeldenummer: **11006272.6**

(22) Anmeldetag: **29.07.2011**

(84) Benannte Vertragsstaaten:
**AL AT BE BG CH CY CZ DE DK EE ES FI FR GB GR HR HU IE IS IT LI LT LU LV MC MK MT NL NO PL PT RO RS SE SI SK SM TR**
Benannte Erstreckungsstaaten:
**BA ME**

(30) Priorität: **09.08.2010 DE 102010033818**

(71) Anmelder: **Dorma GmbH&Co. Kg**
**58256 Ennepetal (DE)**

(72) Erfinder:
• **Busch, Sven**
**44227 Dortmund (DE)**
• **Amberg, Mario**
**58332 Schwelm (DE)**
• **Lange, Siegfried Dr.**
**58339 Breckerfeld (DE)**

(54) **Optoelektronischer Sensor**

(57) Ein erfindungsgemäßer Sensor (11, 11', 11 ") ist eingerichtet, derart im Bereich einer Flügelanlage (20) angeordnet zu werden, dass er einen vorbestimmten, zu überwachenden Erfassungsbereich (6, 6', 6", 7, 7', 7") in Bezug auf die Flügelanlage (20) sensorisch abdeckt. Der Sensor (11, 11', 11 ") ist als Bilderfassungssensor gestaltet. und weist zumindest zwei lichtempfindliche Sensorelemente (14) auf, die so angeordnet sind, dass sie den zu überwachenden Erfassungsbereich (6, 6', 6", 7, 7', 7") vollständig abdecken. Die von den aktivierten Sensorelementen erfassten Lichtwerte ergeben zusammen ein jeweiliges, vom Sensor (11, 11', 11") erfasstes Bild. Zudem weist der Sensor (11, 11', 11 ") eine Steuerungseinrichtung (12) auf oder ist mit dieser gekoppelt ist. Die Steuerungseinrichtung (12) ist erfindungsgemäß vorgesehen, vorbestimmte Sensorelemente (14) des Sensors (11, 11', 11 ") gemäß einem jeweils aktuellen Zustand der Flügelanlage (20) zu aktivieren bzw. zu inaktivieren.

Figur 1

EP 2 418 517 A2

**Beschreibung**

Die Erfindung betrifft einen Türanlagen-Sensor und damit ausgestattete Flügelanlagen, insbesondere ausgebildet als Türanlagen. Ferner betrifft die Erfindung ein Verfahren zum Betrieb derartiger Sensoren bzw. Flügelanlagen.

Mit Sensoren versehene Flügelanlagen an sich sind bekannt. Es gibt verschiedenartige Sensoren.

Es gibt Aktivierungssensoren, die eingerichtet sind, aufgrund bestimmter Bedingungen im zu überwachenden Erfassungsbereich anzuschlagen oder eben gerade nicht. Es handelt sich also um Sensoren mit lediglich zwei Betriebs- bzw. Schaltzuständen. Bekannte Sensoren sind Bewegungsmelder und Infrarot-Sensoren. Derartige Sensoren haben einen konstruktionsbedingten Nachteil, sie können nicht zwischen sicherheitsrelevanten Objekten wie Personen und nicht sicherheitsrelevanten Objekten wie einem beheizten Fußboden unterscheiden. Im Rahmen der hierin beschriebenen Erfindung umfasst der Begriff Objekte also sowohl Gegenstände als auch Lebewesen oder Teile von ihnen, wie beispielsweise ein Finger einer Person.

Eine andere Art von Sensoren sind so genannte Bewegungssensoren. D. h. sie erfassen die Bewegung von Objekten unter Ausnutzung des bekannten Doppler-Effekts. Sich nicht oder nur sehr langsam bewegende und/oder sehr kleine Objekte können in der Regel nicht erfasst werden. Die Richtung eines sich bewegenden erfassbaren Objekts kann mit Radarsensoren mit mehreren Antrennen zwar ermittelt werden, aber nur grob. Dies reicht für Flügelanlagen insbesondere im Erfassungsbereich der Sicherheitssensorik nicht aus.

Daher wurden Sensoren entwickelt, die ein Abbild des zu überwachenden Erfassungsbereichs erfassen und damit eine Erkennung der darin vorhandenen Objekte und auch deren Bewegungsrichtung ermöglichen. Dies ermöglicht eine Vermeidung der vorgenannten Nachteile. Derartige Sensoren benötigen neben einer Bildverarbeitungslogik eine Menge an Einzelsensoren, die jeweilige Bildpunkte eines so vom Sensor gebildeten Abbilds des zu überwachenden Erfassungsbereichs erfassen.

Bei guten Beleuchtungsverhältnissen bestehen aufgrund von Fremdlicht beispielsweise von der Sonne Probleme. Eine Änderung des Fremdlichtes beispielsweise aufgrund von Schattenwurf beispielsweise von sich noch weit von der Flügelanlage befindlichen Objekten könnten diese Schatten mit einem Objekt verwechselt werden. Die Richtung des Fremdlichts lässt sich nicht steuern, sodass Objekte Schlagschatten erzeugen können, deren scharfe Konturen zu einer Fehlauslösung des Sensors führen können. Schließlich lassen sich Lichtfarbe, Richtung und Helligkeit im Erfassungsbereich nicht steuern. Ein sinnvolles Referenzbild kann nicht erzeugt werden. Und bei schlechten Beleuchtungsverhältnissen müssen derartige Sensoren sowieso aktiv sein. D. h. sie müssen immer ein eigenes Strahlungsfeld aussenden. Dies führt zu einem relativ hohen Energiebedarf des Sensors.

Bei den heute meistens eingesetzten Aktiv-Infrarot-Sensoren unter Nutzung von Triangulations- und Leistungsmess-Verfahren wird ein derartiger Sensor derart positioniert und ggf. der Flügelöffnungswinkel eingeschränkt, sodass sich mit Sicherheit keine größeren feststehenden Objekte (Wand, Profile, Zargenteile...) im Erfassungsbereich befinden. Gleichzeitig wird der Bodenbereich in ca. 30 cm bis 40 cm Höhe vollständig ausgeblendet, um Irritationen von Sensoren dieser Art durch Unregelmäßigkeiten oder Reflektionen am Boden zu vermeiden. Nachteilig an diesem Verfahren ist, dass kleine Hindernisse, die sich in unmittelbarer Nähe zum Boden befinden, nicht oder nur unzureichend erkannt werden können. Solche Hindernisse können beispielsweise Haustiere oder ein am boden liegendes Kind sein.

Es sind Laserscanner bekannt, die mittels zumindest eines Spiegels ausgesendetes und einfallendes Laserlicht optisch ablenken. Vorbestimmte Messpunkte der abzubildenden Umgebung werden nacheinander abgescannt. Der Nachteil ist die Notwendigkeit eines mechanisch zu verstellenden Spiegels. Insbesondere die zum Abscannen notwendige Schwenkung des Spiegels um zwei Achsen macht den konstruktiven Aufbau und die Ansteuerung sehr aufwendig. Zudem kann es vorkommen, dass, mehrfach reflektiertes Licht von einem Gegenstand zurück auf den Laserscanner gelangt. Eine gemessene Distanz zu einem jeweils erfassten Objekt kann in diesem Fall, ohne es zu bemerken, verfälscht werden.

In einer Kurzanleitung der Firma Datalogic Automation S.r.l. aus dem Jahre 2007 betreffend einen Sensor mit der Bezeichnung Matrix 400™ wird vorgeschlagen, diesen Scannersensor mit einem externen Trigger oder Aktivierungssensor zu koppeln, sodass der Scannersensor nicht die gesamte Zeit aktiv sein muss. Dadurch ist dessen Energiebedarf über die Zeit reduziert. Allerdings überwacht der Sensor, wenn aktiviert, immer den gesamten zu überwachenden Erfassungsbereich, benötigt über die gesamte Aktivierung hinweg also eine Versorgung mit der vollen Energie.

Aufgabe der Erfindung ist es, die vorgenannten Nachteile zu verringern oder gar zu beseitigen.

Diese Aufgabe wird durch den Gegenstand der Ansprüche 1, 11 und 13 gelöst. Vorteilhafte Weiterbildungen der Erfindung sind in den Unteransprüchen angegeben.

Ein erfindungsgemäßer Sensor ist eingerichtet, derart im Erfassungsbereich einer Flügelanlage angeordnet zu werden, dass er einen vorbestimmten, zu überwachenden Erfassungsbereich in Bezug auf die Flügelanlage sensorisch abdeckt. Dieser Erfassungsbereich ist beispielsweise ein Erfassungsbereich, den ein Flügel der Flügelanlage bei seiner Bewegung überstreicht. Der Sensor ist als Bilderfassungssensor gestaltet. D. h. er bildet ein Abbild des zu überwachenden Erfassungsbereichs. Der Sensor weist zu diesem Zweck zumindest zwei lichtempfindliche Sensorelemente auf, die so angeordnet sind, dass sie den zu überwachenden Erfassungsbereich vollständig abdecken. Die von den aktivierten Sensorelementen erfassten Lichtwerte ergeben zusammen somit ein jeweiliges, vom Sensor erfasstes Bild. Zudem weist der Sensor eine Steuerungseinrichtung auf oder ist mit dieser gekoppelt ist. Die Steuerungseinrichtung ist erfindungsgemäß vorgesehen, vorbestimmte Sensorelemente des Sensors gemäß einem jeweils aktuellen Zustand der Flügelanlage zu aktivieren bzw. zu inaktivieren. Wird der betreffende Flügel beispielsweise nicht bewegt, muss dessen Umgebung nicht überwacht werden. D. h. hier können alle Sensorelemente inaktiviert werden. Wird er allerdings geschlossen, stellt seine Hauptschließkante, also die Kante, die in Richtung korrespondierender Kante einer Flügeleinfassung oder dergleichen bewegt wird, eine potentielle Gefahr dar. Solange die Hauptschließkante zur korrespondierenden Kante einen derartigen Abstand hat, dass ein Einklemmen beispielsweise einer Person kaum zu befürchten ist, können einige der Sensorelemente inaktiviert bleiben. Die aktivierten Sensorelemente überwachen zwar weiterhin den Bewegungsbereich des Flügels, allerdings in wesentlich gröberer Auflösung. Wird nun ein Objekt im zu überwachenden Erfassungsbereich erfasst, oder unterschreitet der vorgenannte Abstand einen vorbestimmten Mindestabstand, werden die inaktivierten Sensorelemente aktiviert. Dies hat den Vorteil, dass der Sensor, sofern nichts Ungewöhnliches geschieht, über einen Großteil des Flügel-Bewegungswegs nur teilweise aktiviert ist und damit weniger Energie verbraucht als wenn er ständig vollständig aktiviert wäre.

Vorzugsweise sind die Sensorelemente matrixartig angeordnet. Dies ermöglicht eine rechtentechnisch einfache Bilddatenverarbeitung.

Zusätzlich oder alternativ weist der erfindungsgemäße Sensor zumindest einen Energiesparmodus und einen Aktivmodus auf. Im Energiesparmodus ist nur ein Teil der Sensorelemente des Sensors aktiviert, wohingegen im Aktivmodus alle, den jeweils zu überwachenden Erfassungsbereich abdeckende Sensorelemente aktiviert sind. Die Modusumschaltung ermöglicht die Aktivierung bzw. Inaktivierung von Gruppen von Sensorelementen, was die Verschaltung vereinfacht. Es ist möglich, Sensorelement-Gruppen für die Betriebsmodi beispielhaft softwareseitig vorab zu definieren.

Der Sensor weist vorzugsweise eine Datenverarbeitungseinrichtung auf oder ist mit dieser gekoppelt. Die Datenverarbeitungseinrichtung ist eingerichtet, das von den Sensorelementen erfasste Bild mit vorbestimmten, gespeicherten Mustern abzugleichen, die nicht sicherheitsrelevanten Teilen der Flügelanlage selbst oder ihrer Umgebung entsprechen.

Der Sensor kann als getaktet betriebener Sensor ausgebildet sein. In dem Fall ist der Betriebstakt des Sensors im Inaktivmodus geringer als im Aktivmodus.

Zusätzlich oder alternativ weist der Sensor ferner eine Beleuchtungseinrichtung auf. Die Beleuchtungseinrichtung ist zum einen eingerichtet, den zu überwachenden Erfassungsbereich derart auszuleuchten, dass die Sensorelemente in der Lage sind, die vorstehend erwähnten Lichtwerte zu erfassen. Im Energiesparmodus erbringt die Beleuchtungseinrichtung eine gegenüber dem Aktivmodus reduzierte Ausleuchtleistung. Dies kann dadurch erfolgen, dass nicht alle Leuchtelemente der Beleuchtungseinrichtung leuchten und/oder die betriebenen Leuchtelemente mit verringerter Energie versorgt werden. Dies ermöglicht eine zusätzliche Optimierung des Sensors hinsichtlich des Energiebedarfs über die Zeit.

Vorzugsweise weist der Sensor ferner einen Schlafmodus auf, in dem nun all die Sensorelemente inaktiviert sind, die einen Erfassungsbereich außerhalb eines vorbestimmten, sicherheitsrelevanten Erfassungsbereichs der Flügelanlage abdecken. Der sicherheitsrelevante Erfassungsbereich kann im Fall eines stillstehenden Flügels in Vollständig-Offenstellung oder Geschlossenstellung null sein, also gar nicht existieren. In Teiloffenstellung kann vorgesehen sein, den sicherheitsrelevanten Erfassungsbereich mittels eines schmalen, den Flügel umgebenden Erfassungsbereichs auszubilden, der unter Umständen nichts mit dem vorgenannten zu überwachenden Erfassungsbereich zu tun hat. Betritt nun beispielsweise eine Person den sicherheitsrelevanten Erfassungsbereich, kann vorgesehen sein, den Flügel von dieser Person weg zu bewegen und den Sensor entsprechend in den Energiespar- bzw. Aktivmodus zu bringen. Zu diesem Zweck weist der Sensor eine Aufweckeinrichtung auf oder ist mit einer solchen gekoppelt. Die Aufweckeinrichtung bringt bei Betätigung bzw. Auslösung den Sensor in den Energiesparmodus oder Aktivmodus.

Die Aufweckeinrichtung kann einen Aktivierungssensor umfassen, der den sicherheitsrelevanten Erfassungsbereich abdeckt. Bei Detektieren eines

Objekts im sicherheitsrelevanten Erfassungsbereich bringt der Aktivierungssensor den erfindungsgemäßen Sensor in den Aktivmodus. Als Aktivierungssensor können Passivsensoren wie Bewegungsmelder oder Aktivsensoren wie Aktiv-Infrarot-Sensoren zum Einsatz kommen.

Alternativ oder zusätzlich umfasst die Aufweckeinrichtung eine schalteinrichtung, die eingerichtet ist, bei Aktivierung bzw. Betätigung oder Deaktivierung bzw. Nichtbetätigung den Sensor in den Aktivmodus bzw. Inaktiviert- oder Schlafmodus zu schalten. Eine derartige Schalteinrichtung kann eine Flügel- bzw. Türantriebssteuerung sein, die bei einem Drücken einer Person gegen den Flügel in eine Bewegungsrichtung eine Bewegung der Abtriebswelle des Türantriebs beispielsweise mittels eines Inkrementalgebers erfasst und daraufhin den Antrieb veranlasst, den Flügel in diese Richtung (weiter) zu bewegen. Er kann auch mittels eines berührungssensitiven Schalters ausgebildet sein.

Eine erfindungsgemäße Flügelanlage weist zumindest einen der vorbeschriebenen Sensoren auf. Diese Art von Sensoren kann in allen möglichen Betriebsweisen eingesetzt werden wie beispielsweise Sicherheitssensor, Schaltleiste, in Brandmeldern, Öffnungssensor, Schließsensor, Schließkantenüberwachung.

Der zumindest eine Sensor der Flügelanlage überwacht vorzugsweise einen Bereich einer Stirnkante bzw. Schließkante eines zugehörigen Flügels der Flügelanlage, der sich zudem vom zugehörigen Flügel weg erstreckt.

Mit dieser Art von Flügelanlage ist erfindungsgemäß ein Verfahren zum Betrieb dieser Flügelanlage möglich, das zunächst Schritte des Startens und Initialisierens der Flügelanlage umfasst. Daraufhin wird der erfindungsgemäß zumindest eine erste Sensor in den Energiesparmodus versetzt und vorerst in diesem Modus betrieben. Daraufhin wird geprüft, ob dieser Sensor aufzuwecken ist oder nicht. Ist er nicht aufzuwecken, wird gemäß dem bekannten Polling-Mechanismus zu diesem Prüfschritt zurückgesprungen. Andernfalls wird der betreffende Sensor im Aktivmodus weiterbetrieben. Dadurch wird verhindert, dass der betreffende Sensor ständig in voller Bereitschaft steht und so relativ viel Energie benötigt. Der Energiesparmodus ermöglicht den Betrieb dieses Sensors beispielsweise als Aktivierungssensor oder auch als Bildsensor mit gröberer Auflösung, d. h. es sind nicht alle Einzelsensoren bzw. deren zugeordnete Beleuchtungselemente zugeschaltet.

Vorzugsweise umfasst der Energiesparmodus einen ersten Teilschritt des Prüfens, ob der betreffende Flügel der Flügelanlage eine Bewegung vollzieht oder nicht. Wenn nicht, steht dieser Flügel also still, wird zu diesem Prüf-Teilschritt zurückgesprungen. Andernfalls wird in einem nachfolgenden Teilschritt geprüft, ob sich im gegenwärtig vom betreffenden Sensor zu überwachenden Erfassungsbereich ein Objekt befindet oder nicht. Wenn nicht, wird zum Teilschritt des Prüfens, ob der betreffende Flügel der Flügelanlage eine Bewegung vollzieht oder nicht, zurückgesprungen. Befindet sich hingegen ein Objekt im zu überwachenden Erfassungsbereich, wird das Aufwecken des betreffenden Sensors initiiert.

Der Aktivmodus umfasst vorzugsweise einen ersten Teilschritt wiederum des Prüfens, ob der betreffende Flügel der Flügelanlage eine Bewegung vollzieht oder nicht. Wenn nicht, wird zu einem ersten nächsten Prüfschritt gesprungen. Andernfalls werden in einem nachfolgenden Schritt ein Abbild des gegenwärtig zu überwachenden Erfassungsbereichs der Flügelanlage mittels des vorgenannten, zumindest einen ersten Sensors erfasst und daraufhin geprüft, ob in dem erfassten Abbild ein sicherheitsrelevantes Objekt erfasst ist oder nicht. Sicherheitsrelevante Objekte sind beispielsweise Personen und Tiere. Nicht sicherheitsrelevante Objekte können beispielsweise Spielbälle oder dergleichen sein. Gibt es keine sicherheitsrelevanten Objekte, wird zum Teilschritt des Prüfens, ob der betreffende Flügel der Flügelanlage eine Bewegung vollzieht oder nicht, zurückgesprungen. Andernfalls wird zu einem zweiten nächsten Prüfschritt gesprungen. In diesem zweiten nächsten Prüfschritt wird geprüft, ob für das aktuell erfasste, sicherheitsrelevante Objekt von der Flügelanlage eine Gefahr ausgeht oder nicht, also beispielsweise Einklemmgefahr besteht. Wenn nicht, wird zum Teilschritt des Prüfens, ob der betreffende Flügel der Flügelanlage eine Bewegung vollzieht oder nicht, zurückgesprungen. Andernfalls erfolgt durch die Flügelanlage eine derart vorbestimmte Sicherheitsreaktion, dass die Gefahr für das Objekt zumindest gemindert wird. Hinsichtlich der vorgenannten Einklemmgefahr könnte dies in einem abrupten Anhalten des bzw. der betreffenden, sich bewegenden Flügel oder gar in ihrem Reversierens resultieren. Parallel dazu wird zum vorgenannten, ersten nächsten Prüfschritt gesprungen. In diesem ersten nächsten Prüfschritt nun wird geprüft, ob sich der betreffende Flügel der Flügelanlage in einer vorbestimmten Endstellung befindet oder nicht. Ist dies der Fall, besteht für das erfasste, sicherheitsrelevante Objekt keine Gefahr (mehr), und es wird zum Schritt des Prüfens, ob der betreffende Flügel der Flügelanlage eine Bewegung vollzieht oder nicht, gesprungen. Befindet sich der betreffende Flügel hingegen nicht in Endstellung, wird zum Schritt des Betreibens des zumindest einen ersten Sensors im Energiesparmodus gesprungen. Dieses Verfahren bietet sich insbesondere für Sicherheitssensorik beispielsweise im Erfassungsbereich der Schließkanten an. Steht der betreffende Flügel still, besteht keine Einklemmgefahr, und der betreffende Sensor ist nicht erforderlich.

Die erstgenannte Verfahrensvariante kann dahingehend abgeändert sein, dass sie zusätzlich den vorgenannten Schlafmodus integriert. Das Verfahren ist dementsprechend angepasst. D. h. zwischen den vorgenannten Schritten des Initialisierens der Flügelanlage bzw. des Versetzens und Betreibens dies Sensors in dessen Energiesparmodus weist das Verfahren erfindungsgemäß ferner Schritte des Versetzens dieses Sensors in den Schlafmodus und des darauf folgenden Prüfens, ob die Flügelanlage aktiviert ist oder nicht, auf. Ist sie nicht aktiviert, befindet sie sich also vorzugsweise in Ruhe, wird zu diesem Prüfschritt, also ob die Flügelanlage aktiviert ist oder nicht, zurückgesprungen. Andernfalls wird mit dem Schritt des Versetzens und Betreibens dieses Sensors in dessen Energiesparmodus fortgefahren. Im Schlafmodus ist der Sensor vorzugsweise vollständig abgeschaltet, wodurch dessen Energiebedarf über die Zeit weiter verringerbar ist. Der Schlafmodus ist insbesondere sinnvoll, wenn die Flügelanlage stillsteht und deren Flügel geschlossen ist/sind. In dem Fall besteht für Objekte auch im zu überwachenden Erfassungsbereich keine Gefahr.

Weist der betreffende Sensor wiederum den vorgenannten Schlafmodus auf, kann das Verfahren den vorbeschriebenen Energiesparmodus in Verbindung mit dem vorstehend beschriebenen, verfahrenstechnisch integrierten Schlafmodus umfassen. In dem Fall wird, wenn im ersten Teilschritt des Energiesparmodus' ermittelt wurde, dass der betreffende Flügel stillsteht, zu einem Schritt des Prüfens, ob die Flügelanlage inaktiviert ist oder nicht, gesprungen. Ist sie inaktiviert, wird zum vorgenannten Schritt des Versetzens des betreffenden Sensors in den Schlafmodus gesprungen. Andernfalls wird zum ersten Teilschritt des Energiesparmodus' zurückgesprungen.

Alternativ oder zusätzlich umfasst das erfindungsgemäße Verfahren vorzugsweise den vorbeschriebenen Aktivmodus. In dem Fall wird, wenn im vorgenannten ersten nächsten Prüfschritt ermittelt ist, dass sich der betreffende Flügel der Flügelanlage in der vorbestimmten Endstellung befindet, zum Schritt des Versetzens des betreffenden Sensors in den Schlafmodus gesprungen. Andernfalls wird zum Schritt des Prüfens, ob der betreffende Flügel der Flügelanlage eine Bewegung vollzieht oder nicht, zurückgesprungen.

Vorzugsweise ist im Energiesparmodus der Schritt des Prüfens, ob die Flügelanlage aktiviert ist oder nicht, durch einen Schritt des Prüfens, ob die Flügelanlage geschlossen und zugleich inaktiviert ist, oder nicht, ersetzt. Dieses Verfahren eignet sich besonders für den Betrieb des betreffenden Sensors sowohl als Öffnungssensor als auch als Sicherheitssensor. Die Funktion des Öffnungssensors ist bekanntermaßen, bei Näherkommen eines Objekts wie einer Person dies zu erkennen und daraufhin den Öffnungsvorgang der Flügelanlage einzuleiten. Zu dem Zweck befindet sich dieser Sensor im inaktivierten, Geschlossenzustand der Flügelanlage im Energiesparmodus. D. h. dem Sensor ist es möglich, auf ein näher kommendes Objekt zu reagieren. Ist dies der Fall, wird der Sensor in den Aktivmodus geschaltet, um ermitteln zu können, ob zu erwarten ist, dass das Objekt die Flügelanlage passieren will, oder ob es sich lediglich an der Flügelanlage vorbei bewegt, sodass die Flügelanlage geschlossen bleiben kann.

Im Rahmen des zuletzt beschriebenen Verfahrens umfasst der Aktivmodus vorzugsweise zunächst einen Teilschritt des Prüfens, ob der betreffende Flügel der Flügelanlage eine Bewegung vollzieht oder nicht. Ist dies der Fall, wird zum Schritt des Versetzens des zumindest einen ersten Sensors in den Schlafmodus zurückgesprungen. Andernfalls werden zeitlich versetzt ein erstes und ein nächstes Abbild des gegenwärtig zu überwachenden Erfassungsbereichs der Flügelanlage mittels des zumindest einen ersten Sensors erfasst. Danach wird geprüft, ob sich das erfasste Objekt weiterhin im zu überwachenden Erfassungsbereich der Flügelanlage befindet oder nicht. Wenn nicht, wird zum Schritt des Versetzens des zumindest einen ersten Sensors in den Schlafmodus zurückgesprungen. Andernfalls wird eine Bewegungsrichtung des erfassten Objekts auf Basis zumindest zwei der zuletzt erfassten Abbilder ermittelt. Dies kann einfach mittels Ermittelns erfolgen, wohin und in welchem Maß sich das Objekt im nächsten Abbild zum zeitlich vorher erfassten Abbild bewegt hat. Aufgrund der ermittelten Bewegungsrichtung und des Abstands des erfassten Objekts von der Flügelanlage wird nun geprüft, ob eine Begehung der Flügelanlage durch das erfasste Objekt zu erwarten ist oder nicht. Bleibt beispielsweise der Abstand des Objekts zur Flügelanlage in etwa gleich, oder wird er gar größer, will das Objekt mit hoher Wahrscheinlichkeit die Flügelanlage nicht passieren, sodass etwaige Türantriebe nicht in Aktion treten müssen, was einen wesentlich höheren Energiebedarf zur Folge hätte als der reine Sensorbetrieb. Ist ein Passieren zu erwarten, werden das Öffnen der Flügelanlage initiiert und vorzugsweise parallel dazu zum Schritt des Versetzens des zumindest einen ersten Sensors in den Schlafmodus zurückgesprungen. Andernfalls wird nur zum letztgenannten Schritt zurückgesprungen.

Weitere Merkmale und Vorteile der Erfindung ergeben sich aus der nachfolgenden Beschreibung bevorzugter Ausführungsformen. Es zeigen:

Figur 1    ein Blockschaltbild mit einem Sensor, gemäß einer Ausfüh-rungsform der Erfindung,

Figur 2    einen Sensor gemäß einer Ausführungsform der Erfindung,

Figur 3    eine einflügelige Drehflügelanlage, versehen mit zumindest einem Sensor gemäß Figur 1,

Figur 4    eine Abwandlung der Drehflügelanlage von Figur 3,

Figur 5    eine doppelflügelige Schiebetüranlage, versehen mit zumin-dest einem Sensor gemäß Figur 1 und in verschiedenen Be-triebszuständen,

Figur 6    eine Abwandlung der Schiebetüranlage von Figur 4, wieder-um in verschiedenen Betriebszuständen,

Figur 7    eine einflügelige Drehtüranlage, versehen mit drei Sensoren gemäß Figur 1 und in verschiedenen Betriebszuständen,

Figur 8    eine andersartige einflügelige Drehflügelanlage, versehen mit zumindest einem Sensor gemäß Figur 1,

Figur 9    eine Pendelflügelanlage, versehen mit zumindest einem Sensor gemäß Figur 1,

Figur 10    eine doppelflügelige Drehflügelanlage, versehen mit zumin-dest einem Sensor gemäß Figur 1,

Figur 11    Schiebeflügelanlagen in verschiedenen Ausführungen, je-weils versehen mit zumindest einem Sensor gemäß Figur 1,

Figur 12    eine Karusselltüranlage, versehen mit mehreren Sensoren gemäß Figur 1,

Figur 13    eine Faltflügelanlage, versehen mit zumindest einem Sensor gemäß Figur 1,

Figur 14    ein Verfahren zum Betrieb von Flügelanlagen gemäß einer ersten Ausführungsform der Erfindung,

Figur 15    ein Verfahren zum Betrieb von Flügelanlagen gemäß einer zweiten Ausführungsform der Erfindung und

Figur 16    ein Verfahren zum Betrieb von Flügelanlagen gemäß einer dritten Ausführungsform der Erfindung.

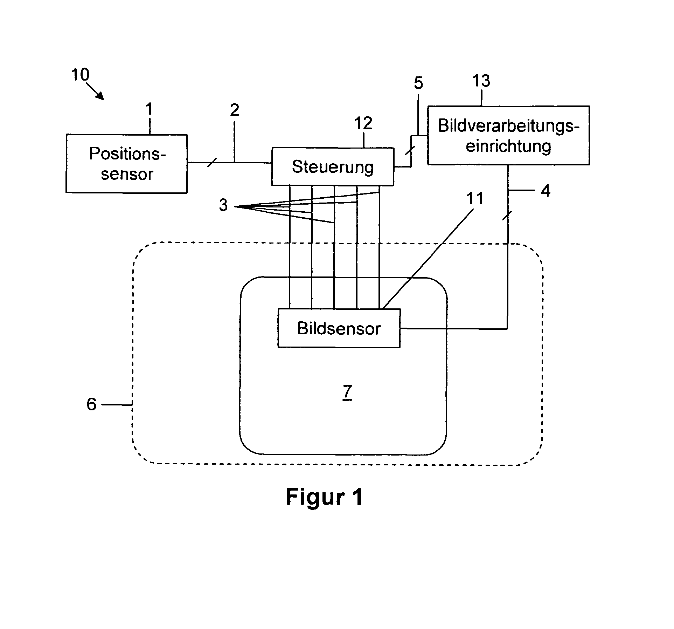

Figur 1 a zeigt ein Blockschaltbild einer Sensorvorrichtung 10 gemäß einer Ausführungsform der Erfindung. Sie umfasst einen Bildsensor 11, d. h. einen Sensor, der eingerichtet ist, ein Abbild eines jeweils aktuell von ihm überwachten Erfassungsbereichs 6, 7 zu erfassen. Der Bildsensor 11 ist über eine Kommunikationsverbindung 3 mit einer Steuerung 12 gekoppelt. Die Steuerung 12 ist zusätzlich mit einem oder mehreren Positionssensoren 1 der hier nicht abgebildeten Flügelanlage gekoppelt. Der hier eine Positionssensor 1 gibt exemplarisch über eine Busverbindung 2 Positionsdaten eines oder mehrerer Flügel der Flügelanlage an die Steuerung 12 weiter. Positionen können beispielsweise eine vollständige Öffnung oder ein Geschlossensein der Flügel(anlage) sein. Der Bildsensor 11 ist in der Lage, in einem Energiesparmodus den Erfassungsbereich 7 zu erfassen, der ausschließlich mittels der gestrichelten Linie gebildet ist. D. h. der von dieser Linie umschlossene Erfassungsbereich wird nicht oder nur rudimentär erfasst. Wird der Bildsensor 11 hingegen in einen Aktivmodus geschaltet, erfasst er einen Erfassungsbereich 7, der hier kleiner oder gleich dem von der Linie 7 umschlossenen Erfassungsbereich ist. Der Sensor 11 ist ferner über eine zugehörige Daten-/ Kommunikationsverbindung 4 mit einer Bildverarbeitungseinrichtung 13 gekoppelt, die die vom Sensor 11 erfassten Bilddaten verarbeitet und ggf. intern oder extern abspeichert. Die Bildverarbeitungseinrichtung 13 ist zudem über eine Daten-/Kommunikationsverbindung 5 mit der Steuerung 12 gekoppelt, damit diese aufgrund der Bilddatenauswertung weitergehende Aktionen veranlassen kann. Beispielsweise führt die Bildverarbeitungseinrichtung 13 nur eine Vorverarbeitung der Bilddaten des Sensors 11 durch, wohingegen die Steuerung 12 abschließende Prüfungen unternimmt.

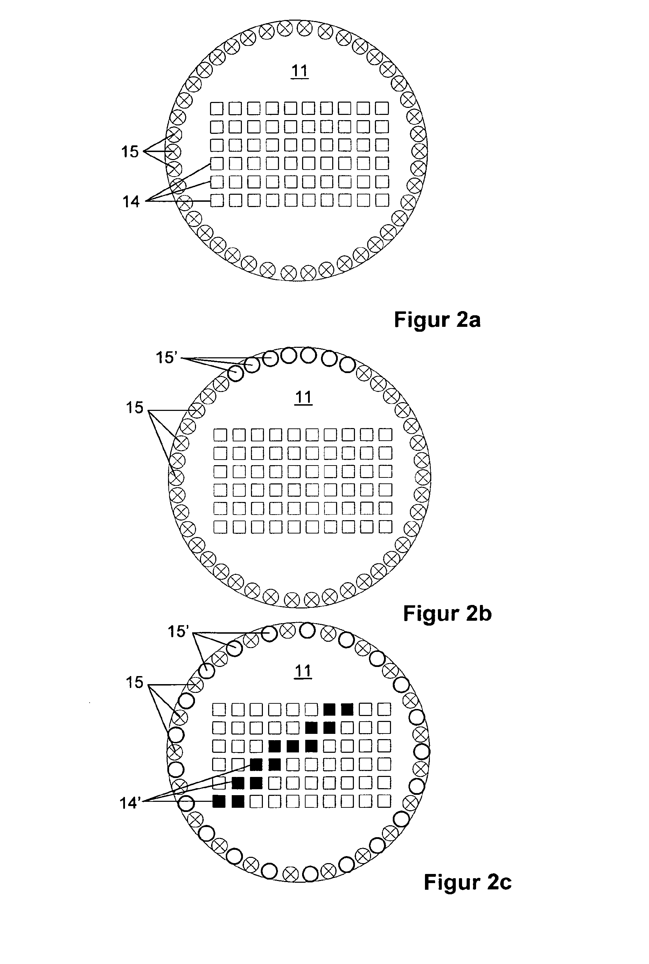

Figur 2a zeigt exemplarisch eine Variante des Bildsensors 11 in einem Schlafmodus. Der Sensor 11 umfasst exemplarisch Beleuchtungselemente 15, um den jeweils zu überwachenden Erfassungsbereich auch unter ungünstigen äußeren Bedingungen erfassen zu können. Die Beleuchtungselemente 15, von denen nur drei mit Bezugszeichen versehen sind, umgeben im gezeigten Beispiel matrixartig angeordnete, strahlungsempfindliche Sensorelemente 14, von denen ebenfalls nur drei mit Bezugszeichen versehen sind, und sind deaktiviert. Die Strahlungsempfindlichkeit der Sensorelemente 14 kann thermische Strahlung, Lichtstrahlung, Radarstrahlung und dergleichen umfassen.

Im Energiesparmodus sind gemäß Figur 2b nur die sieben oben angeordneten Beleuchtungselemente 15'1 aktiviert, von denen wiederum nur drei mit Bezugszeichen versehen sind,.

Gemäß einer anderen, in Figur 2c gezeigten Alternative ist im Energiesparmodus oder, bei dunklerer Umgebung im Aktivmodus, nur jedes zweite Beleuchtungselement 15'1 aktiviert; die anderen Beleuchtungselemente 15 sind deaktiviert. Von den Sensorelementen 14 sind beispielhaft nur die am Außenrand befindlichen aktiviert. Die anderen sind inaktiv. Im Aktivmodus hingegen sind alle Sensorelemente 14, abgesehen von denen am äußeren Rand, aktiviert. Bei der in Figur 2c gezeigten Betriebsstellung sind Sensorelemente 14', von denen nur drei mit Bezugszeichen versehen sind, geschwärzt dargestellt. Dies bedeutet, dass diese Sensorelemente 14' entweder inaktiv geschaltet sind und damit keine Bildpunkte im Abbild ergeben, oder aber gekennzeichnet sind, sodass deren Bildpunkte ignoriert werden. Dies dient der Ausblendung bestimmter Erfassungsbereiche des zu den betreffenden Sensorelementen 14' gehörenden, später näher erläuterten Erfassungsbereichs 6, 7 des Sensors 11. Damit könnte im gezeigten Beispiel beispielsweise ein ebenfalls später näher erläuteter, gedrehter Flügel 21 ausgeblendet werden.

Das Zu- und Wegschalten der Beleuchtungselemente 15 und der Sensorelemente 14 erfolgt mithilfe der Steuerung 12. Die Steuerung 12 kann Bestandteil des Sensors 11 oder aber mit diesem gekoppelt sein. Der erste Fall bietet sich für Flügelanlagen 20 ohne Steuerung, beispielsweise für manuelle Türanlagen, an. Der zweite Fall bietet bei Flügelanlagen 20 mit einer bereits vorhandenen Steuerung für einen Antrieb, eine Verriegelung oder dergleichen die Möglichkeit, diese auch zur Ansteuerung des Sensors 11 zu nutzen.

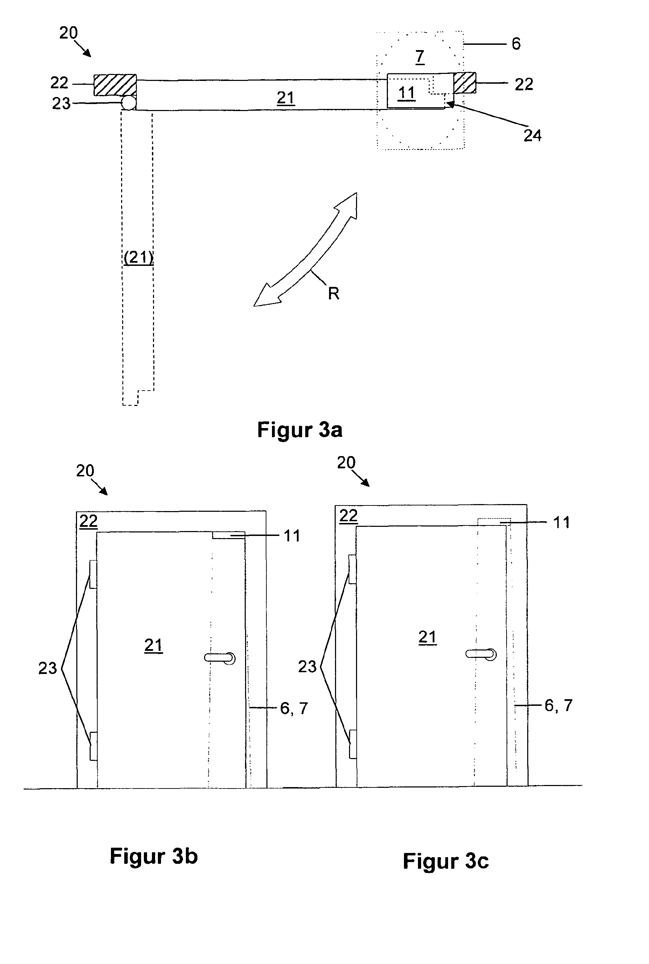

Figur 3a zeigt eine einflügelige Drehflügelanlage 20, deren Flügel 21 hier links mithilfe von Angeln 23 angeschlagen ist. Rechts liegt der Flügel 21 in Geschlossenstellung an einer Flügeleinfassung 22 beispielsweise in Form einer Türzarge an. Der Flügel 21 ist mittels einer gestrichelten Linie in Vollständig-Offen-Stellung dargestellt. Die Bewegungsrichtungen R des Flügels 21 sind mittels eines Doppelpfeils angedeutet. Im Erfassungsbereich des rechten Rands des Flügels 21, auch Hauptschließkantenbereich genannt, besteht die Gefahr des Einklemmens von Personen und Gegenständen und damit eine nicht unerhebliche Verletzungsgefahr. Zu diesem Zweck ist hier der vorgenannte Sensor 11 vorzugsweise auf dem oberen, also in Richtung Betrachter weisenden Rand des Flügels 21 ortsfest angebracht. Der Sensorbereich 7, also der im Energiesparmodus zu überwachende Erfassungsbereich, ist hier im Querschnitt als eine Randlinie eines Rechtecks gebildet und umgibt die Hauptschließkante 24 des Flügels 21 in einem derartigen Abstand, dass zum einen sicher erkannt wird, wenn ein Objekt in den Sensorbereich 7 eintritt, und zum anderen zeitlich eine Umschaltung des Sensors 11 in den Aktivmodus sicher möglich ist. Wie Figur 3b deutlich zeigt, sind die zu überwachenden Erfassungsbereiche 6, 7 des Sensors 11 kegelstumpfartig ausgebildet. Im Aktivmodus erfasst der Sensor 21 beispielhaft einen im Querschnitt elliptischen Bereich um die Hauptschließkante 24.

Das Befestigen des Sensors 11 am Flügel 21 hat den Vorteil, dass der zu überwachende Erfassungsbereich mit dem Flügel 21 "mitwandert". Dadurch ist es sehr einfach möglich, den Flügel 21 hinsichtlich der sensorischen Erfassung auszublenden oder in einem Bildspeicher derart zu hinterlegen, dass der Flügel 21 bei sensorischer Erfassung ignoriert wird, also nicht als sicherheitsrelevantes Objekt eingestuft wird.

Wie ferner zu erkennen, erfasst der Sensor 11 auch Erfassungsbereiche der Flügeleinfassung 22, wenn sich die Hauptschließkante 24 nahe genug der Flügeleinfassung 22 ist. Um zu verhindern, dass der Sensor 11 in den Aktivmodus geschaltet wird, ohne dass eine Gefahr besteht, ist erfindungsgemäß vorgesehen, dass die hier nicht abgebildete Bildverarbeitungseinrichtung 13 mit einer Logik versehen ist, die in der Lage ist, die Flügeleinfassung 22 als nicht sicherheitsrelevantes Objekt zu erkennen.

Dies kann dadurch erfolgen, dass zumindest ein repräsentatives Abbild der Flügeleinfassung 22 aus Sicht des Sensors 11 in einem Speicher abgespeichert ist. Die Bildverarbeitungseinrichtung 13 vergleicht nun die vom Sensor 11 erfassten Bildpunkte und gleicht sie vorzugsweise in Verbindung mit dem aktuellen Öffnungswinkel des Flügels 21 ab. Der Öffnungswinkel kann beispielsweise mithilfe eines Inkrementalgebers erfolgen, dessen Schlitzscheibe sich mit dem Flügel 21 mitdreht. Die Bildverarbeitungslogik dreht daraufhin das erfasste Abbild gemäß dem Öffnungswinkel in eine Position, die dem Flügel 21 in einer vorbestimmten Öffnungsposition entspricht, und gleicht ab, ob das so veränderte Abbild mit den gespeicherten Bilddaten übereinstimmt oder nicht. Damit ist es möglich, die Flügeleinfassung 22 sicher von anderen Objekten zu unterscheiden.

Alternativ ist auch folgende Variante denkbar: Werden vom Sensor 11 Bilddaten im erstgenannten Fall der Flügel 21 und im zweitgenannten Fall der Flügeleinfassung 22 erfasst, wird jeweils automatisch in den Aktivmodus des Sensors 11 geschaltet. Der Hintergrund ist, dass sich die Hauptschließkante 24 des Flügels 21 in beiden Fällen sehr nahe der Flügeleinfassung 22 befindet. In dieser Situation ist erhöhte sensorische Empfindlichkeit erforderlich, da unter Umständen nur wenig Zeit für eine entsprechende Sicherheitsreaktion der Flügelanlage 20 zur Verfügung steht.

Diese Anordnung ist nicht nur zur Absicherung der Hauptschließkante 24 hinsichtlich eines Einklemmens geeignet. Stellt man sich beispielsweise vor, dass eine Person Gefahr läuft, gegen die Hauptschließkante 24 zu laufen, ist es mittels des Sensors 11 möglich, dies zu erkennen. Handelt es sich um einen automatisierten, also mit einem Schließer oder Antrieb versehenen Flügel 21, ist es möglich, eine Feststellung des Flügels 21 aufzuheben, damit der Schließer oder Antrieb in der Lage ist, den Flügel 21 in Schließstellung und damit die Hauptschließkante 24 vom Objekt weg zu bewegen.

Im Fall eines Antriebs ist dieses Vorgehen dahingehend verfeinerbar, dass zusätzlich die Bewegungsrichtung des Objekts ermittelt wird. Kommt es von links in Figur 3b auf den Flügel 21 zu, wird der Flügel 21 vom Antrieb geschlossen. Kommt es hingegen von rechts auf den Flügel 21 zu, wird der Antrieb vorzugsweise angewiesen, den Flügel 21 zu öffnen.

Ist der Sensors 11 hingegen oberhalb des Flügels 21 ortsfest an der Flügeleinfassung 22 befestigt, wie in Figur 3c dargestellt, erfolgt die Bildverarbeitung so, dass im Bildspeicher ein Abbild des Flügels 21 und ggf. der Flügeleinfassung 22 abgelegt ist, wobei lediglich das den Flügel 21 betreffende, gespeicherte Abbild gedreht werden muss. Die Bildverarbeitung erfolgt analog der vorstehenden Vorgehensweise.

Es können selbstredend mehrere Sensoren 11 verwendet werden. Werden die Anordnungen gemäß Figur 3b und Figur 3c miteinander kombiniert, erhöht sich die Sicherheit der Flügelanlage 20 drastisch. Da jeder Sensor 11 bevorzugt eigenständig betrieben wird, kann es vorkommen, dass ein Sensor 11 ein sicherheitsrelevantes Objekt erfasst, und der andere nicht.

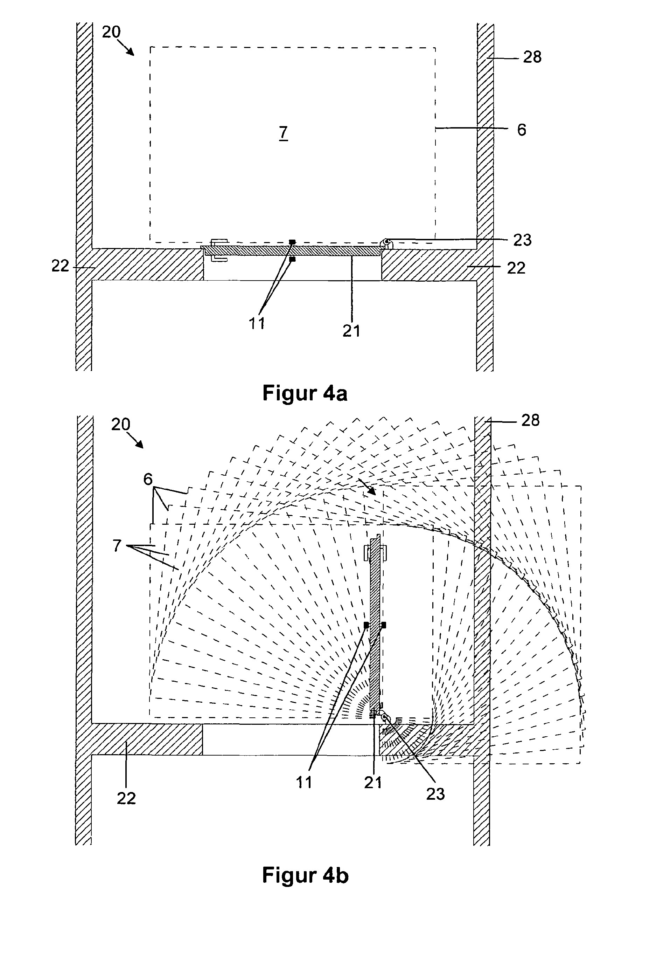

Figur 4a zeigt eine andere Abwandlung der Flügelanlage 20. Die Flügeleinfassung 22 ist mittels einer Wand 28 gebildet, die zudem einen Gang einschließt, in dem die Flügelanlage 20 hinsichtlich ihres Durchgangswegs vertikal verlaufend in Figur 4a ausgebildet ist. Der Flügel 21 ist rechts an Angeln 23 aufgehängt und schwenkt nach oben in Figur 4a. Der Erfassungsbereich 6 für den Energiesparmodus des hier oberen Sensors 11 ist mittels einer Rechteck-Umfangslinie gebildet, wohingegen der Erfassungsbereich 7 für den Aktivmodus des Sensors 11 das Rechteck als Fläche umfasst.

Figur 4b zeigt den Verlauf der Erfassungsbereiche 6, 7 gemäß bestimmten Öffnungsstellungen des Flügels 21. Es ist zu erkennen, dass die Erfassungsbereiche 6, 7 ab einem bestimmten Öffnungswinkel des Flügels 21 die Wand 28 überstreichen. Geht die Wand 28 nicht bis zur nicht dargestellten Raumdecke, kann es sein, dass der Sensor 11 "über die Wand schaut", was zu vermeiden ist. Insbesondere stellt die sich virtuell auf den Sensor 11 zu bewegende Wand 28 kein Hindernis und damit kein Sicherheitsrisiko dar. Um ein unnötiges Aktivieren des Sensors 11 zu vermeiden, wird zumindest ein Abbild der Wand 28 vorab abgespeichert und später vom jeweils vom Sensor 11 erfassten Abbild des Erfassungsbereichs 7 abgezogen. Dadurch muss der Sensor 11 trotz Wand 28 nicht aktiviert werden. Diese Ausführung hat noch einen Vorteil. Aufgrund der Möglichkeit des Sensors 11, wie später näher erläutert, Abstände zu Objekten ermittelbar zu machen, kann der Sensor 11 gleichzeitig zur Ermittlung des Vollständig-Offen-Zustands des Flügels 21 beispielsweise im Rahmen einer Lernfahrt dienen. Dem System wird einfach ein Mindestabstand eingegeben, und mithilfe des Sensors 11 kann ermittelt werden, bis zu welchem Winkel der Flügel 21 geöffnet werden kann.

Alternativ zum Abgleichen des jeweiligen Abbilds mit beispielsweise einem Vorabbild der Wand 28 können die Erfassungsbereiche 6, 7 bei der vorgenannten Lernfahrt programmtechnisch beschnitten werden. Sobald beim Öffnen des Flügels 21 also die Wand in den Abbild-Erfassungsbereich eintritt, wird ermittelt, welche Sensorelemente 14 des Sensors 11 einen Erfassungsbereich erfassen, der aus Sicht des Flügels 21 in oder hinter der Wand 28 liegt. D. h. ab einem vorbestimmten Öffnungswinkel des Flügels 21 werden die Erfassungsbereiche 6, 7 kleiner.

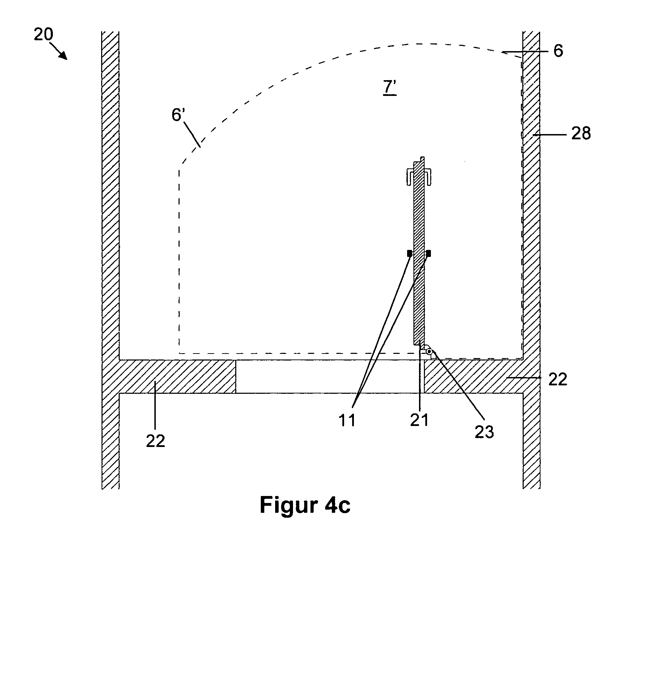

Alternativ dazu werden die einzelnen Erfassungsbereiche 6, 7 zu einem jeweiligen, gesamten Erfassungsbereich 7', 7' zusammengefasst, wie in Figur 4c gezeigt. Dies ermöglicht, einen in Bezug auf die Flügelanlage 20 ortsfesten Sensor 11 mit dem Erfassungsbereich 6, 7 anzulernen, indem temporär ein Sensor 11 an der in Figur 4a nach oben weisenden Fläche des Flügels 21 angebracht wird.

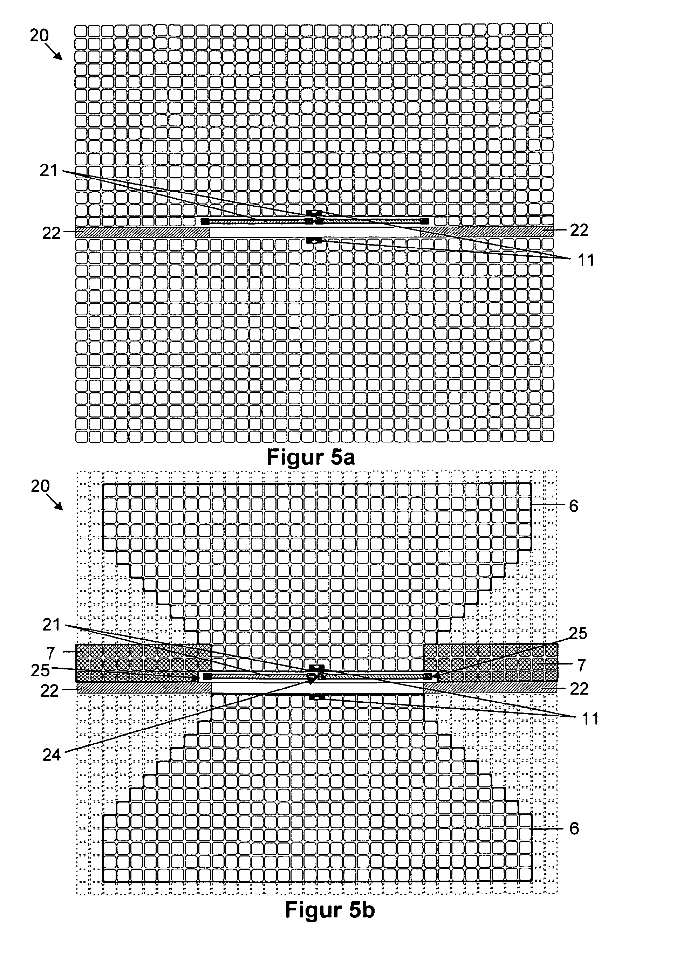

Figur 5a zeigt eine als zweiflügelige Schiebetüranlage ausgebildete Flügelanlage 20. Deren Flügel 21 sind geschlossen, und in Durchgangsrichtung, also vertikal in Figur 5a, ist vor und hinter den Flügeln 21 jeweils ein Sensor 11 angeordnet. Die Flügel 21 verschließen einen durch die Flügeleinfassung gebildeten Durchgang. Die innen weißen, abgerundeten Vierecke repräsentieren von den Sensoren 11 jeweils als Bildpunkt erfassbare Erfassungsbereiche.

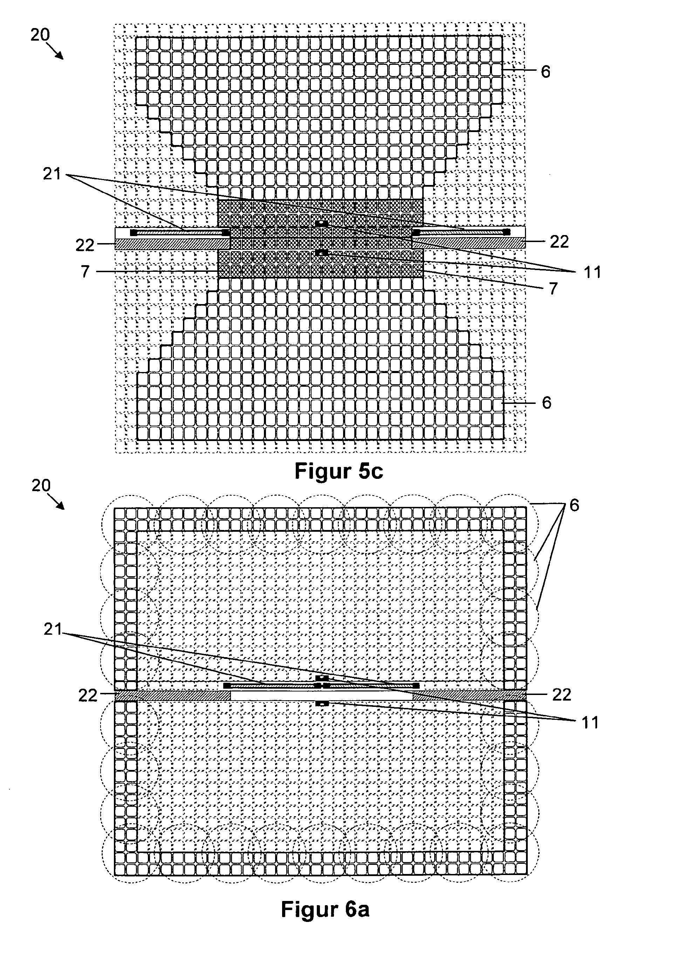

Figur 5b zeigt die Flügelanlage 20 von Figur 5a mit Erfassungsbereichen 6, 7 für den oberen und einem Erfassungsbereich 7 für den unteren Sensor 11. Die Erfassungsbereiche 7 sind mittels einer jeweils schwarzen, dicken Umrandungslinie gekennzeichnet. Der Erfassungsbereich 7 des oberen Sensors 11 beim Öffnen der Flügel 21, also wenn diese auseinander bewegt werden, ist mithilfe kreuzschraffierter Vierecke gekennzeichnet. Dieser Erfassungsbereich 7 deckt insbesondere den Erfassungsbereich ab, der von der jeweiligen Nebenschließkante 25 des zugehörigen Flügels 21 entlang der Flügeleinfassung 22 passiert wird. Es handelt sich mithin um eine Nebenschließkantenabsicherung der Flügel 21. Der nicht dargestellte Erfassungsbereich 7 des unteren Sensors 11 kann beispielsweise den Durchgangsbereich der Flügelanlage 20 abdecken, wie in Figur 5c dargestellt.

Werden die Flügel 21 wieder geschlossen, werden die Erfassungsbereiche 7 vorzugsweise beider Sensoren 11 geändert. Die Erfassungsbereiche 7 decken den gesamten Durchgang der Flügelanlage 20 ab. Dies ermöglicht die lückenlose Überwachung des Durchgangs und damit insbesondere das Vermeiden von Einklemmungen zwischen den Hauptschließkanten 24 der Flügel 21. Es handelt sich mithin um eine Hauptschließkantenabsicherung.

Diese Ausführungsform spiegelt einen besonderen Vorteil wider, nämlich den der an den Öffnungszustand einer Flügelanlage 20 anpassbaren Erfassungsbereiche 6, 7.

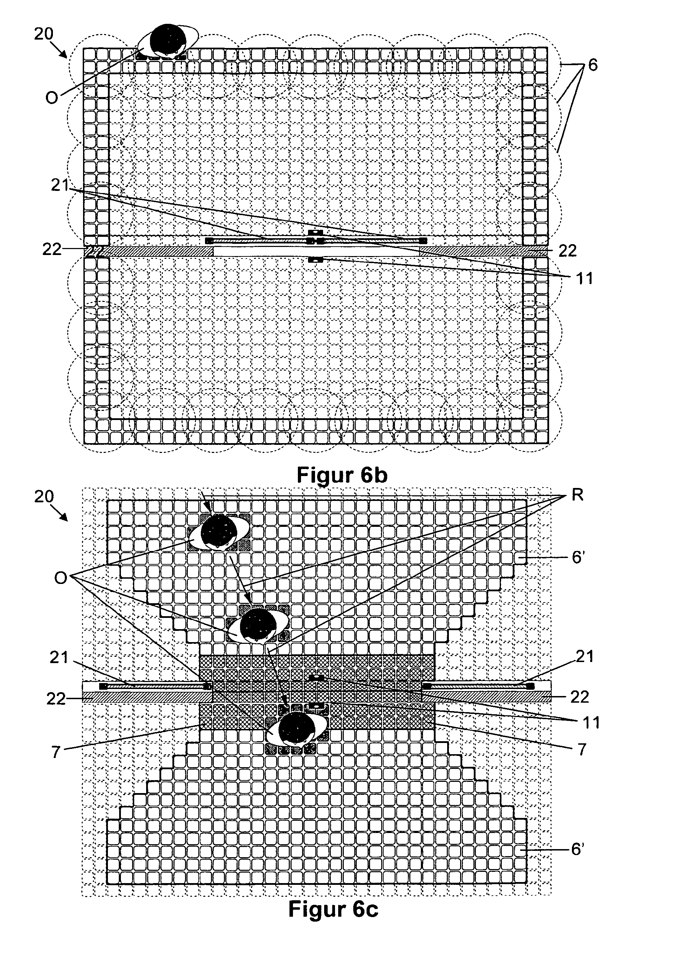

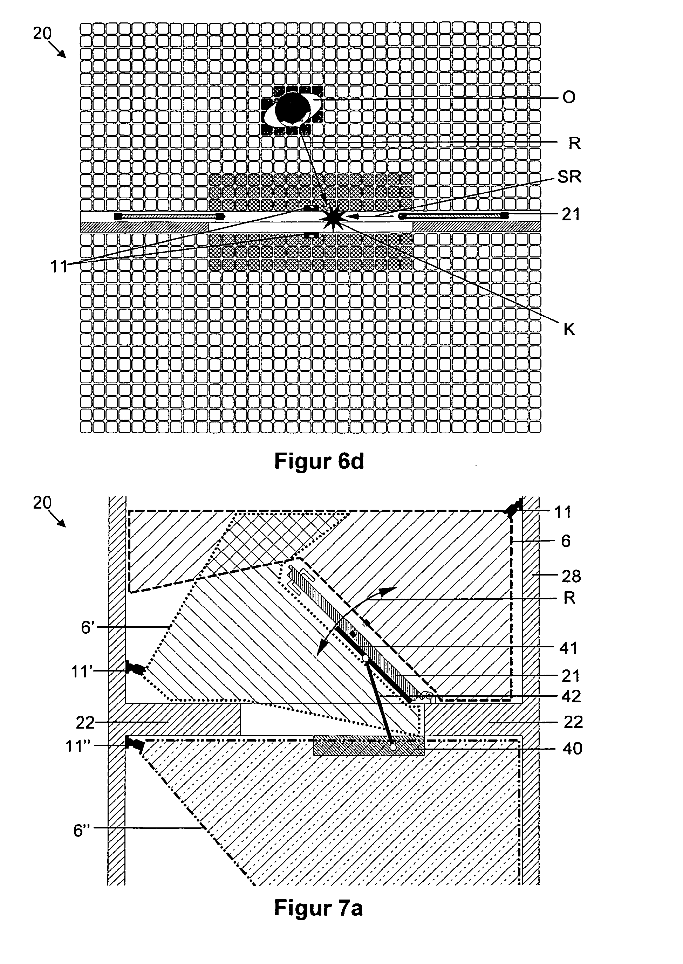

Figur 6 zeigt eine zu Figur 5 erweiterte Schiebetüranlage 20. Bei dieser Ausführungsform umfassen die Sensoren 11 zwei Energiesparmodi. Ist die Flügelanlage 20 geschlossen, befinden sich beide Sensoren in einem ersten Energiesparmodus, in dem nur der äußere Rand eines in Figur 6a sichtbaren Rechtecks erfasst wird. Viele kleine Erfassungskreise ergeben den Erfassungsbereich 7 für diesen Energiesparmodus.

Durchschreitet ein Objekt O hier in Form einer Person den Erfassungsbereich 7, wie in Figur 6b dargestellt, wird dies vom Sensor 11 detektiert, und dieser wird in einen zweiten Energiesparmodus geschaltet. In diesem zweiten Energiesparmodus werden, wie in Figur 6c dargestellt, Erfassungsbereiche 7' der Sensoren 11 aktiviert, die vom Erfassungsbereich 6 umschlossen sind und, von oben gesehen, im Querschnitt sechseckförmig ausgebildet sind und sich in Richtung Flügelanlage 20 jeweils verjüngen. Nun werden die Bewegungsrichtung R des Objekts O auf Basis aufeinander folgend erfasster Abbilder hier des oberen Erfassungsbereichs 6' ermittelt und überprüft, ob eine Begehung der Flügelanlage 20 zu erwarten ist oder nicht. Dies erfolgt, indem geprüft wird, ob die Bewegungsrichtung R in Richtung Durchgang der Flügelanlage 20 weist. Ist dies der Fall, und unterschreitet das Objekt O einen vorbestimmten Mindestabstand zum Sensor 11 bzw. zur Flügelanlage 20, werden das Öffnen der Flügel 21 initiiert und die Sensoren 11 in den Aktivmodus versetzt. Im Aktivmodus erfassen die Sensoren nun den Durchgangsbereich der Flügelanlage 20 in Form der Erfassungsbereiche 7. Der Erfassungsbereich 7 des unteren Sensors 11 dient dem Zweck zu ermitteln, ob, und wenn ja, wann sich das Objekt O so weit von der Flügelanlage 20 entfernt hat, dass diese gefahrlos geschlossen werden kann.

Bewegt sich einer der Flügel 21 in Schließrichtung SR, wie in Figur 6d gezeigt, kann es sein, dass ein anderes Objekt O den Erfassungsbereich 7 hier des oberen Sensors 11 betritt. Nun wird geprüft, ob der hier rechte Flügel 21 mit dem Objekt O aufgrund dessen Bewegungsrichtung R kollidieren könnte oder nicht. Wird eine Kollision an einer Stelle K als wahrscheinlich ermittelt, wird der rechte Flügel 21 unmittelbar wieder aufgefahren. Zudem kann eine Warnung erfolgen. Eine so gebildete Kollisionsvorhersage kann also in Sicherheitsreaktionen und/oder Aktivierungsreaktionen der Flügelanlage 20 einfließen. So kann beispielsweise der Flügel 21 bereits seine Geschwindigkeit reduzieren, wenn sich das Objekt O in kritische Richtung mit vielleicht hoher Geschwindigkeit bewegt, obwohl es noch nicht den eigentlichen Sicherheitsbereich erreicht hat. Anderseits könnte sich der Flügel 21 weiterbewegen wenn die Voraussage ergibt, dass eine Kollision ausgeschlossen ist, obwohl das betreffende Objekt den Sicherheitsbereich streift. Vorteilhaft an einer solchen Lösung ist, dass eine höher Sicherheit gegen Kollisionen erreicht wird, verbunden mit gleichzeitig gesteigertem Benutzungskomfort. Auch die Gesamt-Öffnungszeit der Flügelanlage kann reduziert werden.

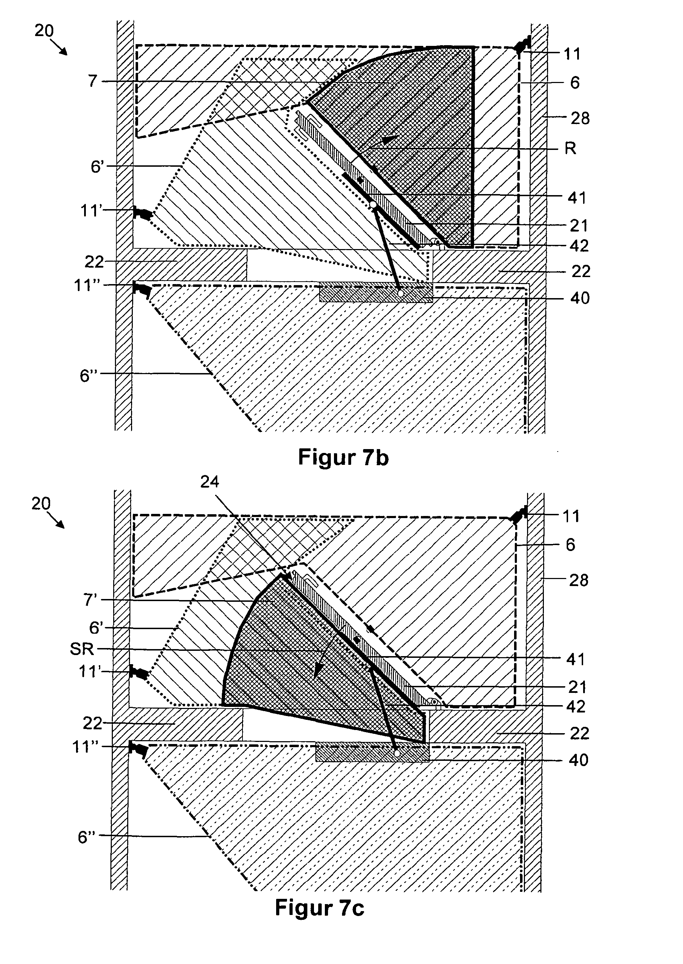

Figur 7 zeigt wiederum eine Drehflügelanlage 20, allerdings mit drei, in Bezug auf die Flügelanlage 20 angeordnete Sensoren 11, 11', 11". Deren Erfassungsbereiche 6, 6', 6" sind mittels unterschiedlicher Schraffuren und Umrandungslinien voneinander unterscheidbar dargestellt. Am Drehflügel 21 ist eine Gleitschiene 41 angebracht, in der ein Ende eines Gleitarms 42 in bekannter Weise geführt aufgenommen ist. Das andere Ende des Gleitarms 42 ist ebenfalls in bekannter Weise an einem Drehflügelantrieb 40 drehfest angebracht, der seinerseits in Bezug auf die Flügelanlage 20 ortsfest, vorzugsweise sturzmontiert ist. Der Drehflügel 21 verschließt in Geschlossenstellung einen durch eine Flügeleinfassung 22 gebildeten Durchgang eines Gangs, der mittels einer Wand 28 gebildet ist. Der Doppelpfeil repräsentiert die Schwenkrichtungen R des Drehflügels 21.

Wird der Drehflügel 21 weiter geöffnet, wie in Figur 7b mittels des Pfeils R dargestellt, kann nur der Sensor 11 mittels seines Erfassungsbereichs 6 den Erfassungsbereich rechts vom Flügel 21 überwachen. Gelangt ein Objekt in diesen Teil des Erfassungsbereichs 6, wird allein der Sensor 11 in den Aktivmodus versetzt, infolgedessen der dunkler schraffierte Erfassungsbereich 7 aktiviert wird. Der Erfassungsbereich 7 ist der Erfassungsbereich, in dem der Flügel 21 mit der Wand 28 ein Objekt einklemmen könnte.

Wird nun ein Objekt in diesem Erfassungsbereich erfasst, oder wird der Flügel 21 im Rahmen des normalen Betriebs wieder geschlossen, wie in Figur 7c mittels des mit SR bezeichneten Pfeils dargestellt, kann nur der Sensor 11' mittels seines Erfassungsbereichs 6' den Erfassungsbereich nunmehr links vom Flügel 21 überwachen. Der Sensor 11 befindet sich wieder im Energiesparmodus oder gar in einen Schlafmodus, da hier keine Gefahr (mehr) zu erwarten ist. Gelangt ein Objekt in diesen Teil des Erfassungsbereichs 6', wird allein der Sensor 11' in den Aktivmodus versetzt, infolgedessen der dunkler schraffierte Erfassungsbereich 7' aktiviert wird. Der Erfassungsbereich 7' ist der Erfassungsbereich, in dem der Flügel 21 mit der linken Flügeleinfassung 22, also im Erfassungsbereich der Hauptschließkante 24, ein Objekt einklemmen könnte. D. h. auch hier findet je nach Betriebszustand der Flügelanlage 20 eine Adaptierung der Erfassungsbereiche 6, 6', 6" hier dreier Sensoren 11, 11', 11" statt.

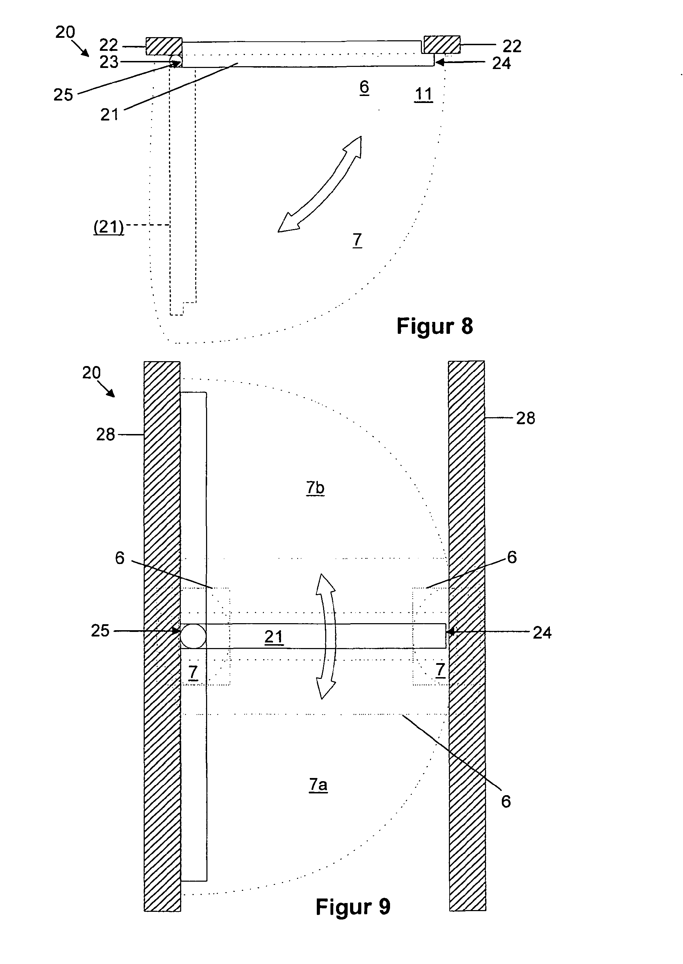

Figur 8 zeigt eine andere Drehflügelanlage 20. Im Gegensatz zur vorherigen Ausführungsform ist hier exemplarisch ein Sensor 11 vorgesehen, dessen Erfassungsbereich 7 abgebildet ist. Wie zu erkennen, umschließt dieser den Flügel 21, im Querschnitt gesehen, inklusive seiner Hauptschließkante 24 und Nebenschließkante 25. Die Drehflügelanlage 20 ist exemplarisch rein als Ausgangstür und nicht auch als Eingangstür ausgebildet, wobei die Ausgangsrichtung nach unten in Figur 8 weist. D. h. in die andere Durchgangsrichtung ist kein Durchgangsverkehr vorgesehen. Ein Antrieb 40 ist vorgesehen, den Drehflügel 21 zu öffnen und zu schließen.

Die Erfassungsbereiche 6, 7 des nicht abgebildeten Sensors 11 sind nach unten in Figur 8 vorzugsweise so ausgebildet, dass sie hinsichtlich der Flügelanlage 20 von oben, also in Richtung Blattebene gesehen, den gesamten Schwenk- bzw. Drehbereich des Drehflügels 21 umfassen. Nach oben in Figur 8 ist nur ein relativ schmaler Erfassungsbereich erforderlich, da hier nur dann eine Gefahr besteht, wenn der Drehflügel 21 geschlossen wird. Beim Öffnen hingegen muss zumindest ein minimaler Teil des Schwenkbereichs frei sein, damit der Drehflügel 21 so weit geöffnet werden kann, dass Objekte die Flügelanlage 20 passieren können.

Werden im oberen Teil des Erfassungsbereichs 7 ein Objekt detektiert und daraufhin der Sensor 11 in den Aktivmodus geschaltet, ist für den Sensor 11 ein Erfassungsbereich 7 vorgesehen, der vorzugsweise den gesamten Schwenkbereich des Flügels 21 abdeckt. Vorzugsweise werden aufgrund der vom Sensor 11 erfassten Abbilder eine minimal notwendige Durchgangsbreite und damit ein minimal notwendiger Drehflügel-Öffnungswinkel ermittelt. Daraufhin wird der untere Erfassungsbereich 7 nur noch im Rahmen des sich aus den vorigen ermittelten Werten ergebenden minimalen Schwenkbereichs auf das Vorhandensein etwaiger Hindernisse überprüft. Dies erhöht die Sicherheit der Flügelanlage 20 und verringert die Wahrscheinlichkeit eines unnötigen Stillstehens des Antriebs 40 und damit der Flügelanlage 20.

Figur 9 zeigt eine Pendelflügelanlage 20, also eine Anlage 20, deren Flügel 21 beim Öffnen aus einer Geschlossenstellung heraus in zwei Richtungen schwenken bzw. drehen kann, wie mittels des Doppelpfeils angedeutet. Hier gibt es vorzugsweise drei Sensoren 11, wiederum angedeutet durch deren Erfassungsbereiche 7.

Der linke und der rechte Sensor 11, 11 dienen der Absicherung der Nebenschließkante 25 bzw. der Hauptschließkante 24 und sind vorzugsweise gemäß den vorstehenden Erläuterungen ausgebildet. Der mittlere Sensor 11 ist vorteilhafterweise so gestaltet, dass er für beide Schwenkbereiche des Flügels 21 genutzt werden kann. Dessen Erfassungsbereich 7 ist so ausgebildet, dass er die den Flügel 21 einschließenden Wände 28 bzw. einen den Flügel 21 umschließenden Rahmen zumindest in den dem Flügel 21 zugewandten Randbereichen mit erfasst und von diesen abgehend beispielhaft gekrümmt verläuft. Gelangt ein Objekt hier in den unteren Erfassungsbereich 7, wird der Sensor 11 zunächst so umgeschaltet, dass der Teil 7a des Erfassungsbereichs 7 des Sensors 11 aktiviert wird, der sich an der dem Objekt zugewandten Seite des Flügels 21 befindet. Bewegt sich das erfasste Objekt nun in den Teilerfassungsbereich 7a derart, dass eine Begehung der Anlage 20 zu erwarten ist, wird an der dem detektierten Objekt abgewandten Seite des Flügels 21 ein zweiter Teilerfassungsbereich 7b aktiviert, der dieselbe Rolle wie bei der zuvor beschriebenen Drehflügelanlage innehat. Wird im Teilerfassungsbereich 7b kein sicherheitsrelevantes Objekt detektiert, kann der Pendelflügel 21 in den Teilerfassungsbereich 7b hinein beispielsweise mithilfe eines Antriebs 40 geschwenkt werden.

Alternativ werden die Teilerfassungsbereiche 7a, 7b gleichzeitig aktiviert.

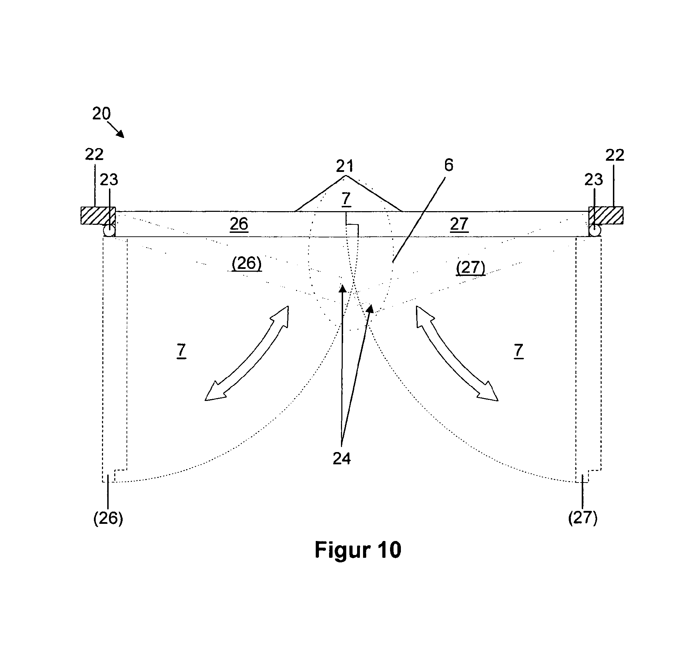

Figur 10 zeigt eine doppelflügelige Drehflügelanlage 20 mit einem als Gangflügel 26 ausgebildeten ersten Flügel 21 und einem als Standflügel 27 ausgebildeten zweiten Flügel 21. D. h. der hier links abgebildete Gangflügel 26 überfälzt den Standflügel 27 in Geschlossenstellung.

Bei solch einer Anlage kann der erfindungsgemäße Sensor 11 zur Realisierung einer Schließfolgeregelung genutzt werden, die bekanntermaßen sicherstellt, dass der Gangflügel 26 nur vollständig geschlossen werden kann, wenn der Standflügel 27 bereits geschlossen ist, und andernfalls sicherstellt dass der Gangflügel 26 nur bis zu einem bestimmten Winkel geschlossen werden kann, bei dem der Standflügel 27 sicher am Gangflügel 26 vorbei bewegt und geschlossen werden kann.

Hinsichtlich des Sensors 11 sind wiederum nur dessen Erfassungsbereiche 6, 7 dargestellt. Ist die Flügelanlage 20 geschlossen, wie abgebildet, befindet sich der Sensor 11 vorzugsweise in einem Schlafmodus, in dem er vorteilhafterweise vollständig abgeschaltet ist, also keinen oder nur einen sehr geringen Energiebedarf hat. Die Erfassungsbereiche 6, 7 des Sensors 11 befinden sich beispielhaft in einem Erfassungsbereich der Flügelanlage 20, in dem sich die Hauptschließkanten 24 der Flügel 26, 27 sehr nahe kommen und miteinander kollidieren könnten. Soll der Gangflügel 26, oder auch der Standflügel 27, geöffnet werden, wird der Sensor 11 in den Energiesparmodus versetzt.

Solange sich die Flügel 26, 27 im Erfassungsbereich 7 befinden und kein anderes Objekt in den Erfassungsbereich 7 gelangt, passiert nichts; der bzw. die Flügel 26, 27 wird bzw. werden geöffnet. Verlässt der Flügel 26 den Erfassungsbereich 7, wird spätestens zu diesem Zeitpunkt einer zugeordneten Steuerung signalisiert, dass der Standflügel 27 freigegeben werden kann.

Sollte doch ein Objekt in den Erfassungsbereich 7 gelangen, wird der Sensor 11 in den Aktivmodus versetzt, sodass dessen Erfassungsbereich 7 aktiviert wird, der hier der vom Erfassungsbereich 7 umschlossenen Fläche entspricht. Im Aktivmodus wird nun ermittelt, ob zu erwarten ist, dass das Objekt in den gefährlichen Erfassungsbereich zwischen den Hauptschließkanten 24 geraten könnte oder nicht. Ist dies der Fall, können die Flügel 26, 27, sofern beide geöffnet sind, festgestellt oder aber in Offenstellung bewegt werden, sodass die mögliche Gefahr beseitigt ist. Gelangt das Objekt aus dem Erfassungsbereich 7 heraus, wird der Sensor 11 in den Energiesparmodus geschaltet. Zudem kann bzw. können der/die Flügel 26, 27 wieder freigegeben werden.

Sind beide Flügel 26, 27 geöffnet, und werden sie geschlossen, kann der Gangflügel 26 vorzugsweise zunächst geschlossen werden. Gelangt er in den Erfassungsbereich 7 des Sensors 11, wird dieser wieder in den Aktivmodus versetzt. In diesem Modus erkennt nun die hier nicht dargestellte Bildverarbeitungseinrichtung 13, dass sich lediglich der Gangflügel 26 im Erfassungsbereich 7 befindet. Daraufhin prüft die Bildverarbeitungseinrichtung 13, ob der Standflügel 27 so weit geschlossen ist, dass der Gangflügel sicher schließen kann. Kann die Bildverarbeitungseinrichtung 13 den Standflügel 27 überhaupt nicht erfassen, ist er also zu weit geöffnet, wird der Gangflügel 26 in Schließrichtung blockiert. Wird der Standflügel 27 hingegen erfasst, ermittelt die Bildverarbeitungseinrichtung 13 entweder, ob der Standflügel 27 geschlossen ist oder nicht. Oder aber sie ermittelt zunächst den Öffnungswinkel des Standflügels 27 beispielsweise mithilfe eines mit dem Standflügel 27 wirkverbundenen Inkrementalgebers und prüft ihn dann gegen einen vorbestimmten, maximalen Öffnungswinkel, bei dem der Gangflügel 26 geschlossen werden kann und dieser den Standflügel 27 in Sch!ießstellung drängt.

Alternativ oder zusätzlich als Redundanz erfolgt die Verarbeitung der Positionen der Flügel 26, 27 mithilfe eines jeweiligen Positionssensors beispielsweise in Form jeweils eines Inkrementalgebers.

Alternativ oder zusätzlich kann der Sensor 11 auch zur Schleusensteuerung genutzt werden, sei es bei einer mehrflügeligen Drehflügelanlage mit gleichsinnig drehbaren Flügeln oder einer Flügelanlage mit in Durchgangsrichtung hintereinander angeordneten Durchgangsflügeln.

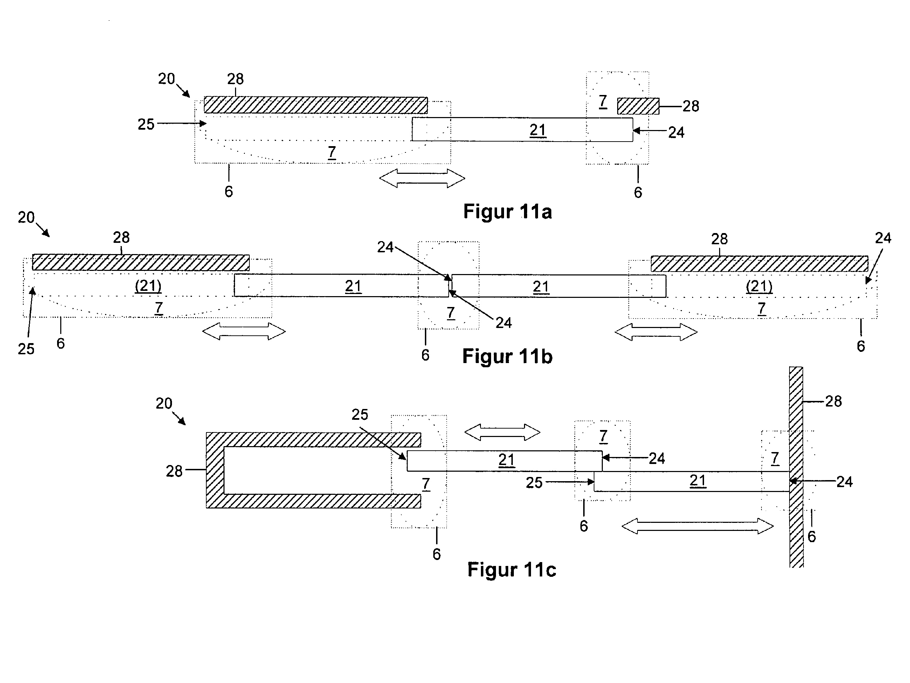

Figur 11 a zeigt eine als einflügelige Schiebetüranlage ausgebildete Flügelanlage 20. Deren Schiebeflügel 21 befindet sich in Geschlossenstellung und wird nach links in Offenstellung gefahren. Der Schiebeflügel 21 wird, in Begehungsrichtung gesehen, rechts und links von zwei Wänden 28 eingefasst. Es gibt exemplarisch zwei Sensoren 11, repräsentiert durch die zwei angegebenen Erfassungsbereiche 7. Die Erfassungsbereiche 6, 7 des rechten Sensors 11 umgeben die Hauptschließkante 24 und dienen somit der Hauptschließkantenabsicherung. Die Erfassungsbereiche des linken Sensors 11 umgeben beispielhaft den gesamten Bewegungsweg des Flügels 21 und sind daher zur Hinderniserkennung im Erfassungsbereich der Nebenschließkante 25 geeignet. Wird der Flügel 21 geöffnet, ist vorzugsweise vorgesehen, dass der Erfassungsbereich 7 sukzessive nach links verkleinert wird. D. h. die zugehörigen Sensorelemente 14 des Sensors 11 werden nacheinander von rechts nach links abgeschaltet, bis in der Vollständig-Offen-Stellung des Flügels 21 nur noch der Erfassungsbereich um die Nebenschließkante 25 herum erfasst wird. Wird der Flügel 21 wieder geöffnet, werden die Sensorelemente 14 je nach Öffnungsstellung des Flügels 21 wieder zugeschaltet. Dieses Zu-und Abschalten betrifft selbstverständlich auch den Erfassungsbereich 7 für den Aktivmodus dieses Sensors 11. Diese sich an die Öffnungsposition anpassenden, linken Erfassungsbereiche 6, 7 zur Nebenschließkantenabsicherung bieten der vorgenannten Datenverarbeitungseinrichtung die Möglichkeit, sich etwaig im Bewegungsbereich des Flügels 21 befindliche Objekte und deren Abstand zum Flügel 21 bereits im Voraus erkennen bzw. ermitteln zu können. In Verbindung mit der durch den rechten Sensor 11 ermittelbaren Größe der Objekte, die die Flügelanlage 20 passieren wollen, kann eine maximale Öffnungsweite der Flügelanlage 20 ermittelt und mit der minimal notwendigen Öffnungsweite für die passierenden Objekte verglichen werden. Ist die minimale Öffnungsweite kleiner oder gleich der ermittelten maximal möglichen Öffnungsweite, kann die Steuerung angewiesen werden, die Flügelanlage 20 trotz Hindernisses im Bewegungsweg des Flügels 21 auf eine Öffnungsweite zu öffnen, die vorteilhafterweise der ermittelten, maximal möglichen Öffnungsweite entspricht.

Figur 11b zeigt die Anwendung von Sensoren 11 bei einer doppelflügelig ausgebildeten Schiebeflügelanlage 20. Die Nebenschließkanten 25 der Flügel 21 werden vorzugsweise wie bei der einflügeligen Schiebetüranlage von Figur 11 a abgesichert. Die Hauptschließkanten 24 der Flügel 21 wiederum werden hier mittels eines Sensors 11 abgesichert, wieder repräsentiert durch dessen Erfassungsbereiche 6, 7. Vorzugsweise "wandern" auch diese Erfassungsbereiche 6, 7 mit den Bewegungen der Flügel 21, 21 mit. Dies hat den Vorteil, jederzeit ermitteln zu können, wie weit die Flügel 21, 21 geschlossen werden können, ohne dass eine Gefahr für Personen besteht.

Figur 11c zeigt eine als Teleskopschiebetür ausgebildete Flügelanlage 20. Die linke Wand 28 ist als Bahnhof ausgebildet, in den die Teleskopflügel 21, 21 in Geschlossenstellung eingefahren werden.

Der linke Sensor 11 erfasst den rechen Randbereich des Bahnhofs und dient der Nebenschließkantenabsicherung beider Flügel 21. Der mittlere Sensor 11 erfasst den Erfassungsbereich vorzugsweise sowohl zwischen der Nebenschließkante 25 des unteren, äußeren Flügels 21 der Flügelanlage 20 und dem oberen, inneren Flügel 21 der Flügelanlage 20 als auch zwischen der Hauptschließkante 24 des äußeren Flügels 21 und dem inneren Flügel 21 der Flügelanlage 20.

Wird die Flügelanlage geöffnet, bewegen sich vorzugsweise beide Flügel 21 nach links, der untere mit etwa doppelter Geschwindigkeit, wie mittels der unterschiedlich langen Doppelpfeile angedeutet. Dabei bleiben die Erfassungsbereiche 6, 7 des mittleren Sensors 11 im Zentrum im Erfassungsbereich der Nebenschließkante 24 des äußeren Flügels 21, um zu verhindern, dass dieser Flügel 21 ein Objekt an der linken Wand 28 oder gar zwischen den Flügeln 21 einklemmt. Werden die Flügel 21 hingegen wieder geschlossen, werden die Erfassungsbereiche 6, 7 des mittleren Sensors 11 so umgeschaltet, dass sich deren Zentren nun im Erfassungsbereich der Hauptschließkante 24 des inneren Flügels 21 befinden und mit deren Bewegung "mitwandern", um wiederum zu verhindern, dass ein Objekt zwischen den Flügeln 21 eingeklemmt wird.

Der rechte Sensor 11 dient der Absicherung der Hauptschließkante 24 des äußeren Flügels 21. Beim Öffnen der Flügel 21 kann dieser Sensor 11 völlig abgeschaltet sein, sich also in einem Schlafmodus befinden, da zu diesem Zeitpunkt keine Gefahr von der Hauptschließkante 24 des äußeren Flügels 21 ausgeht. Wird der äußere Flügel 21 hingegen geschlossen, besteht die Gefahr eines Einklemmens zwischen besagter Hauptschließkante 24 und der rechten Wand 28. Vorzugsweise werden die Erfassungsbereiche 6, 7 des rechten Sensors 11 so eingestellt, dass sie die Hauptschließkante 24 des äußeren Flügels umgeben und sich bis zum zugewandten Rand der rechten Wand 28 erstrecken. Dies ermöglicht die Erkennung etwaiger Hindernisse im Bewegungsweg des äußeren Flügels 21. Sollte sich ein Objekt in diesem Bewegungsweg befinden, können durch die Bildverarbeitungseinrichtung 13 unter Nutzung des Erfassungsbereichs 7 des rechten Sensors 11 im Aktivmodus eine minimale Öffnungsweite der Flügelanlage ermittelt und durch die Steuerung die Flügelanlage 20 bis dahin geschlossen werden. Dies hat beispielsweise bei Außentüren klimatechnische Vorteile. Wird die Flügelanlage 20 trotz Objekts maximal geschlossen, kann beispielsweise weniger Wärme entweichen. Und trotzdem kann das betreffende Objekt die Flügelanlage 20 passieren. Insbesondere gehbehinderte Personen können ohne Eile die Flügelanlage passieren, ohne Angst haben zu müssen, dass die Flügelanlage 20 zu schnell schließt.

Der noch ausstehende, linke Sensor 11 dient der Absicherung des Bahnhofs im rechten Randbereich, in den die Flügel 21 beim Schließen einfahren. Beim Schließen der Flügel 21 kann dieser Sensor 11 völlig abgeschaltet sein, sich also im vorgenannten Schlafmodus befinden, da zu diesem Zeitpunkt keine Gefahr von den Flügeln 21 in diesem Einfahrbereich ausgeht. Werden die Flügel 21 hingegen geöffnet, besteht in diesem Zustand die Gefahr eines Abscherens von Objekten im Erfassungsbereich zwischen dem unteren, horizontalen Wandabschnitt des Bahnhofs und der Nebenschließkante 24 des inneren Flügels 21. Wird solch eine Gefahr ermittelt, wird beispielsweise ein Alarm ausgelöst. Andernfalls wird der linke Sensor 11 wie bei den vorigen Ausführungen zunächst im Energiesparmodus betrieben, und dessen Erfassungsbereiche 6, 7 sind hinsichtlich der Flügelanlage 20 ortsfest angeordnet. Gelangt nun auch der äußere Flügel 21 in den Erfassungsbereich 7 dieses Sensors 11, ist somit auch dessen Nebenschließkante 24 abgesichert. In dem Fall kann der mittlere Sensor 11 in den Schlafmodus überführt oder als redundante Sicherungsvorrichtung weiterhin aktiv bleiben, also im Energiesparmodus betrieben werden. Alternativ wird der linke Sensor 11 in den Schlafmodus überführt.

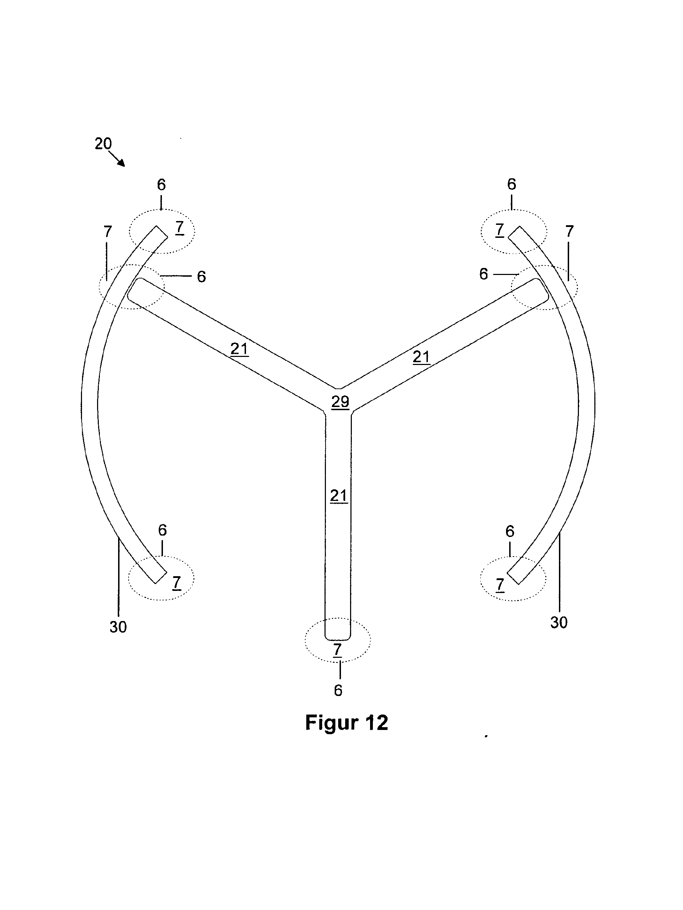

Figur 12 zeigt eine als Karusselltüranlage ausgebildete Flügelanlage 20 mit einem Drehkreuz 29 mit exemplarisch drei Flügeln 21. Zwei Trommelwände 30 definieren in bekannter Weise den Durchgang der Karusselltüranlage 20. Bei solch einer Flügelanlage 20 gibt es an den hier oberen und unteren Enden der Trommelwände 30 sowie an den stirnseitigen Enden der Flügel 21 Gefahrenbereiche hinsichtlich möglichen Einklemmens oder Abscherens. Daher sind diese Erfassungsbereiche vorzugsweise jeweils mit einem Sensor 11 versehen, wiederum angedeutet mithilfe derer Erfassungsbereichen 6, 7. Die Erfassungsbereiche 6, 7 stimmen beispielhaft in ihrer Außenkontur überein, nur dass der Erfassungsbereich 7 mittels der den Erfassungsbereich 7 umgebenden Fläche gebildet ist.

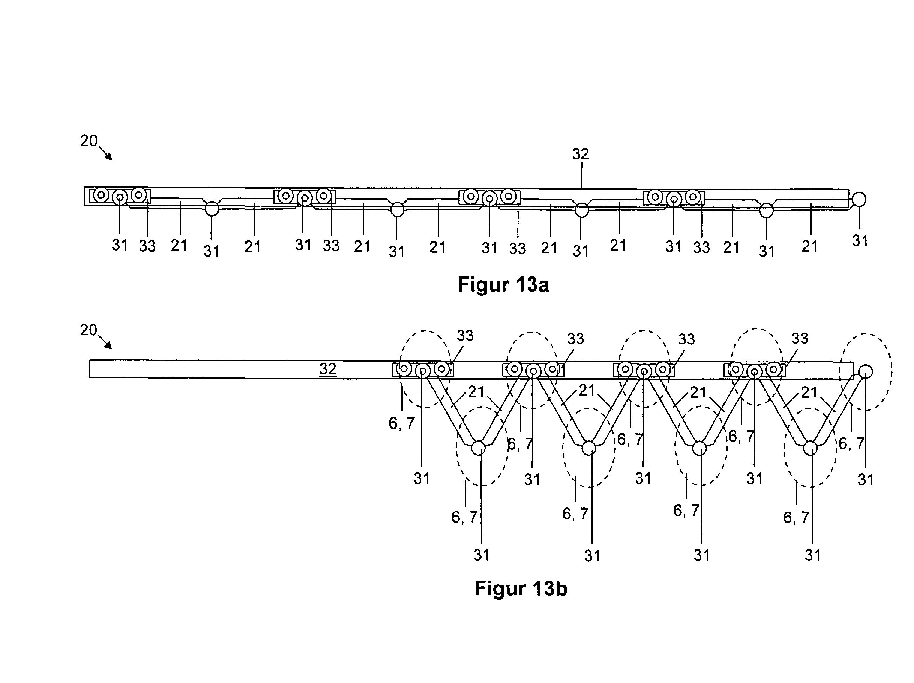

Figur 13 zeigt eine als Falttüranlage ausgebildete Flügelanlage 20, einmal in Geschlossenstellung (Figur 13a) und einmal in einer Teil-Offenstellung (Figur 13b). Die einzelnen Faltflügel 21 sind in bekannter Weise über Drehgelenke 31 miteinander schwenkbar verbunden. Von links in Figur 13 gesehen jedes ungerade Drehgelenk 31 ist hier über einen jeweils zugehörigen Laufwagen 33 in einer Führungsschiene 32 entlang eines vorbestimmten Wegs verfahrbar angeordnet. Das rechte äußerste Drehgelenk 31 ist in Bezug auf die Flügelanlage 20 ortsfest angeordnet. Daher bildet dieses Drehgelenk 31 eine Art Nebenschließkante 24 und das linke äußerste Drehgelenk 31 eine Art Hauptschließkante 24.

Beim Öffnen werden paarweise zwei unmittelbar benachbarte Flügel 21 um eine Rotationsachse aufeinander zu geschwenkt, die das dazwischen liegende Drehgelenk 31 definiert. Dadurch öffnet sich jeweils in Richtung vom jeweiligen Drehgelenk 31 weg ein im Querschnitt dreieckförmiger Raum, in den Objekte gelangen könnten und der sich nach und nach verkleinert. Dadurch könnten zwei unmittelbar benachbarte Flügel 21 Gefahr laufen, ein Objekt einzuklemmen. Daher sind vorzugsweise im Erfassungsbereich aller Drehgelenke 31 nicht näher dargestellte Sensoren 11 angeordnet. In Figur 13b sind deren Erfassungsbereiche 6, 7 angedeutet. Dies bietet zudem die Möglichkeit zu ermitteln, wie weit die Flügelanlage 20 ohne Einklemmgefahr mit dem/n erfassten Objekt/en geöffnet werden kann. Im Erfassungsbereich des rechten Drehgelenks 31 könnte eine Einklemmgefahr ähnlich wie im Erfassungsbereich der Nebenschließkante eines Drehflügels bestehen. Daher kann auch hier ein Sensor 11 angeordnet sein, um eine Art Nebenschließkantensicherung zu realisieren.

Beim Schließen hinngegen werden paarweise zwei unmittelbar benachbarte Flügel 21 um eine Rotationsachse voneinander weg geschwenkt, die das dazwischen liegende Drehgelenk 31 definiert. Dadurch besteht hier an sich keine Einklemmgefahr, abgesehen vielleicht vom linken Drehgelenk 31, das eine Bewegung analog einer Hauptschließkante eines Schiebeflügels vollzieht. Daher kann auch hier ein Sensor 11 angeordnet sein, um eine Art Hauptschließkantensicherung zu realisieren.

Sollte es unerwünscht sein, dass Objekte in diesen Bereichen kollidieren, können vorzugsweise an jedem Drehgelenk 31 angeordnete Sensoren 11 ausgebildet sein, diese kollisionsgefährdeten Erfassungsbereiche zu erfassen und ferner die Erfassungsbereiche 6, 7 an den jeweiligen Öffnungszustand der Flügelanlage 20 anzupassen. Dies bietet zudem die Möglichkeit zu ermitteln, wie weit die Flügelanlage 20 ohne Kollision mit dem/n erfassten Objekt/en geschlossen werden kann.

Andernfalls, also wenn Objekte in diesen Bereichen irrelevant sind, sind die Sensoren 11, abgesehen vom Sensor 11 an der Hauptschließkante 24, in den Schlafmodus geschaltet.

Der rechte Sensor 11 hingegen wird im Energiesparmodus betrieben und dient als klassische Hauptschließkantenabsicherung.

Die vorbeschriebenen Sensoren 11 sind vorzugsweise als so genannte TOF-Kameras ausgebildet, deren Sensorelemente 14 auf Lichtlaufzeitmessung basieren. D. h. das Abbild des jeweiligen Sensor-Erfassungsbereichs 6, 7 wird dadurch gebildet, dass von den Beleuchtungselementen 15 zeitlich gesteuert gerichtete Lichtimpulse in den Erfassungsbereich ausgesendet werden und in Abhängigkeit der Entfernung des Objekts, auf das das Licht trifft, dieses Licht zu photoelektrischen Sensorelementen 14 des Sensors 11 reflektiert wird. Die Sensorelemente 14 detektieren das reflektierte Licht, und der Sensor 11 ermittelt, wie viel Zeit verstrichen ist. Dies geschieht vorzugsweise mithilfe eines speziellen Mikrocontrollers, der also die Zeitdauer zwischen Aussendung und Empfang des (von einem Objekt reflektierten) Lichtimpulses vergangen ist, misst bzw. ermittelt und unter Annahme einer konstanten Lichtgeschwindigkeit hierdurch den Abstand des Sensors 11 zum Objekt bestimmt. Das so gebildete Abbild ist also weniger eine Darstellung der Realität als ein Abbild der Laufzeit des Lichts von den Beleuchtungselementen 15 zu den betreffenden Sensorelementen 14. Der Vorteil derartiger Sensoren ist, dass mithilfe dieses Lichtlaufzeit-Messverfahrens, auch genannt Time Of Flight (abgekürzt: TOF) der Abstand vom Sensor 11 zum jeweiligen Objekt bzw. zur dem Sensor 11 zugewandten Oberfläche dieses Objekts mit hoher Genauigkeit und Zuverlässigkeit sowie weitgehend unabhängig von der Beschaffenheit dieser Oberfläche gemessen werden. Je nach Distanz erfährt das auf den einzelnen Bildpunkt des Sensors 11 bzw. Sensorelements 14 auftreffende Licht eine Verzögerung. Da sich das Licht mit Lichtgeschwindigkeit (c ≈ 300.000km/s) ausbreitet, sind diese Zeiten sehr klein: Eine Laufzeit $t_D$ des Lichts von der Kamera zu einem beispielsweise 2,5 m entfernten Gegenstand und zurück beträgt:

$$t_D = 2\frac{D}{c} \approx 2 \cdot \frac{2,5m}{300.000.000\,m/s} = 0,0000000\overline{16}s \approx 16,7ns\,.$$

Die zeitliche Dauer bzw. Länge $t_D$ der Lichtimpulse bestimmt den maximalen Distanzbereich, den die Kamera abdecken kann. Mit einer Pulslänge von beispielsweise 50 ns kann eine Distanz $D_{max}$ von bis zu:

$$D_{max} = \frac{c \cdot t_D}{2} \approx \frac{300.000.000\,m/s \cdot 0,00000005s}{2} = 7,5m$$

sensorisch abgedeckt werden.

Die Beleuchtungseinrichtung 15 ist zu diesem Zweck mit sehr kurz einschaltbaren Leuchtmitteln wie speziellen LEDs und/oder mit aufwendiger anzusteuernden Lasern versehen bzw. gebildet, um diese kurzen Impulse zu erzeugen.

Die Beleuchtungselemente 15 senden Licht vorzugsweise im sichtbaren und/oder unsichtbaren Wellenlängenbereich aus. Beispielsweise kann im Energiesparmodus vorgesehen sein, dass die in Figur 2b gezeigten aktivierten Beleuchtungselemente 15 Licht im unsichtbaren Wellenlängenbereich aussenden und im Aktivmodus alle aktivierten Beleuchtungselemente 15 Licht im sichtbaren Erfassungsbereich aussenden.

Wird der Sensor 11 als Türsensor verwendet, ist unsichtbares InfrarotLicht besonders geeignet, da es insbesondere von Menschen nicht als störend wahrgenommen wird. Als Beleuchtungseinrichtungen 14 eignen sich Laserlicht-Quellen, insbesondere Laser-Dioden oder auch Infrarot-Leuchtdioden mit streuender Charakteristik. Vorteilhaft ist in jedem Fall der Einsatz monochromatischen Lichts, also eines Lichts mit konstanter Wellenlänge bzw. einheitlicher Frequenz.

Als Sensorelemente 14 werden demnach lichtempfindliche, elektronische Bauelemente eingesetzt.

Vorzugsweise umfasst der Sensor 11 einen Zeilen- oder Matrixsensor mit mehreren Sensorelementen 14 beispielsweise in Form eines CCD-Sensors. Um die Entfernung vom Sensor 11 zu mehreren Punkten des Erfassungsbereichs 6, 7 bestimmen zu können, werden als Sensorelemente 14 lichtempfindliche, elektronische Bauelemente eingesetzt. Mit einer zusätzlichen Projektionsoptik (Linsen, Spiegeloptik) im optischen Weg zwischen den Sensorelementen 14 bzw. den Beleuchtungselementen und dem Erfassungsbereich kann so auf dem Zeilen- oder Matrixsensor ein Abbild eines etwaig im Erfassungsbereich vorhandenen Objekts projiziert werden.

Alternativ werden Unterschiede zwischen den Licht-Laufzeiten für verschiedene, vorzugsweise jeweils unmittelbar benachbarte Sensorelemente 14 des Sensors 11 ermittelt. Hierdurch entsteht ein reliefartiges Abbild der projizierten Oberfläche.

Wiederum alternativ werden in einem bestimmten zeitlichen Abstand zum gesendeten Lichtimpuls nacheinander in sehr schneller Abfolge zwei Abbilder aufgenommen. Die Aufnahmen sind genau so terminiert, dass ein erster Teil des Lichtimpulses von der zeitlich ersten Aufnahme und ein zweiter Teil desselben Lichtimpulses von der zeitlich zweiten Aufnahme detektiert werden. Aus dem Helligkeitsverhältnis der beiden Aufnahmen bezüglich des empfangenen Reflektionslichtes wird die Entfernung des Objektes vom Sensor 11 ermittelt. Der Vorteil ist, dass keine direkte Zeitmessung im Sinne einer Stoppuhr notwendig ist. Der Lichtimpuis ist dabei zeitlich deutlich kürzer als die zumessende Lichtlaufzeit.

Vorzugsweise ist ferner eine Hintergrundausblendung vorgesehen, die dem Zweck dient, nicht sicherheitsrelevante Objekte, wie beispielsweise Elemente der Flügelanlage oder Gebäudeteile wie einen Boden, Spielbälle und dergleichen, in den Abbildern auszublenden. Im einfachsten Fall sind in einem Speicher ein oder mehrere 3D-Referenzbild/er der jeweils auszublendenden Objekte oder des gesamten Erfassungsbereichs ohne sicherheitsrelevante Objekte abgelegt. Die Referenzbilder werden dem jeweils aktuellen Abbild zugrunde gelegt bzw. von diesem an den entsprechenden Bildpunktestellen als Wert abgezogen. Was übrig bleibt, stellt mit einiger Wahrscheinlichkeit ein Objekt im Sinne der Anmeldung dar. Dabei können bestimmte Toleranzen in den Werten vorgesehen werden. Mehrere Referenzbilder verbessern dabei die Erkennungsgenauigkeit.

Es kann aauch vorgesehen sein, das bzw. die Referenzbild/er nicht nur einmalig bei einer Einlernphase aufzunehmen sondern kontinuierlich nachzuführen bzw. nachzulernen. Hierbei stellt ein Algorithmus sicher, dass bei dem kontinuierlichen Nachlernprozess Objekte, die sich nur temporär im Erfassungsbereich 6, 7 aufhalten, nicht berücksichtigt werden. Der Vorteil sind das Einbeziehen kleiner oder langsam stattfindender Veränderungen an der Flügelanlage 20, womit unnötige Störungen zumindest verringert und die Robustheit der Flügelanlage 20 insgesamt verbessert werden.

Insbesondere bei mitbewegten Sensoren 11 sind gemäß einer ersten Variante mehrere Abbilder ähnlich einem Film abgespeichert. In Abhängigkeit von der jeweiligen Öffnungsstellung der Flügelanlage 20 wird/werden das/die dieser Öffnungsstellung entsprechende/n Referenzbild/er herangezogen. Dies ist sowohl bei einem an einem Türflügel angebrachten Sensor 11 sinnvoll, der bei der Türbewegung ein sich ständig änderndes Abbild beispielsweise des vorgenannten Bodens erfasst, als auch bei einem in Bezug auf die Flügelanlage 20 ortsfest angebrachten Sensor 11, durch dessen Erfassungsbereich sich ein Flügel 21 bewegt.

Anstelle filmartiger Referenzbilder kann es für den gesamten Erfassungsbereich und/oder für einzelne, auszublendende Objekte auch nur jeweils ein einziges Referenzbild geben. In dem Fall ist vorzugsweise die Bildverarbeitungseinrichtung 13 eingerichtet, neben der Auswahl der heranzuziehenden Referenzbilder diese gemäß der jeweiligen Öffnungsstellung des betreffenden Flügels zu drehen, zu verschieben, zu verzerren oder auch zu skalieren. Ein Drehen des Referenzbildes kann beispielsweise bei Drehflügelanlagen notwendig sein, bei denen sich entweder ein Drehflügel an dem Sensor vorbeibewegt oder dieser mit dem Flügel entlang einer teilelliptischen oder teilkreisförmigen Linie über beispielsweise einen Boden hinweg bewegt. Ein Verschieben des Referenzbildes kann beispielsweise bei Schiebeflügelanlagen notwendig sein, bei denen sich entweder ein Schiebeflügel an dem Sensor 11 entlang einer geraden Linie vorbeibewegt oder dieser mit dem Flügel 21 entlang der geraden Linie über beispielsweise einen Boden hinweg bewegt. Ein Verzerren und /der Skalieren kann bzw. können erforderlich sein, wenn sich bei einer Flügelbewegung beispielsweise ein (anderer) Flügel 21 oder ein Türsturz dem Sensor 11 nähert oder von ihm entfernt.

Um den für die Referenzbilder erforderlichen Speicherbedarf zu verringern bzw. zu optimieren, werden sind Bild-Datenreduktionsverfahren beispielsweise gemäß dem MPEG4-Standard anwendbar, bei denen in der Regel Bildbereiche mit ähnlichen Informationen zu größeren Regionen zusammengefasst und nur einmal abgespeichert werden, die so mit weniger Daten digital beschrieben werden können. Filmsequenzen wiederum zeichnen mehr oder weniger nur ein feststehendes Bild auf. Die Aufnahmen überlappen zu einem Grossteil. Solche Bilder einer Filmsequenz können zu einem einzigen Bild zusammengesetzt werden, indem die sich überlappenden Bildbereichen analysiert werden. Gleichzeitig können hierdurch Weiterbewegung, Position und Geschwindigkeit des Flügels 21 bzw. des Sensors 11 bestimmt werden. Ein solches einheitliche Bild benötigt deutlich weniger Speicherraum als eine reine Filmsequenz, in der in den Bildüberlappungen viele redundante Informationen vorliegen. Weiterhin können durch die Überlagerung dieser Bildbereiche durch Interpolation zwischen den verschiedenen Abbildern eine verbesserte Bildqualität und ggf. auch eine höhere Auflösung als bei einem einzigen Abbild erzielt werden.

Bei späteren Flügelbewegungen können die einzelnen Abbilder mit einem so zusammengesetzten Referenzbild verglichen werden, um Abweichungen, die als sicherheitsrelevante Objekte bzw. Hindernisse gedeutet werden können, zu analysieren und gleichzeitig die Position des jeweiligen Flügels, also auch ohne klassische Wegsensoren wie Inkrementalgeber, Hall-Sensor und dergleichen, zu bestimmen.

Um nicht richtig funktionierende bzw. ausgefallene, also fehlerhafte Sensorelemente 14 im Sensor 11 identifizieren zu können, ist vorzugsweise im Sensor 11 eine so genannte intelligente Bilddaten-Überwachung und - Rekonstruktion vorgesehen bzw. implementiert. Dabei wird durch logische Vergleiche mit den ermittelten Daten unmittelbar benachbarter Bildpunkte oder Bildpunktebereiche im Abbild geprüft, ob der zu überprüfende Bildpunkt eine abweichende Charakteristik aufweist. Diese kann beispielsweise mittels einer gegenüber den benachbarten Bildpunkten deutlich abweichenden Helligkeit oder gar Dunkelheit des betreffenden Bildpunktes erkannt werden. Es wird also eine Art Fehlmessung detektiert. Der Hintergrund ist, dass Objekte wie beispielsweise eine Person stets im Abbild durch mehrere Bildpunkte repräsentiert wird. Wenn sich ein solches Objekt durch Erfassungsbereiche 6, 7 des Sensors 11 bewegt, kann der resultierende Bewegungsverlauf logisch verfolgt werden. Ein vorzugsweise einzelner Bildpunkt, der eine hierzu nicht passende Information liefert, kann als fehlerhaft erkannt werden, da sich dessen Wert nicht ändert, obwohl er es müsste. Gleiches gilt beispielsweise auch bei der Beobachtung eines ebenen Bodens oder dergleichen.

Alternativ oder zusätzlich ist der betreffende Sensor 11 in der Lage, seine Blickrichtung beispielsweise vorzugsweise motorisch betrieben mittels minimalen Bewegens entlang einer Schiene oder Verschwenkens um eine Achse zu verändern und damit zwei leicht zueinander versetzte Abbilder des Erfassungsbereichs 6, 7 aufzunehmen. Vorzugsweise zwei dieser zueinander versetzten Abbilder werden miteinander verglichen. Ist ein Sensorelement 14 fehlerhaft, wird der entsprechend ermittelte Bildpunktewert in beiden Abbildern identisch oder sehr ähnlich sein, obwohl dieser Bildpunktewert aufgrund des Versatzes an einem anderen Bildpunkte auftreten müsste. Dadurch können Bildpunktfehler eindeutig erkannt und damit fehlerhafte Sensorelemente 14 identifiziert werden. Die als fehlerhaft erkannten Bildpunkte werden in der Bildverarbeitung ignoriert, indem sie beispielsweise geschwärzt werden. Ferner kann eine Warnmeldung beispielsweise an die Bildverarbeitungseinrichtung 13 abgesetzt werden, um beispielsweise eine entsprechende Warnanzeige an einer Überwachungszentrale oder dergleichen anzuzeigen. Dies ermöglicht dem Personal, einzuschätzen, ob der betreffende Sensor 11 auszutauschen ist oder nicht. Die Blickrichtungsänderung kann durch eine Mechanik, die den Sensor 11 etwas bewegt, eine spezielle Optik, einen beweglichen Spiegel, ein optisches Prisma oder dergleichen erzielt werden.

Der vorgenannte Prüfvorgang wird vorzugsweise in vorbestimmten Zeitabständen und/oder Stellungen der Flügelanlage 20 durchgeführt, und zwar vorteilhafterweise dann, wenn der betreffende Sensor 11 nicht benötigt wird und sich beispielsweise im vorgenannten Schlafmodus befindet.

Alternativ zum Ignorieren der als fehlerhaft identifizierten Bildpunkte ist eine Art Bildpunktrekonstruktion vorgesehen. Dies erfolgt aufgrund logischer Vergleiche benachbarter Bildpunkte bzw. Bildpunktgebiete mehrerer Abbilder miteinander sowie mithilfe deren Interpolation und Überlagerung. Dadurch kann die fehlende Information eines oder mehrerer Bildpunkte rekonstruiert werden.

Um den Sensor 11 als Aktivierungssensor beispielsweise zur Erzeugung eines Öffnungsimpulses für die Flügelanlage 20 zu realisieren, kann dieser als 3D-Kamera mit relativ wenig Bildpunkten (z. B. 9 x 9) ausgebildet sein. Um einen ausreichend großen Erfassungswinkel vor der Flügelanlage 20 zu realisieren, erfassen die einzelnen Bildpunke jeweils relativ große Raumbereiche, sind also nicht zu stark fokussiert. Für diesen Zweck weist der Sensor 11 Weitwinkel-Charakteristik auf, die beispielsweise mittels geeigneter optischer Linsen oder einer entsprechend gekrümmten Oberfläche der Sensorelemente 14 realisiert sein kann.

Die Kommunikationsverbindungen 2 - 5 können in jeglicher Form realisiert sein, sei es beispielsweise als BUS, drahtlos, über mehrere Leitungen oder dergleichen. Es können verschiedene Standard-BUS-Protokolle wie beispielsweise Ethernet, CAN oder dergleichen zum Einsatz kommen. Die Datenleitung kann auch als serielle Schnittstelle oder als Inter-Controller-BUS realisiert werden.

Es gibt zwei Gruppen zu übertragender Information, einmal vom Sensors 11 zu einem Antrieb 40 und/oder eine Flügelanlagen-Steuerzentrale und einmal in die umgekehrte Richtung.

Die erste Gruppe umfasst:

- Daten eines sich im Erfassungsbereich 6, 7 des Sensors 11 befindlichen Objekts,

- physikalische Daten zu Position, Geschwindigkeit und Richtung des/r betreffenden Objekts/e

- logische Information, ob das/die betreffende/n Objekt/e bestimmte Ereignisse ausgelöst hat bzw. haben (z. B. Objekt hat Flügelanlage 20 passiert, verlässt Sicherheitszone, wird als Benutzer der Flügelanlage erkannt),

- Information über eine Veränderung der auszublendenden Objekte im Erfassungsbereich 6, 7 (adaptives Verhalten des Sensors 11 bzw. der Bildverarbeitungseinrichtung 13),

- eine Kontroll-Rückantwort auf eine Kontrollabfrage der Steuerung 12 (z. B. Sensor ist in Ordnung und betriebsbereit),

- Flügelöffnungswinkel, -geschwindigkeit (insbesondere bei mitbewegtem Sensor 11),

- zusätzlich: Flügelposition (insbesondere bei feststehendem Sensor 11)

Die zweite Gruppe umfasst:

- Parameter eines oder mehrerer Flügel 21 und/oder Parameter eines Flügelantriebs (z. B. Geometriedaten, Abmessungen),

- aktuelle Flügelöffnungswinkel,

- Informationen zum Programmstatus eines Antriebs bzw. dessen Steuerung 12 (z. B. Flügel 20 in Dauerauf, Antrieb ist abgeschaltet),

- Kontrollabfragen, um Funktion/en des/r Sensors/en 11 abzufragen.

Die Abbilder, also deren Bilddaten, können teilweise oder ganz im Sensor 11, also verteilt, und bzw. oder in einer zugeordneten Bildverarbeitungseinrichtung 13 oder gar der Steuerung 12 erfolgen. Die Bildverarbeitungseinrichtung 13. kann in einer Steuerung 12 eines Flügelantriebs 40 oder Türmanagementsystems untergebracht oder darin integriert sein.

Um den Energiebedarf des Sensors 11 zu optimieren, kann, wenn der Sensor 11 feststellt, dass sich in dessen Erfassungsbereich 6, 7 kein (sicherheitsrelevantes) Objekt befindet, ein (innerer) Erfassungsbereich bzw. Teil eines durch die Sensorelemente 14 gebildeten Sensorfeldes abgeschaltet werden, und nur die restlichen Sensorelemente 14 bleiben aktiv und überwachen bzw. erfassen den zugehörigen Erfassungsbereich 7 (→ Energiesparmodus). Der Erfassungsbereich 7 ist so ausgewählt, dass ein in den Erfassungsbereich der Flügelanlage 20 gelangendes Objekt diesen Erfassungsbereich zumindest streifen muss und damit vom Sensor 11 in jedem Fall erfasst wird. Geschieht dies, werden die Sensorelemente 14 zugeschaltet bzw. aktiviert, die den zugehörigen Erfassungsbereich 7 sensorisch abdecken (→ Aktivmodus). Dies könnte zur Folge haben, dass Sensorelemente 14 abgeschaltet werden, die den Erfassungsbereich 7, aber nicht den Erfassungsbereich 7 sensorisch abdecken.

Alternativ oder zusätzlich werden bei der vorbeschriebenen Abschaltung auch die zu den jeweiligen Sensorelementen gehörenden Beleuchtungselemente 15 beispielsweise in Form von IR-Dioden abgeschaltet.

Zusätzlich oder alternativ kann der Sensor 11 im Energiesparmodus heruntergetaktet werden, wodurch die Anzahl der erfassten Abbilder pro Zeiteinheit reduziert und damit der Energiebedarf des Sensors 11 (weiter) gesenkt wird. Wenn ein Objekt in den Erfassungsbereich 7 eindringt, wird die Taktrate des Sensors 11 erhöht, um beispielsweise in einem Nahbereich der Flügelanlage 20 bzw. deren Flügel 21 schnelle und präziser als im Energiesparmodus reagieren zu können. Da die Beleuchtungselemente 15 kein Dauerlicht sondern Lichtimpulse abgeben, kann hierdurch die Licht-Sendeleistung deutlich reduziert werden. Die Licht-Sendeleistung ist quasi proportional zur Bildfrequenz. Bei einer Reduktion der Bildfrequenz beispielsweise von 20 Bilder/s auf 7 Bilder/s kann somit 2/3 der erforderlichen Licht-Sendeenergie eingespart werden.

Wiederum alternativ oder zusätzlich können im Energiesparmodus auch die Sendeleistung (Amplitude, Helligkeit) der Beleuchtungselemente 15 und damit die Stärke der ausgesendeten Lichtimpulse im Energiesparmodus des Sensors 11 beispielsweise in Phasen, in denen sich die Flügel 20 nicht bewegen, reduziert werden. Zu Aktivierungserkennung reicht es für den Sensor 11 aus, das betreffende Objekt grob zu erkennen.

Die Sendeleistung des Sensors 11 kann aber auch in anderen Fällen herabgesetzt werden. Vorzugsweise kann abhängig vom Abstand des Sensors 11 zu einem gegenüberliegenden Objekte der Flügelanlage 20, also einem im Abbild zu ignorierenden Objekt, seine Sendehelligkeit bzw. -leistung anpassen. Je näher der Sensor 11 diesem Objekt ist, umso geringer kann die Sendeleistung auch im Aktivmodus ausfallen. Es wird also nur soviel Energie verbraucht wie unbedingt nötig. Eine derartige Anpassung kann auch gemäß anderen Kriterien erfolgen. Sie kann von der realen Bildqualität (Konturen, Helligkeit) abhängen. Je höher die Umgebungshelligkeit, umso heller müssen die Beleuchtungselemente strahlen. Das gleiche kann hinsichtlich der Konturen im erfassten Abbild gelten.

Um den Energieverbrauch des Sensors 11 (insbesondere der Beleuchtungseinrichtungen 15) (weiter) zu reduzieren, kann der Sensor 11 in Zeiten der Nichtbenutzung bzw. des Stillstehens der Flügelanlage 20 ganz abgeschaltet bzw. in den vorbeschriebenen Schlafmodus versetzt werden. Geeignete Einsatzfälle können Zeiten sein, in denen die Flügelanlage 20 verschlossen ist oder sich durch einen Programmzustand der Flügelanlage 20 keiner ihrer Flügel 21 bewegt wird (Programmschalter der Flügelanlage 20 bzw. eines Antriebs 40 befindet sich beispielhaft in Geschlossenstellung oder Daueroffen-Stellung). D. h. der Schlafmodus wird eingenommen, wenn keine Aktion oder kein Ereignis hinsichtlich der Flügelanlage 20 zu erwarten ist.

Zum Wiederherstellen des Energiespar- oder Aktivmodus' ist der Sensor 11 elektrisch vorzugsweise mit der Steuerung 12 beispielsweise eines Flügelantriebs 40 verbunden. Über ein spezielles Aufwecksignal (z. B. eigene (Trigger-)Leitung oder BUS) kann der Sensor 11 jederzeit vom Antrieb 40 aktiviert werden.

Zusätzlich oder alternativ verfügt der Sensor 11 über einen eigenen Aktivierungssensor. Dies kann beispielsweise ein Bewegungsmelder oder Passiv-Infrarot-Sensor sein.

Im Energiesparmodus muss der Sensor 11 im Fall beispielsweise eines Öffnungssensors in Phasen, in denen deren Fiügei 21 nicht bewegt werden und/oder geschlossen sind, nur Personen zur Aktivierung von Flügel 21, Verriegelung und/oder Antriebssystem erkennen. Da eine sich bewegende Person voraussichtlich immer durch mehrere Bildpunkte erkannt wird, kann in diesen Phasen die Anzahl der zur Detektierung erfassten Bildpunkte reduziert werden.

Mithilfe der Bildverarbeitungseinrichtung 13 beispielsweise in Form eines Mikrocontrollers ist es zudem möglich wird, das jeweils erfasste Abbild hinsichtlich vorbestimmter Kriterien auszuwerten bzw. zu interpretieren. So kann festgestellt werden, wie viele Objekte sich im Erfassungsbereich 6, 7 des betreffenden Sensors 11 aufhalten bzw. bewegen. Hierbei werden hauptsächlich Form und Größe eines Detektierungs-Ereignisses zugrunde gelegt. Im Gegensatz zu optischen Kameras beeinflussen bei dieser Art Sensor 11 Lichtreflexe und Oberflächenfarbe der zu erfassenden Objekte das erfasste Abbild nicht, sodass ohne allzu komplexe Bildanpassungen oder -interpretationen die Erkennung einzelner Personen oder Objekte möglich ist, was der Robustheit des Sensors 11 und damit der damit ausgestatteten Flügelanlage 20 zugute kommt.

Wie vorstehend angegeben, kann neben der Erkennung bzw. Kategorisieren von Objekten im Erfassungsbereich 6, 7 auch ermittelt werden, in welche Richtung/en sich das/die Objekt/e bewegen. Hierzu wird zunächst ein Objekt aufgrund seiner Größe (Anzahl benachbarter Bildpunkte) und Charakteristik als (sicherheits)relevantes Objekt erkannt. Durch Verfolgung dieses Objektes mithilfe aufeinander folgend erfasster Abbilder und Vergleich dieser Abbilder untereinander kann auf die Bewegungsbahn des Objektes geschlossen werden.

Die Richtungserkennung von Objekten kann auf vielfältige Art sinnvoll Einfluss auf die Aktivitäten der Flügelanlage 20 haben. So müssen beispielweise sich quer zur Flügelanlage 20 bzw. parallel zu deren geschlossenen Flügeln 21 bewegende oder sich gar von der Flügelanlage 20 (wieder) entfernende Objekte nicht zum Öffnen der Flügelanlage 20 führen. Sobald sich jedoch ein Objekt in Richtung Flügelanlage 20 bewegt oder in diese Richtung abbiegt und einen vorbestimmten Mindestabstand zur Flügelanlage 20 unterschreitet, erfolgt ein Öffnen der Flügelanlage 20. Weiterhin kann die Ermittlung des Bewegungswegs zur Folge haben, dass sich bei einer mehrflügeligen Flügelanlage 20 nur ein Flügel 21 öffnet oder mehrere Flügel 21 öffnen. Deren maximale Öffnungsweite kann zudem auf die Breite des Stroms an Objekten, das bzw. die die Flügelanlage 20 aktuell passieren wollen, angepasst werden. Dies ist insbesondere bei Außentüren günstig, da dadurch insbesondere an kalten Tagen Wärmeverluste durch die Flügelanlage hindurch minimiert werden können.

Der erfindungsgemäße Sensor 11 kann aber nicht nur als Öffnungssensor sondern auch als Schließsensor eingesetzt werden. Aufgrund der Ermittlung von Abstand und Bewegungsrichtung des/r Objekts/e durch die Bildverarbeitungseinrichtung 13 oder den Sensor 11 selbst kann mithilfe der vorgenannten Vorgehensweise weiterhin festgestellt werden, wenn das/die Objekt/e die Flügelanlage 20 vollständig passiert hat/ben, es bzw. sie sich also zwar noch sehr nahe der Flügelanlage befindet/n, die Flügel 21 aber bereits (für das/die Objekt/e) gefahrlos geschlossen werden können. Besonders gut ist dieses Vorgehen für Schiebeflügelanlagen geeignet. Dadurch ist es möglich, die Flügelanlage 20 unabhängig oder gar ohne fest eingestellte Öffnungszeit zu schließen. Hierdurch können die Gesamt-Öffnungsdauer der Flügelanlage 20 reduziert und weniger warme oder kalte Luft ausgetauscht werden.

Aber auch im Fall beispielsweise gehbehindeter Menschen ist dieses Vorgehen von Vorteil; der Schließvorgang kann verzögert werden, bis die betreffende Person die Flügelanlage sicher passiert hat.

Nicht zuletzt kann die Flügelanlage 20 so betrieben werden, dass eine ggf. eingeleitete Schließfahrt des/r Flügel/s 21 zu einem schlagartigen Stopp des/r Flügel/s 21 und ggf. zu deren Reversieren führt, wenn ein Objekt im Bewegungsbereich des betreffenden Flügels 21 anhält oder gar seine Bewegungsrichtung in Richtung auf die Flügelanlage 20 zu ändert.

Insgesamt ergeben sich also sowohl energetische als auch sicherheitstechnische Vorteile.

Vorzugsweise erfolgt eine Weiterleitung von Information wie Geschwindigkeit, Position, Anzahl von Objekten im jeweiligen Erfassungsbereich 6, 7 an einen Antrieb der Flügelanlage 20. Diese Information kann in Form physikalischer, also elektrischer Daten über eine BUS-Leitung oder dergleichen an eine Antriebssteuerung weitergeleitet werden

Alternativ wird diese Information vom jeweiligen Sensor 11 selbst ausgewertet, sodass nur das Ergebnis der Auswertung beispielsweise als logische Zustand oder Situationsbeschreibung in Form eines Flags (z. B. Person befindet sich in der Sicherheitszone) an die Antriebssteuerung weitergeleitet werden müssen. Dies verringert die Last sowohl in der Bildverarbeitungseinrichtung 13 als auch bei der Anzahl zu übertragender Daten. Aufgrund des somit verteilten, zeitlich parallel in den Sensoren 11 möglichen (Vor-)Auswertens der erfassten Abbilder und der damit einhergehenden Entlastung der Bildverarbeitungseinrichtung 13 wird die Leistungsfähigkeit des gesamten Systems bzw. der gesamten Flügelanlage 20 verbessert.

Der Sensors 11 erzeugt, wie bereits erwähnt, ein reliefartiges Abbild des jeweiligen Erfassungsbereichs 6, 7 als Projektion aus einer Richtung. Um ein Objekt oder eine Raumsituation vollständig inkl. einer Vorder- und Rückseite erfassen zu können, ist vorzugsweise vorgesehen, mit zwei oder mehr Sensoren 11 aus unterschiedlichen Blickwinkeln eine Szenerie abzubilden. Über die Bildverarbeitungseinrichtung 13 beispielsweise in Form eines Rechners ist es möglich, die jeweils von den Sensoren 11 erfassten Abbilder zu einem 3D-Bild der unterschiedlichen Blickwinkel zusammenzusetzen und auf diese Art ein vollständiges 3D-Bild mit Vorder-und Rückseite des betreffenden Objektes zu erzeugen. Damit ist es beispielsweise möglich, die beispielsweise als Drehtüranlage ausgebildete Flügelanlage 20 vollständig mit Vorder- und Rückseite sensorisch zu erfassen und eine lückenlose Sicherheitszone vor, hinter und im Erfassungsbereich des Durchgangs der Flügelanlage 20 zu definieren. Vorzugsweise bewegt sich diese Sicherheitszone mit den Flügelbewegungen mit, wodurch die Anpassbarkeit und Optimierung der Flügelanlage 20 hinsichtlich ihres Betriebs verbessert werden.

Ein anderer Vorteil ist, dass die Sensoren 11 nicht millimetergenau positioniert werden müssen. Aufgrund des gebildeten 3D-Bildes kann die Bildverarbeitungseinrichtung 13 die Sensorpositionen ermitteln und den Sensoren 11 entsprechende Erfassungsbereiche 6, 7 zuweisen. Dazu weist jeder Sensor 11 eine geeignete Firmware- bzw. Software-Schnittstelle auf. Die Sensoren 11 können in nahezu beliebigen Winkeln zueinander angebracht werden. Deren Standpunkte können durch räumlichen Bilddatenvergleich rückgerechnet werden. Hierdurch entfällt die üblicherweise notwendige, aufwendige Eingabe zu Standort- und Geometriedaten der Sensoren 11 und der Flügelanlage 20. Dies ermöglicht eine enorm einfache einfache Installation und Inbetriebnahme sowohl der Flügelanlage 20 als auch der einzelnen Sensoren 11.

Die vorbeschriebene Objekterkennung ermöglicht die Klassifizierung der Objekte gemäß ihrer äußeren Form. Hierdurch könnte beispielsweise ein Gegenstand wie ein Einkaufswagen von einer Person unterschieden werden. Dadurch kann beispielsweise verhindert werden, dass eine bestimmte Flügelanlage 20 mit Einkaufwagen passiert wird. Es könnte zudem festgestellt werden, ob der Einkaufswagen voll oder leer ist. Dies könnte beispielsweise an automatischen Kassen von Nutzen sein. An Flughäfen könnte beispielsweise automatisch erkannt werden, ob eine Person ein Gepäckstück dabei hat oder nicht. Es könnte erkannt werden, wenn Kinder anstelle von Erwachsen den jeweiligen Erfassungsbereich 6, 7 passieren usw. Die Einsatzmöglichkeiten sind sehr vielschichtig.

Da der Sensor 11 in der Lage ist, zumindest den Erfassungsbereich 7 detailliert inkl. der Dreidimensionalität von sich darin befindlichen Objekten zu erfassen, und direkt die Entfernung zum jeweiligen Oberflächenpunkt bestimmt wird, ist das Verfahren des Erfassens des jeweiligen Abbildes weitgehend stör- und manipulationssicher, was die Robustheit der Flügelanlage 20 wesentlich verbessert.

Der Verfahren lässt sich, wie vorstehend angegeben, gleichermaßen zur Aktivierung wie zur Absicherung von Türanlagen insbesondere automatisierter Türanlagen (Schiebe-, Dreh- und Karusselltüren einsetzen). Die Erfassungsbereiche 6, 7 sind als Aktivierungsbereiche und/oder als Sicherungsbereiche definierbar, je nachdem welche Reaktion auf das Erkennen eines Objekts erfolgt. D. h. die Funktion des Sensors 11 selbst bleibt überwiegend gleich. Die Definition der Erfassungsbereiche 6, 7 hinsichtlich Bedeutung, Größe und/oder Ausbildung erfolgt vorzugsweise per Software. Auf diese Art können auch dynamische Übergänge oder Überganszonen definiert werden. Weiterhin können die Grenzen dieser Erfassungsbereiche 6, 7 in Abhängigkeit von der jeweiligen Flügelstellung von der Steuerung 12 verschoben und angepasst werden. Auf diese Art kann beispielsweise ein Absicherungsbereich so klein wie möglich und stets so groß wie nötig gehalten werden. Dies führt dazu, dass der jeweilige Sensor 11 auch nur das erfasst, was unbedingt nötig ist, wodurch der Betrieb der Flügelänlage 20 weiter optimiert wird.

Die Einstellung der dynamischen Erfassungsbereich 6, 7 kann auch in Abhängigkeit andere Faktoren oder Parameter erfolgen. So kann beispielsweise der Sicherungsbereich vergrößert werden, wenn eine Gedrängesituation im Flügelanlagenbereich vorliegt. Auch kann der Sicherungsbereich vergrößert werden wenn hohe Geschwindigkeiten der sich im jeweiligen Erfassungsbereich 6, 7 bewegenden Objekte ermittelt werden.

Mithilfe mehrerer Sensoren 11 können mehrere Sicherungs- und/oder Aktivierungsbereiche vorzugsweise mit mehreren Sicherheitszonen mit unterschiedlicher Gewichtung oder Bedeutung definiert werden.

Zusätzlich oder alternativ ist zumindest ein Sensor 11 so aufgebaut, dass dessen Beleuchtungseinrichtungen 15 und/ oder Sensorelemente 14 vorzugsweise wieder softwareseitig gruppiert und so unterschiedlichen Erfassungsbereichen 6, 7 zugewiesen werden. Diese unterschiedlichen Erfassungsbereiche 6, 7 können selbstredend unterschiedliche Bedeutungen beispielsweise als Aktivierungs- oder Sicherungsbereich haben.

Als feststehender Sensor 11 kann dieser bei einer Initialisierung beispielsweise im Rahmen einer Lernfahrt der Flügelanlage 20 diese anhand ihrer Bewegung erkennen. Eine oder mehrere Sicherheitszone/n kann bzw. können aufgrund der sensorisch erfassten Abbilder um die Flügelanlage 20 herum automatisch ausgebildet werden.

Dadurch ist die Flügelanlage 20 befähigbar, sich mithilfe der Sensoren 11 vorzugsweise bei jeder Fahrt sozusagen selbst zu beobachten und bei Veränderungen (einer der Sensoren 11 hat sich verstellt, der FlügelÖffnungswinkel hat sich bei Dauerauf verändert, ...) könnte/n die Sicherheitszone/n kontinuierlich nachgestellt werden. Da die Flügelanlage 20 bei jeder Flügelfahrt beobachtet werden kann, können bei diesem Vorgehen nicht zur Flügelanlage 20 gehörende Objekte, die sich nur temporär im jeweiligen Erfassungsbereich 6, 7 aufhalten, herausgerechnet werden. Gesonderte Einstellungen, Programmierungen oder Parametrisierungen von außen durch einen Monteur sind nicht mehr erforderlich bzw. können mittels des/r den Sensors/en 11 festgelegt werden. Hierdurch werden nicht nur die Installation vereinfacht sondern auch die Sicherheit erhöht, da eine Fehleinstellung (z. B. zu kleine Sicherheitszone) ausgeschlossen werden kann.

Der Sensor 11 weist vorzugsweise einen Test- und Rückmeldekontakt bzw. -anschluss auf, der mit der Steuerung 12 beispielsweise als Teil eines Flügelantriebs 40 gekoppelt ist. Damit ist es der Steuerung möglich, den Sensor 11 zu prüfen, ob er richtig funktioniert oder nicht. Nach einer Test-Anfrage der Steuerung 12 beispielsweise mit einem Schaltimpuls in vordefinierter wartet die Steuerung 12 auf eine Reaktion. Bleibt diese aus, wird diese von der Steuerung 12 als Ausfall des Sensors 11 gewertet, und die Steuerung schaltet die Flügelanlage 20 in einen sicheren Modus. Standardmäßig ist jeder Sensor 11 mit einem Rückmeldeeingang in Form beispielsweise eines diskreten einzelnen Eingangkontaktes ausgeführt. Bei Sensoren 11 die über einen Daten-Bus mit der Steuerung 12 oder Bildverarbeitungseinrichtung 13 kommunizieren, kann eine Sicherheitsabfrage durch die Steuerung 12 bzw. Bildverarbeitungseinrichtung 13 über diese Bus-Datenleitung durchgeführt werden. Hierbei wird zunächst eine Anfrage an den Sensor 11 geschickt, der daraufhin in vordefinierte Weise mit einer logischen Antwort zurückantwortet, die wiederum durch die anfragende Einrichtung, also die Steuerung 12 bzw. Bildverarbeitungseinrichtung 13, überprüft wird.

Die Sicherheit kann weiter erhöht werden, wenn die Antwort des Sensors 11 erst durch einige Rechenschritte erfolgt, die in einem im Sensor 11 implementierten Programm integriert sind. Hierdurch können zusätzlich die richtige Funktionsweise des Sensor-Mikrocontrollers und dessen Firmware überwacht werden.

Zur Absicherung von Drehflügelanlagen, insbesondere der Absicherung des Schwenkbereichs sind auf dem Flügelblatt installierte und sich mitbewegende Sensoren 11 (auch als so genannte Sensorleisten bekannt) eine besonders effektive Lösung. Hierbei besteht die prinzipielle Schwierigkeit, Hindernisses in Form von sich bewegenden Objekten von fest stehenden Oberflächen (Wandteilen, Gebäudeteilen, Unregelmäßigkeiten am Boden usw.) zu unterscheiden. Für einen sich mitbewegenden Sensor ist dies in sofern schwieriger, als das sich auch im Raum feststehende Objekte relativ zum Sensor 11 bewegen, und daher schwieriger auszublenden sind.

Eine erfindungsgemäße Lösung für einen mitbewegten Sensor feststehende Objekte, Reflektionsoberflächen oder Boden-Unregelmäßigkeiten von Personen und kritischen Objekten zu unterscheiden, ist eine Aufzeichnung von Sensorsignalen als Referenz bei einer Türfahrt ohne Hindernisses und ein Vergleich dieser Referenzsignale mit den Signalen späterer Türfahrten. Das Referenzsignal kann die Form eines Films haben, also aus vielen zeitlich nacheinander erstellten Einzelbildern bestehen. Diese Einzelbilder sind der jeweiligen Position (in der Regel Winkelstellung) der Flügelanlage20 bzw. Flügel 21 zugeordnet und können in den unterschiedlichen Positionen der Flügel 21 später mit den aktuellen Bildern verglichen werden.

Um die Datenmenge einer Filmsequenz zu reduzieren, können die Einzelbilder zu einem Gesamtbild zusammengefasst werden. Hierbei wird ausgenutzt, dass die Einzelbilder zu einem großen Anteil überlappen. Anhand dieser Überlappung kann durch verschieben, drehen und überlagern ein Gesamtbild erstellt werden. Die Qualität dieses Gesamtbildes kann die Qualität der Einzelbilder übertreffen, da die redundanten Informationen durch Auswertungs- und Überlagerungsalgorithmen, Mittelwertbildung und Interpolation zu hochwertigeren Informationen zusammengebaut werden können. Sogar die Auflösung kann gesteigert werden. Es werden von einen Szenerie in schneller Folge nacheinander mehrere Aufnahmen (teilweise mit unterschiedlichen Belichtungseinstellungen) gemacht und im Mirkocontroller zu einem hochwertigerem Bild zusammengebaut. Insbesondere wird das Verfahren für schwierige Lichtsituationen eingesetzt: Mehrere unscharfe und verrauschte Bilder mit überstrahlten oder zu dunklen Zonen ergeben ein schärfere, rauschärmeres und im Kotrast ausgeglichenes Bild.

Unabhängig vom Verfahren zur Erzeugung eines Referenzbildes/-films erfolgt zum Vergleich einer aktuellen Sicht des Sensors 11 mit der Referenz eine Zuordnung der Bildausschnitte dem richtigen Einzelbild oder der Winkelposition. Hierzu werden aktuelles das Abbild und Referenz im vergleichenden Mikrocontroller beispielsweise der Bildverarbeitungseinrichtung 13 die aktuelle Position bzw. Winkelposition der Flügelanlage bekannt gemacht. Diese Information kann auf unterschiedliche Art bestimmt oder übermittelt werden:

Wenn sich der Abbild und Referenz vergleichende Controller im Sensor 11 befindet, kann die Flügel-Öffnungsinformation von der Steuerung 12 an den Sensor 11 übermittelt werden. Die Winkelposition wird über eine Datenschnittstelle (analoges Signal, digitales Signal, Bus-Signal) die als Datenleitung, als Funkschnittstelle oder als optische Schnittstelle ausgeführt sein kann.

Die Öffnungsposition kann von der Steuerung 12 durch Rückrechnung der Flügel-, ggf. Antriebs- und Gestängegeometrie aus den Positionssignalen im Antrieb (z. B. Inkrementalgeber am Motor oder Getriebeachse) oder an der Flügelanlage 20 allgemein ermittelt werden.

Durch Vergleichen zweier kurz nacheinander aufgenommener Abbilder des jeweiligen Erfassungsbereichs 6, 7 oder Helligkeitsprofile einer Oberfläche im Abbild können eine etwaig stattgefundene Bewegung (beispielsweise Verschiebung) des Sensors 11 bestimmt werden und durch Summierung der Einzelverschiebungen die absolute Position berechnet werden. Mittels eines im Sensor 11 integrierten optischen Messsystems oder einer speziellen Auswertung der erfassten 3D-Abbilder können sowohl Position als auch Öffnungs- bzw. Winkelstellung des zugehörigen Flügels 21 selbständig ermittelt werden. Hierbei ist es nicht unbedingt notwendig die tatsächliche absolute Position des Flügels 21 im Raum zu ermitteln. Es reicht aus, ein analoges oder digitales Wegsignal zu erzeugen, bei dem eine feste Zuordnung zwischen dem Wegsignal und der tatsächlichen absoluten Position des Flügels 21 besteht. Das Positionssignal wird verwendet, um die aufgenommenen Referenzbilder oder bestimmte Ausschnitte eines oder mehrerer Referenzbilder dem aktuell erfassten Abbild zuzuordnen, um dieses mit dem Referenzbild vergleichen zu können.

Soll die Auswertung der Abbilder in einer räumlich vom Sensor 11 abgesetzten Auswertungseinheit oder der Steuerung 12 beispielsweise eines Flügelantriebs 40 durchgeführt werden, wird das vom Sensor 11 erzeugte Positionssignal mit den Bilddaten an diese Auswertungseinheit übertragen. Der Vorteil einer im Sensor 11 integrierten Positionsbestimmung ist, dass von externen Einrichtungen weder Positionsdaten an den Sensor 11 übertragen noch ermittelt werden müssen. Dies ist zum einen eine Ersparnis, und zum anderen wird erreicht, dass der Sensor 11 ein abgeschlossenes, modulartiges Element ist und sich flexibler bei und unabhängiger von den jeweiligen Flügelanlagen 20 einsetzen lässt. Bei einer Datenübertragung der Flügel-Öffnungsposition wäre eine Abstimmung dieser Datenübertragung zwischen Sensor 11 und Auswertungseinheit mindestens hinsichtlich der physikalischen Schnittstelle, des Datenformates, der benötigten Qualität des Positionssignals, der Wiederholungsgenauigkeit, der Datenrate und der Auflösung notwendig. Ferner wird dadurch vermieden, dass solche Signale durch beispielsweise ein Getriebespiel in einem Antriebsstrang, mechanische Tolleranzen und Verformungen in einem Flügelantrieb 40, einem Gestänge 41, 42 und an dem Flügel 21 selbst zu erheblichen Ungenauigkeiten und Fehlern führen können.

Durch den Sensor 11 ist noch ein anderes Problem lösbar. Erfassungsbereiche klassischer Sensoren befinden sich in Durchgangsrichtung gesehen immer vor oder hinter den geschlossenen Flügeln 21. Wie vorstehend beschrieben, ist der Sensor 11 ist in der Lage, in Begehungsrichtung gesehen, vor oder hinter der Flügelanlage 20 angeordnet zu werden. Dessen Erfassungsbereich 7 befindet sich dann ebenfalls vor bzw. hinter der Flügelanlage 20. Wird aber die Flügelanlage 20 geöffnet, und ist oder wird der Sensor 11 dadurch in den Aktivmodus versetzt, kann dessen Erfassungsbereich 7 den Flügeldurchgang durchsetzen, sodass er sich teilweise vor und teilweise hinter der Flügelanlage 20 befindet. Dadurch ist es dem Sensor 11 ohne Zusatzsensoren möglich zu überwachen, ob das jeweils erfasste Objekt den Durchgang passiert hat oder nicht. Wenn ja, werden die Flügelanlage 20 wieder geschlossen und der Sensor 11 in den Energie- oder Schlafmodus versetzt.

Ferner kann vor Benutzung der Flügelanlage 20 mithilfe des Sensors 11 und der Bildverarbeitungseinrichtung 15 ein Volumenmodell von ebenjener Flügelanlage 20 gebildet und abgespeichert werden. Bei nachfolgend erfassten Abbildern können diesen das gebildete, ggf. geometrisch abgebildete, d. h. verschobene, gedrehte, verzerrte, gespiegelte und/oder skalierte Volumenmodell zugrunde gelegt und damit aus dem jeweiligen Abbild "herausgerechnet" werden. Dadurch ist insbesondere eine Vorhersage möglicher Kollisionen mit Objekten möglich.

Der Sensor 11 kann überall montiert sein; seine Erfassungsbereiche 6, 7 können entsprechend eingestellt werden. Er kann zudem mit einer automatischen Nachführungseinrichtung versehen sein. Unter Zugrundelegen vorstehend angegebenen Volumenmodells kann nun überprüft werden, ob der Sensor 11 seine Position in Bezug auf die Flügelanlage 20 verändert hat oder nicht. Wenn ja, wird der Sensor 11 so weit bewegt, bis das erfasste Abbild positionsmäßig mit dem gebildeten Volumenmodell übereinstimmt. Damit entfallen etwaige Einstellungsarbeiten am Sensor 11; dies kann automatisch erfolgen.

Der Sensor 11 als Aktivierungs- und/oder Sicherheitssensor ist bei jeder Art von Flügelanlagen einsetzbar, also insbesondere bei Flügelanlagen mit und ohne Flügelbetätiger (Fensterantrieb, Türschließer, Türantrieb, Flügelverriegelung), insbesondere bei automatischen Schiebetüranlagen, Drehflügeltüren, Karuselltüren und Bogenschiebetü-ren.

Ein anderes mögliches Einsatzgebiet des Sensors 11 ist die Zutrittskontrolle. Das Erfassen und Vergleichen von Objekten ermöglicht beispielsweise das Erkennen von Waffen in sicherheitsrelevanten Bereichen. Der Sensor 11 kann mit anderen Zutrittskontrolleinrichtungen gekoppelt sein, beispielsweise mit einem Fingerabdruck-Sensor. Fingerabdruck und ein vorab vom Sensor 11 als Volumenmodell erfasstes Abbild der jeweiligen Person können abgespeichert sein. Legt eine Person nun einen Fingerabdruck auf den Fingerabdruck-Sensor, kann mithilfe des aktuell gebildeten Abbilds der Person überprüft werden, ob der aktuell erfasste Fingerabdruck bekannt ist, und, wenn ja, ob dieser Fingerabdruck mit dem Abbild der Person in Einklang gebracht werden kann. Dadurch ist es schwerer oder gar unmöglich, sich mit einem kopierten Fingerabdruck Zugang zu verschaffen.

Da mit dem Sensor 11 eine Personenidentifikation möglich ist, können beispielsweise Gefängnistüren abgesichert werden, indem beispielsweise Gesichter von Wärtern als Volumenmodelle vorab gespeichert worden sind. Dies ermöglicht das Versperren jeglichen Durchgangs für nichtberechtigte Personen, und das unabhängig bestimmter biometrischer Daten.

Die vorbeschriebenen Sensoren 11 können beispielsweise auch zur Einbruchüberwachung genutzt werden. Insbesondere könnten mittels des Sensors eine Person (z. B. Einbrecher) eindeutig von einem zufällig dort anwesenden, anderen Objekt (z. B. Tier, Haustier, Katze, Passant usw.) unterschieden und hierdurch ein etwaiger Fehlalarm vermieden werden.

Weiterhin könnte Räume oder Erfassungsbereiche ganz gezielt darauf überwacht werden, bestimmte Personen zuzulassen und andere auszuschließen. Es könnte also eine universell einsetzbare Zutrittsküntrolle realisiert werden. Der Sensor 11 ist jeder optischen Kamera überlegen, da diese das Bild komplex interpretieren muss und auf Umgebungsbedingungen wie Beleuchtung, Farben, Abgrenzung zwischen den Objekten und dergleichen angewiesen ist.

Der Sensor 11 kann beispielsweise mittels einer Funkschnittstelle mit der übergeordneten Steuerung 12 bzw. Bildverarbeitungseinrichtung 13, einem Flügel-Steuerungssystem oder einem anderen Sensor 11 kommunizieren, was die Installation der Flügelanlage 20 deutlich vereinfacht.

Anstelle einer externen Energieversorgung können die Sensoren 11 insbesondere aufgrund des über die Zeit geringeren Energiebedarfs mittels Akkus und/oder Solarelementen mit Energie versorgt werden, wobei die Solarmodule vorzugsweise vorgesehen sind, die Akkus aufzuladen.

Ferner können die vorbeschriebenen Sensoren 11 zur Gestensteuerung, d. h. zur Steuerung mithilfe von Bewegungen einer Person vorgesehen sein. Dazu werden aufeinander folgend ausgewertete Abbilder zusätzlich miteinander verglichen oder deren Bildpunkt-Werte voneinander abgezogen und das daraus resultierende Differenzbild auf Unterschiede untersucht. Diese Art der Bedienung könnte insbesondere zur Programmierung und ggf. Parametrisierung beispielsweise eines mit dem Sensor 11 gekoppelten Flügelantrieb eingesetzt werden. Türen können mittels Gestik bedient werden. Dies hat beispielsweise Vorteile bei Personen mit Rollstuhl, die nicht mehr umständlich einen Schalter betätigen müssen sondern exemplarisch nur eine bestimmte Handbewegung ausführen müssen, um eine Tür zu öffnen.

Werden mehrere Sensoren 11 verwendet, deren Erfassungsbereiche 6, 7 einander beispielsweise aus Sicherheitsgründen (teil-)überlappen, könnten diese einander mittels ihrer Beleuchtungseinrichtungen 15 stören. Um dies zu vermeiden ist ein Zeitmultiplex-Verfahren vorsehbar, bei dem eine den betreffenden Sensoren 11 übergeordnete Steuerung die Sensoren 11 anweist, ihre Beleuchtungseinrichtungen nur in vorbestimmten Zeitintervallen einzuschalten, die so gestaltet sind, dass Sensoren 11 mit einander überlappenden Erfassungsbereichen 6, 7 paarweise nie zeitgleich ihre Beleuchtungseinrichtungen 15 eingeschaltet haben.

Zusätzlich oder alternativ dazu ist vorgesehen, dass diese Sensoren 11 mit unterschiedlich modulierten Beleuchtungsfrequenzen arbeiten und deren Sensorelemente 14 auch nur auf die im eigenen Sensor 11 eingestellte Lichtfrequenzen reagieren. Der Vorteil ist, dass das Licht des einen Sensors 11 beim anderen Sensor 11 nur als Hintergrundanteil betrachtet bzw. demoduliert wird und damit eine Verfälschung des Abbild des jeweiligen Sensors 11 weitestgehend bzw. vollständig ausgeschlossen ist.

Die vorbeschriebene, optionale Optik des Sensors 11 dient vornehmlich dem Sammeln des von der Umgebung reflektierten Lichts. Ein optisches Bandpassfilter ist dabei auf die Wellenlänge des von den sensoreigenen Beleuchtungseinrichtung 15 eingestellt. Somit wird ein großer Teil des störenden Hintergrundlichtes eliminiert.

Vorzugsweise hat der Sensor 11 eine Auflösung von 204 x 204 Bildpunkten.

Vorzugsweise erfolgt die vorbeschriebene Entfemungsermittlung von erfassten Objekten direkt im Sensor 11. Dazu werden auch Kalibrierwerte im System, vorzugsweise im Sensor 11, abgespeichert. Als Schnittstelle kommt unter anderen USB oder Ethernet zum Einsatz.

An die Sensorelemente 14 sind ein oder mehrere schnell**e** Verschlüsse oder Schalter angebracht, welche nur für einen ganz bestimmten Zeitraum das elektrische Signal durchlassen. Ein nachgeschaltetes Speicherelement summiert das Signal auf. Beispielhaft arbeitet der Sensor 11 mit zwei Schaltern und zwei Speicherelementen 14. Die Schalter werden vorzugsweise mit einem Pulssignal gleicher Dauer wie der Lichtimpuls angesteuert, wobei Steuersignale für die Schalter zueinander um eine Pulslänge verschoben sind. Trifft nun das reflektierte Licht verzögert auf einen Objektpunkt im Erfassungsbereich 6, 7 auf, so gelangt nur ein Teil des reflektierten Lichtsignals in das zugehörige Sensorelement 14, der andere Teil wird im anderen Sensorelement 14 gesammelt. Je nach Distanz verändert sich also das Verhältnis des von den Sensorelementen 14 aufgenommenen Lichts. Da innerhalb einer Pulsrate von beispielsweise 50 ns nur sehr wenig Licht gesammelt werden kann, wird nicht nur ein Lichtimpuls ausgesandt, sondern vorzugsweise mehrere Tausend Lichtimpulse mit einer vorbestimmten Wiederholungsrate werden ausgesandt und gesammelt, wodurch die Signalstärke erhöht werden kann.

Nach der Aufnahme werden die Bildpunkte ausgelesen. Nachfolgend werden die erfassten Lichtsignale gemessen bzw. bezüglich ihrer Stärke S1, S2 ausgewertet. Da die Länge des Lichtimpulses bekannt ist, kann ein aktueller Abstand bzw. eine aktuelle Distanz $D_{akt}$ eines Objekts vom Sensor 11 wie folgt berechnet werden:

$$D_{akt} = D_{max} \cdot \frac{S2}{S1 + S2}.$$

Basierend auf der vorgenannten Pulslänge von 50 ns sowie für S1 = 0,66 und S2 = 0,33 ergibt sich somit:

$$D_{akt} = 7,5m \cdot \frac{0,33}{0,33 + 0,66} = 2,5m.$$

In den Abbildern auftretende Hintergrundbeleuchtung ergibt in den beiden Sensorelementen 14 einen zusätzlichen Signalanteil. Um diesen zu eliminieren, können die Aufnahme noch einmal mit inaktiver Beleuchtung durchgeführt und die erfassten Werte von den Signalen mit Beleuchtung im Abbild abgezogen werden. Sind die Objekte weiter als der Distanzbereich entfernt, so ergeben sich mit der obigen Formel falsche Distanzwerte. Das kann auch mit einer zweiten Messung, bei der die Schaltsignale um eine Zeit $t_0$ verschoben sind, unterdrückt werden.

Alternativ zu Impulsen wird eine Sinusmodulation genutzt, bei der die Anforderungen an die Flankensteilheit der Beleuchtungsimpulse geringer sind.

Mit der vom Sensor 11 ermittelten Distanzinformation ist es einfach, Objekte aus einem Abbild zu extrahieren: Es werden ein Distanzschwellwert gesetzt und nur die Bildpunkte beachtet, die Distanzen unterhalb dieses Schwellwerts liefern. Komplizierte Algorithmen zur Objekterkennung entfallen. Dies macht die Anwendung der Sensoren 11 äußerst robust.

Zudem bilden die Sensoren 11 die komplette Szenerie mit jeweils einer einzigen Aufnahme ab. Die Bildraten erreichen bis zu 100 Bilder pro Sekunde und ermöglichen somit Echtzeitanwendungen.

Im Gegensatz zu Stereosystemen, die Schwierigkeiten mit wiederholenden Mustern oder uniformen Flächen bekommen können, funktionieren die Sensoren 11 mit nahezu allen diffus reflektierenden Materialien.

Durch die dritte Dimension in den Abbildern lassen sich auch Messaufgaben wie die Bestimmung von Objektgrößen einfach bewerkstelligen. Dies ist bei Flügelanlagen mit Hubtoren von Vorteil. Mittels Sensoren 11 können eine minimale Öffnungshöhe des jeweiligen Flügels ermittelt und daraufhin ein vorhandener Torantrieb zum Öffnen des Torflügels angewiesen werden. Zusätzlich kann währenddessen eine akustische und/oder optische Warnanzeige erfolgen, um dem passierenden Objekt solange den Durchgang zu verwehren, wie die Mindestöffnungshöhe nicht erreicht ist.

Ferner kann mit dieser Art Sensoren 11 eine Verfolgung des jeweiligen Objekts erfolgen, um auf dessen geplanten Bewegungsweg schließen und die Flügelanlage 20 entsprechend ansteuern zu können.

Der vorbeschriebene Energiesparmodus kann mehrstufig ausgebildet sein. Von Stufe zu Stufe werden Sensorelemente 11 und/oder Beleuchtungseinrichtungen 15 einzeln oder in Gruppen weg- oder wieder zugeschaltet. Dadurch können verschiedene Sicherheits- oder Aktivierungsstufen der Flügelanlage realisiert werden. Beispielsweise bei einer Türanlage 20 im so genannten Automatikbetrieb (automatisches Öffnen und/oder Schließen der Türanlage 20) kann, wenn die Flügel geschlossen sind und Tür schon längere Zeit nicht benutzt wurden, die volle Pulsrate des Sensors 11 und/oder die Leistung der Beleuchtung ist noch mehr reduziert und auf den Randbereich des Erfassungsbereichs 7 reduziert werden.

Alle vorbeschriebenen Energiesparmodi-Realisierungen können in jeder Kombination miteinander realisiert sein.

Ein besonders geeigneter Einsatzfall für einen Schlafmodus des Sensors 11 ist eine verriegelbare Flügelanlage 20. Solange die Verriegelung aktiv ist, ist der Sensor 11 überflüssig, und kann abgeschaltet werden.

Die in Figuren 13 - 15 angegebenen Verfahren können miteinander kombiniert werden.

Die Positions- und Geschwindigkeitsbestimmung bei einem auf einem Flügel 21 angebrachten, sich mitbewegenden Sensor 11 kann durch Vergleichen zweier kurz nacheinander aufgenommener Bilder oder Helligkeitsprofile einer Oberfläche erfolgen. Hierbei wird durch einen Auswertungs-Algorithmus die durch die Bewegung des Sensors 11 verursachte Verschiebung der zwei nacheinander aufgenommenen Bilder bestimmt. Durch Aufsummierung der einzelnen Verschiebungen kann die absolute Position von Sensor 11 und Flügel 21 berechnet werden. Durch zeitliche Differentiation oder Bildung eines Differenzen-Quotienten kann aus den Positions- oder Verschiebungswerten auch die Geschwindigkeit des Flügels 21 bestimmt werden. Bei konstanter Bild-Wiederholfrequenz sind die Verschiebungen zwischen den einzelnen Bildern direkt proportional der Geschwindigkeit. Mit diesem Verfahren wird zur Positions- und Geschwindigkeitsbestimmung des Sensors wird kein zusätzliches Messverfahren bzw. zusätzliche Messeinrichtung benötigt.

Am mitbewegten Sensor 11 ist zusätzlich vorzugsweise eine Messeinrichtung zur Positions- oder Flügel-Öffnungsstellung angebracht. Damit können Erfassungsproblem beispielsweise von sehr glatten, einfarbigen, strukturarmen, transparenten oder spiegelnden Oberflächen oder auch das Problem eines sich temporär vor dem jeweiligen Objekt befindlichen anderen Objekts gelöst werden. Eine derartige Messeinrichtung kann mittels einer optischen Kamera oder eines optischen Scanners, eines zusätzlichen Sensors 11, der auf ein feststehendes Objekt gerichtet ist, eines zusätzlichen Laserentfernungsmessers nach dem Licht-Laufzeit-Messverfahren, Ultraschall-Abstandssensors, Aktiv-Infrarot-Sensors nach dem Triangulations-Verfahren, einer Winkel- oder Entfernungsmessung zu einer oder mehreren fest im Raum stehenden Sendequellen (z. B. Licht-, Funk-, Ultra-Schall-Sendequelle) und einem oder mehreren mit dem Sensor 11 oder der Flügelanlage in Verbindung stehenden Empfängern oder mittels Beobachtens der Flügelanlage mit einer fest im Raum stehenden 3D-Kamera erfolgen.

Möglich sind auch Messeinrichtungen, bei denen zumindest ein Teil an einem feststehenden Element der Flügelanlage befestigt ist, die also nicht berührungslos arbeiten. Dies sind beispielsweise Inkrementalgeber, Seilzug-Positionsmesser, induktiver Positionsmesser und dergleichen. Diese Messverfahren haben jedoch den Nachteil einer aufwendigen Montage, einfacher Manipulierbarkeit, störender Optik und schlechter Integrierbarkeit.

Insbesondere ist zur Positionsbestimmung für einen mitbewegenden Flügelsensor 11 ein zusätzlich am Sensor 11 angebrachter Laser-Entferungsmesser nach dem Lichtlaufzeit-Messverfahren geeignet. Der Lichtstrahl dieses Entfernungsmessers kann in Sensorhöhe, also oberhalb der Köpfe von Personen und anderen Objekten, auf einen feststehendes Objekt beispielsweise eine Wand gerichtet werden, wobei die Entfernung vom Sensor zum feststehenden Objekt bei diesem Verfahren millimetergenau bestimmt werden kann. Durch Bewegung eines Flügels 21 bewegt sich der Reflektionspunk des Lichtstrahls entlang des Objekts, und die gemessene Entfernung verändert sich. Die Veränderung der Entfernung ist bei jeder Flügelfahrt die gleiche und damit vergleichbar. Da jedoch das Signal nur für die Zuordnung zwischen Referenz und Flügelposition benötigt wird, ist weder Proportionalität noch Linearität der Entfernungsänderung in Abhängigkeit von der jeweiligen Flügelposition erforderlich. Einzig die Reproduzierbarkeit des Signals ist von Bedeutung. So ist es auch möglich, wenn der Lichtstrahl des Entfernungsmessers durch die Bewegung des Flügels das ursprünglich anvisierte Objekt verlässt und auf ein anderes feststehendes Objekt trifft. Hierbei ergibt sich möglicherweise ein Entfemungssprung, der jedoch nicht problematisch ist.

Ferner können im Rahmen der Erfindung folgende Verfahren einzeln oder in beliebiger Kombination miteinander zum Tragen kommen: Zur Bestimmung der aktuellen Flügelposition werden mittels des Sensors 11 nicht nur ein einzelner, aktuell gemessener Entfernungswert sondern auch der Verlauf mehrerer Entfernungswerte herangezogen. Durch Vergleich mit einem Referenzverlauf der Entfernungswerte kann dann eine eindeutige Zuordnung zu einer bestimmten Position des Flügels 21 stattfinden. Bei der Auswertung und Zuordnung der gemessenen Entfernungswerte kann weiterhin berücksichtigt werden, dass aufgrund der physikalischen Trägheit des Flügels größere Sprünge in Position oder Geschwindigkeit ausgeschlossen sind. Somit kann aufgrund beispielsweise eine plötz7lichen fehlenden Entfernungsänderung auf ein Hindernis am Flügel 21 geschlossen werden.

Ferner ist es möglich, zusätzliche Entfernungsmesser, die in eine andere Richtung gerichtet sind, beispielsweise um einen kleinen Winkel versetzt, einzusetzen. Dies ergäbe zumindest einen zusätzlichen Entfernungswert bzw. Entfernungswerte-Verlauf bestimmen. Aus der Kombination beider Werte oder Werte-Verläufe ist dann eine eindeutige Zuordnung zur Flügelposition möglich.

Auch der Einsatz einer oder mehrerer fest im Raum angeordneten/r Sendequelle/n ist ein gut zur Positionsbestimmung und -zuordnung geeignetes Mittel. Eine solche Sendequelle kann ein Funksender, eine Lichtquelle (vorzugsweise Infra-Rot-Licht), eine Schallquelle (vorzugsweise Ultraschall) oder eine andere Strahlenquelle sein. Mithilfe von einem oder mehreren auf die Strahlungsquelle abgestimmten Empfängern, wobei sich zumindest einer auf dem Flügelblatt befindet und vorzugsweise mit dem Sensor 11 gekoppelt ist, werden Abstand, die Abstandsänderung, Öffnungsstellung oder Öffnungsstellungsänderung bestimmt oder ein zu diesen Größen zugeordnetes Messsignal erzeugt. Beispielsweise kann mit zwei in unterschiedliche Richtungen ausgerichteten Empfängern mit gerichteter Charakteristik durch Vergleich eine Öffnungsstellungsänderung festgestellt werden.

Mit den vorgenannten Verfahren lässt sich das Problem beseitigen, dass die Entfernung zwischen Sensor 11 und Reflexionspunkt an einem Objekt in mehreren Positions- oder Öffnungs- bzw. Winkelstellungen des Flügels 21 jeweils den gleichen Wert aufweist zugeordnet.

Das Verfahren kann auch in umgekehrter Weise eingesetzt werden. Hierbei befindet sich die eine oder mehrere Sendequellen auf dem Flügel 21 oder am Sensor 11, und die Empfänger sind fest im Raum angeordnet. Auch könnten sich einige Sendequellen auf dem Flügelblatt oder am Sensor 11, befinden, und andere sind fest im Raum angeordnet. Auch könnten sich einzelne Empfänger auf dem Flügelblatt befinden, und andere sind wiederum fest im Raum angeordnet.

Bei Schiebeflügelanlagen reicht es aus, einen Sensor 11 innerhalb eines Antriebsprofils eines zugehörigen Schiebeflügelantriebs derart zu integrieren, dass dessen Erfassungsbereich 6, 7 zumindest auch den Bewegungsbereich der Schiebeflügel abdeckt. Alternativ kann ein Sensor 11 vorgesehen sein, bei dem das Erfassungsfeld bei geöffneter Tür auch auf die andere Türseite reicht; d. h. Erfassungskegel des Sensors 11 reicht durch die geöffnete Flügelanlage hindurch.

Vorzugsweise ist ferner vorgesehen, mithilfe des Sensors 11 bestimmte Gesten einer Person, wie beispielsweise verschiedene Handzeichen, zu erkennen und voneinander zu unterschieden. Dadurch kann ein Steuerprogramm in die Lage versetzt werden, mithilfe einer solchen Handzeichen- bzw. Gestenerkennung die Parametrisierung des jeweiligen Antriebs zu realisieren. Damit entfielen die sonst notwendigen, teuren Parametriergeräte und Schnittstellen wie Funkverbindung (z. B. Bluetooth) oder optische Datenschnittstelle (IR-Sender). So könnte beispielsweise ein Handzeichen mit drei ausgesteckten Fingern "Geschwindigkeitsstufe 3" bedeuten.

Um zu verhindern, dass die Antriebsparameter durch ein entsprechendes Handzeichen unbeabsichtigt verstellt werden, wird der Antrieb zur Parametrisierung vorzugsweise in einen speziellen Parametrisierungs-Modus geschaltet, der nach der Parametrisierung wieder aufhoben wird.

Auch der Normalbetrieb der Flügelanlage 20 könnte mithilfe des Sensors 11 mit Gesten gesteuert werden. Typische Funktionen hierfür sind das Umschalten zwischen Automaticbetrieb, Daueroffenstellung und Geschlossenstellung. Auch könnte sich die Flügelanlage nur bei einem bestimmten Handzeichen öffnen oder schließen. Hierdurch könnte erreicht werden, dass sich eine Tür für nicht eingewiesene Personen nicht öffnet und ist beispielsweise für Sicherheitsbereiche denkbar. Andere Anwendungen wären Betriebsräume oder Küchenräume in Hotels. Während Gäste an einer so ausgestatteten Tür vorbeigehen, ohne dass diese öffnet, würde die Tür für eingewiesenes Personal auf Handzeichen ohne einen bestimmten Schlüssel zu öffnen sein.

Eine andere Möglichkeit wäre, dass der Sensor ein bestimmtes geometrisches Merkmal an der Kleidung der betreffenden Person erkennt.

Auch eine Zutrittskontrolle ließe sich über dieses Verfahren realisieren, wenn sichergestellt ist, dass Personen, die kein Zutritt haben sollen, das von der 3D-Kamera aufgenommene Erkennungsmerkmal nicht aufweisen können. Entweder werden ein oder mehrer geheime Handzeichen oder Gesten vereinbart oder das System wertet die spezifischen biometrischen Merkmale von Personen aus. Dies können beispielsweise bestimmte Körper- oder Gesichtsproportionen wie Augenabstand, Augen-Nase-Abstand oder ähnliches sein.

Um die Auflösung des Sensors 11 zu verbessern, kann ferner vorgesehen sein, kann das vom Sensor 11 erfasste 3D-Abbild mit einem optischen 2D-Abbild zu überlagern. Um auch bei dem 2D-Abbild eine hohe Reproduzierbarkeit zu erreichen, wird auch diese mittels des vom Sensor 11 erzeugten (Infrarot-)Lichts aufgenommen. Auf diese Art können die Vorteile beider Bild erzeugenden Verfahren miteinander kombiniert werden. Durch das 3D-Abbild können Objekte eindeutig vom Hintergrund getrennt und als solche erkannt werden. Mit dem optischen 2D-Bild können zusätzliche Details durch Kontraste hinzugefügt werden.

Figuren 13 - 15 zeigen detailliert drei verschiedene Betriebsarten für den Sensor 11.

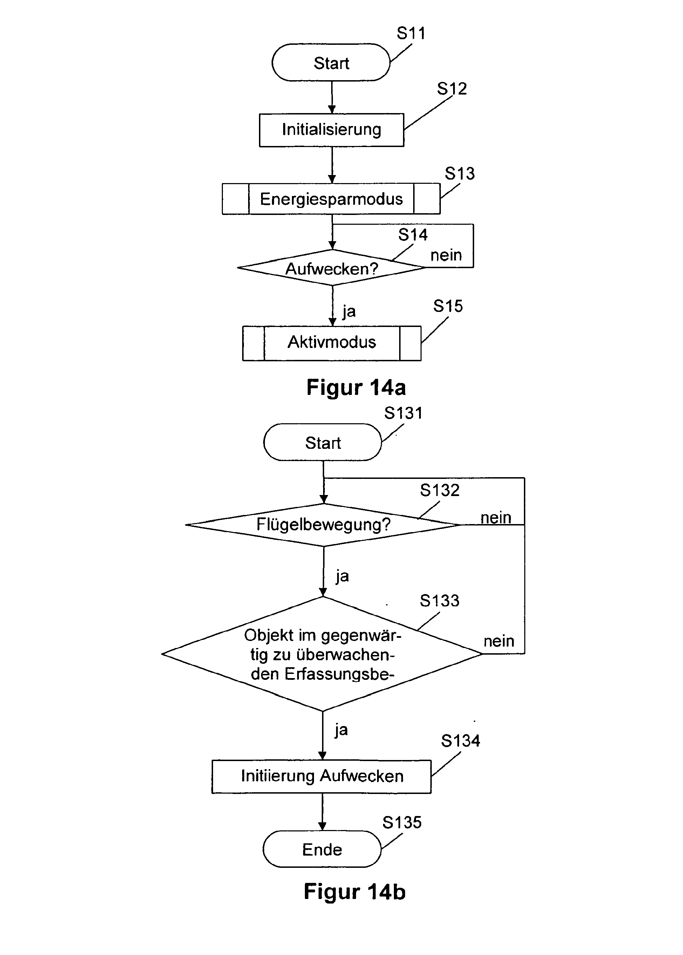

Mit der Flügelanlage 20 ist erfindungsgemäß ein Verfahren zum Betrieb dieser Flügelanlage 20 möglich, wie in Figur 14a gezeigt. Es umfasst zunächst Schritte des Startens (S11) und Initialisierens (S12) der Flügelanlage 20. Daraufhin wird der erfindungsgemäß zumindest eine erste Sensor 11 in den Energiesparmodus versetzt (S13) und vorerst in diesem Modus betrieben. Daraufhin wird geprüft (S14), ob dieser Sensor 11 aufzuwecken ist oder nicht. Ist er nicht aufzuwecken (nein-Zweig nach Schritt S14), wird gemäß dem bekannten Polling-Mechanismus zu Schritt S14 zurückgesprungen. Andernfalls (ja-Zweig nach Schritt S14) wird der betreffende Sensor 11 im Aktivmodus weiterbetrieben (S15). Dadurch wird verhindert, dass der betreffende Sensor 11 ständig in voller Bereitschaft steht und so relativ viel Energie benötigt. Der Energiesparmodus ermöglicht den Betrieb dieses Sensors 11 beispielsweise als Aktivierungssensor oder auch als Bildsensor mit gröberer Auflösung, d. h. es sind nicht alle Einzelsensoren 14 bzw. deren zugeordnete Beleuchtungselemente 15 zugeschaltet.

Vorzugsweise umfasst der Energiesparmodus gemäß Figur 14b einen ersten Teilschritt (S132) des Prüfens, ob der betreffende Flügel der Flügelanlage 20 eine Bewegung vollzieht oder nicht. Wenn nicht (nein-Zweig nach Schritt S132), steht dieser Flügel also still, wird zu Teilschritt S132 zurückgesprungen. Andernfalls (ja-Zweig nach Schritt S132) wird in einem nachfolgenden Teilschritt (S133) geprüft, ob sich im gegenwärtig vom betreffenden Sensor 11 zu überwachenden Erfassungsbereich 6 ein Objekt befindet oder nicht. Wenn nicht (nein-Zweig nach Schritt S133), wird zu Teilschritt S132 zurückgesprungen. Befindet sich hingegen ein Objekt im zu überwachenden Erfassungsbereich (ja-Zweig nach Schritt S133), wird das Aufwecken des betreffenden Sensors initiiert (S134).

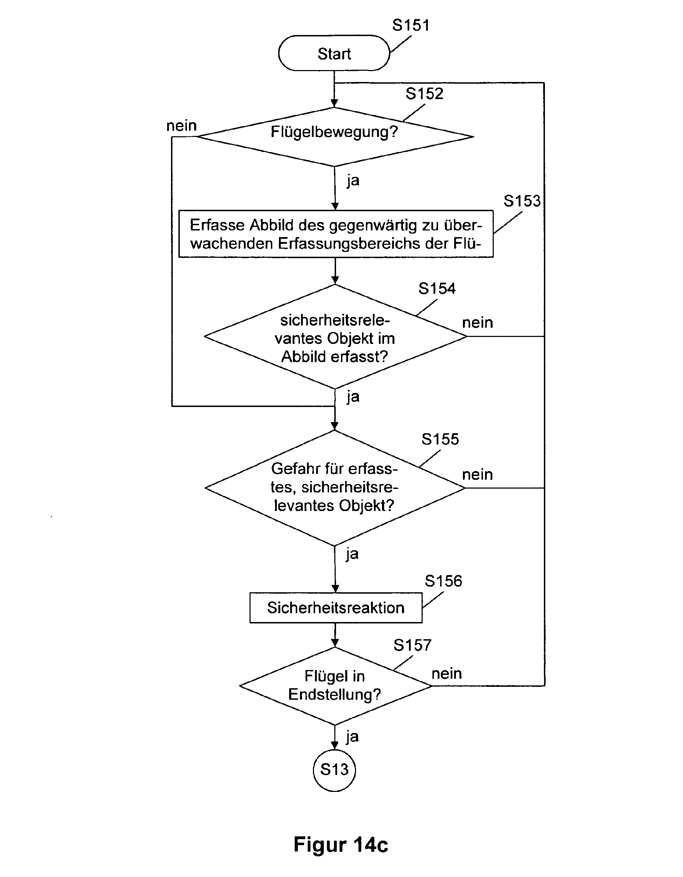

Der Aktivmodus umfasst gemäß Figur 14c vorzugsweise einen ersten Teilschritt (S152) wiederum des Prüfens, ob der betreffende Flügel der Flügelanlage 20 eine Bewegung vollzieht oder nicht. Wenn nicht (nein-Zweig nach Schritt S152), wird zu einem Prüfschritt S155 gesprungen. Andernfalls (nein-Zweig nach Schritt S152) werden in einem nachfolgenden Schritt (S153) ein Abbild des gegenwärtig zu überwachenden Erfassungsbereichs 7 der Flügelanlage 20 mittels des vorgenannten, zumindest einen ersten Sensors 11 erfasst und daraufhin geprüft (S154), ob in dem erfassten Abbild ein sicherheitsrelevantes Objekt erfasst ist oder nicht. Sicherheitsrelevante Objekte sind beispielsweise Personen und Tiere. Nicht sicherheitsrelevante Objekte können beispielsweise Spielbälle oder dergleichen sein. Gibt es keine sicherheitsrelevanten Objekte (nein-Zweig nach Schritt S154), wird zu Teilschritt S152 zurückgesprungen. Andernfalls (ja-Zweig nach Schritt S154) wird zu Prüfschritt S155 gesprungen. In Prüfschritt S155 wird geprüft, ob für das aktuell erfasste, sicherheitsrelevante Objekt von der Flügelanlage 20 eine Gefahr ausgeht oder nicht, also beispielsweise Einklemmgefahr besteht. Wenn nicht (nein-Zweig nach Schritt S155), wird zu Teilschritt S152 zurückgesprungen. Andernfalls (ja-Zweig nach Schritt S155) erfolgt durch die Flügelanlage 20 eine derart vorbestimmte Sicherheitsreaktion (S156), dass die Gefahr für das Objekt zumindest gemindert wird. Hinsichtlich der vorgenannten Einklemmgefahr könnte dies in einem abrupten Anhalten des bzw. der betreffenden, sich bewegenden Flügel 21 oder gar in ihrem Reversierens resultieren. Parallel dazu wird zu Schritt S157 gesprungen. In Prüfschritt S157 wird geprüft, ob sich der betreffende Flügel der Flügelanlage 20 in einer vorbestimmten Endstellung, also Vollständig-Offen- oder Geschlossenstellung, befindet oder nicht. Ist dies der Fall (ja-Zweig nach Schritt S157), besteht für das erfasste, sicherheitsrelevante Objekt keine Gefahr (mehr), und es wird zu Schritt S152 gesprungen. Befindet sich der betreffende Flügel hingegen nicht in Endstellung (nein-Zweig nach Schritt S157), wird zu Schritt S13 gesprungen. Dieses Verfahren bietet sich insbesondere für Sicherheitssensorik beispielsweise im Erfassungsbereich der Schließkanten an. Steht der betreffende Flügel 21 still, besteht keine Einklemmgefahr, und der betreffende Sensor 11 ist nicht erforderlich.

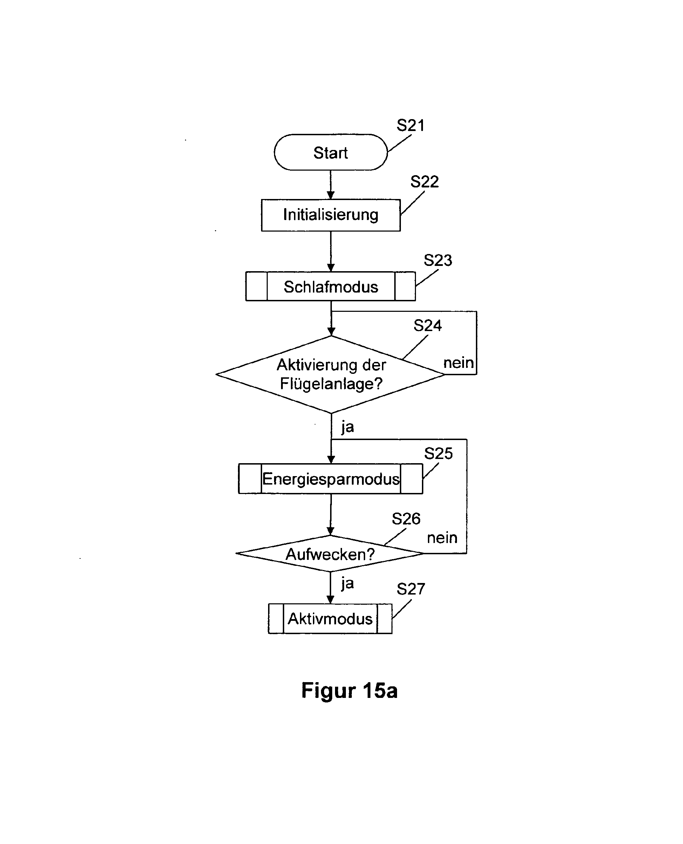

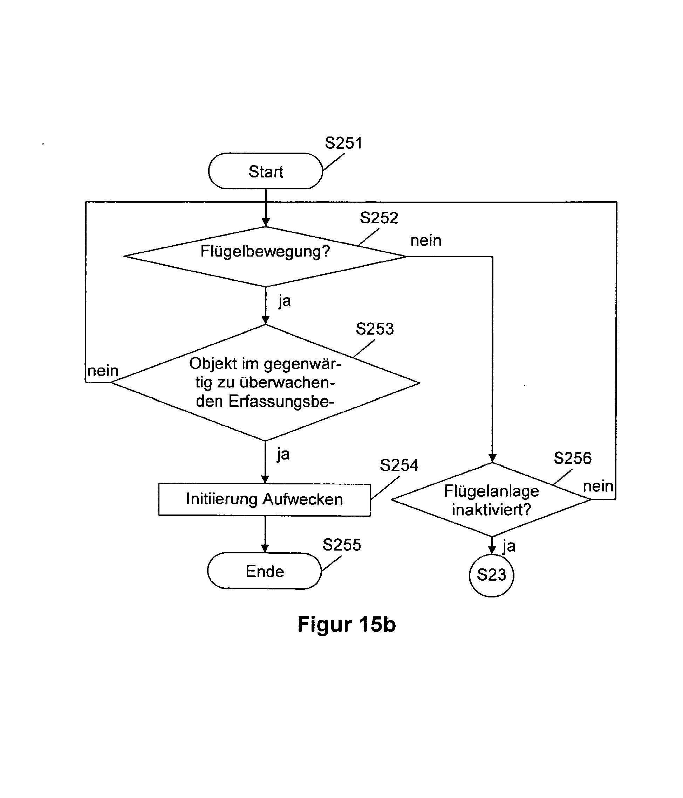

Die erstgenannte Verfahrensvariante kann dahingehend abgeändert sein, dass sie zusätzlich den vorgenannten Schlafmodus integriert, wie in Figur 15a abgebildet. Zwischen Schritten S22, S25 des initialisierens der Flügelanlage 20 bzw. des Versetzens und Betreibens des jeweiligen Sensors 11 in dessen Energiesparmodus weist das Verfahren erfindungsgemäß ferner Schritte S23, S24 des Versetzens dieses Sensors in den Schlafmodus und des darauf folgenden Prüfens, ob die Flügelanlage 20 aktiviert ist oder nicht, auf. Ist sie nicht aktiviert (nein-Zweig nach Schritt S24), befindet sie sich also vorzugsweise in Ruhe, wird zu Prüfschritt S24 zurückgesprungen. Andernfalls (ja-Zweig nach Schritt S24) wird mit dem Schritt S25 des Versetzens und Betreibens dieses Sensors in dessen Energiesparmodus fortgefahren. Im Schlafmodus ist der Sensor 11 vorzugsweise vollständig abgeschaltet, wodurch dessen Energiebedarf über die Zeit weiter verringerbar ist. Der Schlafmodus ist insbesondere sinnvoll, wenn die Flügelanlage 20 stillsteht und deren Flügel 21 geschlossen ist/sind. In dem Fall besteht für Objekte auch im zu überwachenden Erfassungsbereich keine Gefahr.

Weist der betreffende Sensor wiederum den vorgenannten Schlafmodus auf, kann das Verfahren den vorbeschriebenen Energiesparmodus in Verbindung mit dem verfahrenstechnisch integrierten Schlafmodus gemäß Figur 14b umfassen. In dem Fall wird, wenn in einem ersten Teilschritt S252 des Energiesparmodus' ermittelt wurde, dass der betreffende Flügel stillsteht (nein-Zweig nach Schritt S252), zu einem Schritt S256 des Prüfens, ob die Flügelanlage 20 inaktiviert ist oder nicht, gesprungen. Ist sie inaktiviert (ja-Zweig nach Schritt S256), wird zu Schritt S252 gesprungen. Andernfalls (ja-Zweig nach Schritt S256) wird zu Teilschritt S23 des Energiesparmodus' zurückgesprungen.

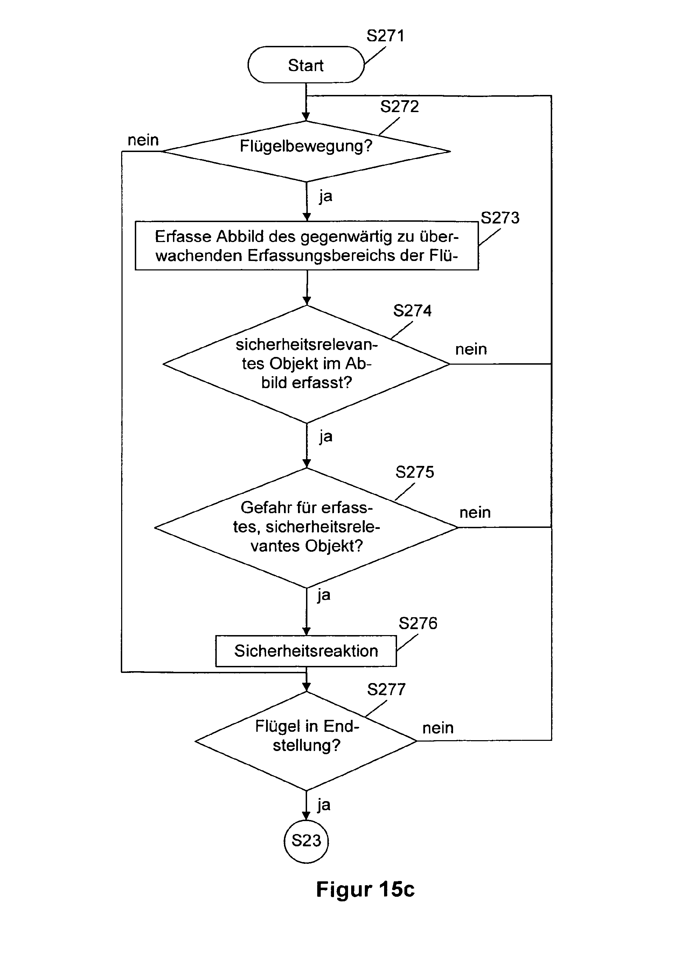

Alternativ oder zusätzlich umfasst das erfindungsgemäße Verfahren vorzugsweise den vorbeschriebenen Aktivmodus, wie in Figur 15c dargestellt. Die anderen Schritt-Bezugszeichen S271 - S277 dienen der Unterscheidung von der vorigen Ausführungsform dieses Verfahren, sind inhaltlich aber identisch. In dem Fall wird, wenn im Prüfschritt S277 ermittelt ist, dass sich der betreffende Flügel der Flügelanlage 20 in der vorbestimmten Endstellung befindet (ja-Zweig nach Schritt S277), zu Schritt S23 des Versetzens des betreffenden Sensors in den Schlafmodus gesprungen. Andernfalls (nein-Zweig nach Schritt S277) wird zum Schritt S272 des Prüfens, ob der betreffende Flügel der Flügelanlage 20 eine Bewegung vollzieht oder nicht, zurückgesprungen.

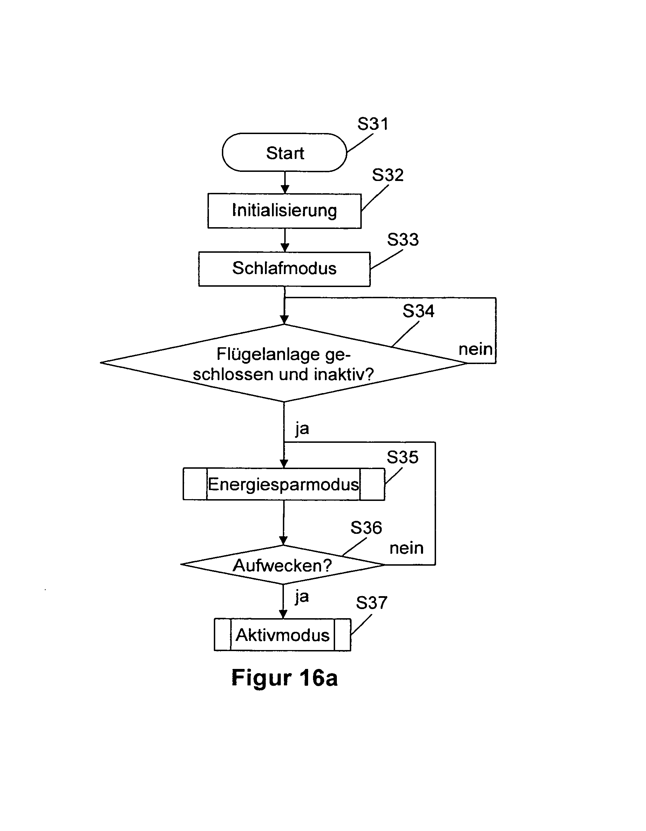

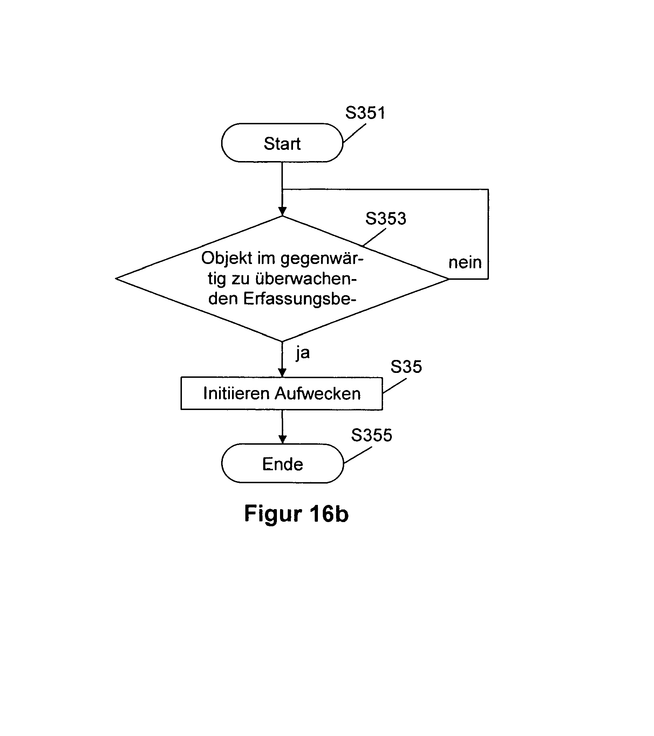

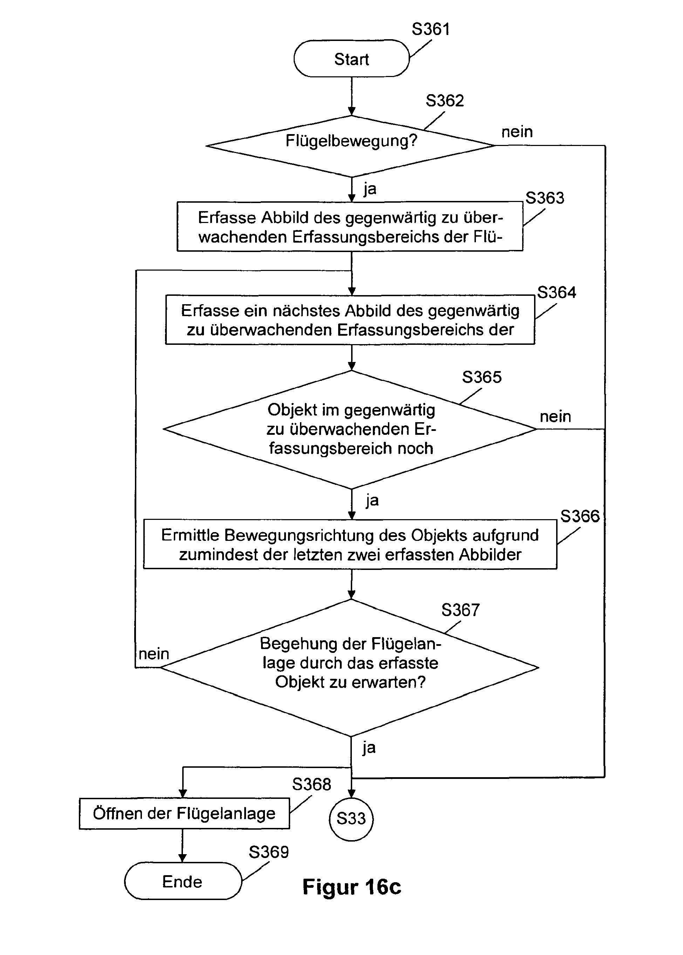

Im Rahmen eines in Figur 16 dargestellten Verfahrens gemäß einer dritten Ausführungsform der Erfindung sind im Energiesparmodus die Schritt S24 des Prüfens gemäß der vorigen Ausführungsform, ob die Flügelanlage 20 aktiviert ist oder nicht, durch einen Schritt S34 des Prüfens, ob die Flügelanlage 20 geschlossen und zugleich inaktiviert ist, oder nicht, ersetzt. Dieses Verfahren eignet sich besonders für den Betrieb des betreffenden Sensors 11 sowohl als Öffnungssensor als auch als Sicherheitssensor. Die Funktion des Öffnungssensors ist bekanntermaßen, bei Näherkommen eines Objekts wie einer Person dies zu erkennen und daraufhin den Öffnungsvorgang der Flügelanlage 20 einzuleiten. Zu dem Zweck befindet sich dieser Sensor im inaktivierten, Geschlossenzustand der Flügelanlage 20 im Energiesparmodus. D. h. dem Sensor 11 ist es möglich, auf ein näher kommendes Objekt zu reagieren. Ist dies der Fall (ja-Zweig nach Schritt S353), wird der Sensor 11 in den Aktivmodus geschaltet (S35, S36), um ermitteln zu können, ob zu erwarten ist, dass das Objekt die Flügelanlage 20 passieren will, oder ob es sich lediglich an der Flügelanlage 20 vorbei bewegt, sodass die Flügelanlage 20 geschlossen bleiben kann.

Im Rahmen des zuletzt beschriebenen Verfahrens umfasst der Aktivmodus vorzugsweise zunächst einen Teilschritt S362 des Prüfens, ob der betreffende Flügel der Flügelanlage 20 eine Bewegung vollzieht oder nicht. Ist dies der Fall (ja-Zweig nach Schritt S362), wird zum Schritt S33 des Versetzens des zumindest einen ersten Sensors 11 in den Schlafmodus zurückgesprungen. Andernfalls (nein-Zweig nach Schritt S362) werden zeitlich versetzt ein erstes und ein nächstes Abbild des gegenwärtig zu überwachenden Erfassungsbereichs der Flügelanlage 20 mittels des zumindest einen ersten Sensors erfasst (S363, S364). Danach wird geprüft, ob sich das erfasste Objekt weiterhin im zu überwachenden Erfassungsbereich der Flügelanlage 20 befindet oder nicht (S365). Wenn nicht (nein-Zweig nach Schritt S365), wird zu Schritt S33 zurückgesprungen. Andernfalls (ja-Zweig nach Schritt S365) wird eine Bewegungsrichtung des erfassten Objekts auf Basis zumindest zwei der zuletzt erfassten Abbilder ermittelt (S366). Dies kann einfach mittels Ermittelns erfolgen, wohin und in welchem Maß sich das Objekt im nächsten Abbild zum zeitlich vorher erfassten Abbild bewegt hat. Aufgrund der ermittelten Bewegungsrichtung und des Abstands des erfassten Objekts von der Flügelanlage 20 wird nun geprüft (S367), ob eine Begehung der Flügelanlage 20 durch das erfasste Objekt zu erwarten ist oder nicht. Bleibt beispielsweise der Abstand des Objekts zur Flügelanlage 20 in etwa gleich, oder wird er gar größer, will das Objekt mit hoher Wahrscheinlichkeit die Flügelanlage 20 nicht passieren, sodass etwaige Türantriebe nicht in Aktion treten müssen, was einen wesentlich höheren Energiebedarf zur Folge hätte als der reine Sensorbetrieb. Ist ein Passieren zu erwarten (ja-Zweig nach Schritt S367), werden das Öffnen der Flügelanlage 20 initiiert (S368) und vorzugsweise parallel dazu zu Schritt S33 zurückgesprungen. Andernfalls (nein-Zweig nach Schritt S367) wird nur zu Schritt S33 zurückgesprungen.

Die Erfindung ist nicht auf die vorstehenden Ausführungsformen beschränkt.

Die Prüfschritte S14, S132, S133, S154, S155, S157, S24, S26, S252, S253, S256, S272, S274, S275, S277, S34, S36, S353, S35, S362, S365 und S367 gemäß dem Polling-Mechanismus können durch Triggerschritte ersetzt sein.

Im Ergebnis ist durch die Erfindung ein universell und sehr einfach zu betreibender Sensor für Flügelanlagen geschaffen.

**Bezugszeichenliste**

| | |
|---|---|
| 1 | Positionssensor |
| 2 | Daten-/Kommunikationsverbindung |
| 3 | Daten-/Kommunikationsverbindung |
| 4 | Daten-/Kommunikationsverbindung |
| 5 | Daten-/Kommunikationsverbindung |
| 6, 7', 7" | Erfassungsbereich Energiesparmodus |
| 7, 7', 7" | Erfassungsbereich Aktivmodus |
| 7a, 7b | Teilerfassungsbereich |
| 10 | Sensorvorrichtung |
| 11, 11', 11 " Sensor 12 | Steuerung |
| 13 | Bildverarbeitungseinrichtung |
| 14, 14' | Sensorelement |
| 15, 15' | Beleuchtungseinrichtung |
| 20 | Flügelanlage |
| 21 | Flügel |
| 22 | Flügeleinfassung |
| 23 | Angel |
| 24 | Hauptschließkante |
| 25 | Nebenschließkante |

26 Gangflügel

27 Standflügel

28 Wand

29 Drehkreuz

30 Trommelwand

31 Drehgelenk

32 Führungsschiene

33 Laufwagen

40 Türbetätiger

41 Gleitschiene

42 Gleitarm

Si; i ∈ N      (Teil-)Schritt

K         Kollisionsstelle

O         Objekt

R         Richtung

SR        Schließrichtung


**Patentansprüche**

1.  Sensor (11, 11', 11 "),

    • eingerichtet, derart im Bereich einer Flügelanlage (20) angeordnet zu werden, dass der Sensor (11, 11', 11 ") einen vorbestimmten, zu überwachenden Erfassungsbereich (6, 6', 6", 7, 7', 7") in Bezug auf die Flügelanlage (20) sensorisch abdeckt,
    • gestaltet als Bilderfassungssensor und
    • aufweisend zumindest zwei lichtempfindliche Sensorelemente (14) und/oder Beleuchtungselemente (15), die so angeordnet sind, dass sie den zu überwachenden Erfassungsbereich (6, 6', 6", 7, 7', 7") vollständig abdecken,
    • wobei der Sensor (11, 11', 11 ") ferner derart eine Steuerungseinrichtung (12) aufweist oder mit solch einer Steuerungseinrichtung (12) koppelbar gestaltet ist, dass die Steuerungseinrichtung (12) in der Lage ist,

       - vorbestimmte Sensorelemente (14) und/oder Beleuchtungselemente (15) des Sensors (11, 11', 11") gemäß einem jeweils aktuellen Zustand der Flügelanlage (20) aktiviert bzw. inaktiviert und
       - von den jeweils aktivierten Sensorelementen (14) erfasste Lichtwerte erfasst, die zusammen ein jeweiliges, vom Sensor (11, 11', 11 ") erfasstes Bild ergeben.

2.  Sensor(11, 11', 11") gemäß Anspruch 1, wobei die Sensorelemente (14) und/oder Beleuchtungselemente (15) matrixartig angeordnet sind.

3.  Sensor (11, 11', 11") gemäß einem der vorhergehenden Ansprüche, aufweisend zumindest

    • einen Energiesparmodus, in dem nur ein Teil der Sensorelemente (14) und/oder Beleuchtungselemente (15) aktiviert ist, der einen Aktivierungsbereich (7, 7', 7") abdeckt, der

- einen Teil eines Überwachungsbereichs (7, 7', 7") bildet und/oder
- sich zumindest teilweise außerhalb des Überwachungsbereichs (7, 7', 7") befindet, sowie

• einen Aktivmodus, in dem die Sensorelemente (14) und/oder Beleuchtungselemente (15) aktiviert sind, die den Überwachungsbereich (7, 7', 7") vollständig abdecken.

4. Sensor (11, 11', 11") gemäß Anspruch 3, ferner aufweisend einen Schlafmodus, in dem alle Sensorelemente (14) und/oder Beleuchtungselemente (15) inaktiviert sind.

5. Sensor (11, 11', 11") gemäß einem der vorhergehenden Ansprüche, aufweisend oder gekoppelt mit einer Datenverarbeitungseinrichtung (16, 6', 6"), die eingerichtet ist, das von den Sensorelementen (14) erfasste Bild mit vorbestimmten, gespeicherten Mustern abzugleichen, die nicht sicherheitsrelevanten Teilen der Flügelanlage (20) selbst oder ihrer Umgebung entsprechen.

6. Sensor (11, 11', 11") gemäß einem der vorhergehenden Ansprüche, ausgebildet als getaktet betriebener Sensor (11, 11', 11"), wobei der Betriebstakt des Sensors (11, 11', 11") im Inaktivmodus geringer als im Aktivmodus ist.

7. Sensor (11, 11', 11") gemäß einem der vorhergehenden Ansprüche, wobei die Beleuchtungseinrichtung (15),

• eingerichtet ist, den zu überwachenden Erfassungsbereich (6, 6', 6", 7, 7', 7") derart auszuleuchten, dass die Sensorelemente (14) in der Lage sind, die Lichtwerte zu erfassen, und
• im Energiesparmodus eine gegenüber dem Aktivmodus reduzierte Ausleuchtleistung erbringt.

8. Sensor (11, 11', 11") gemäß einem der vorhergehenden Ansprüche, ferner

• aufweisend einen Schlafmodus, in dem all die Sensorelemente (14) und/oder Beleuchtungselemente (15) inaktiviert sind, die einen Erfassungsbereich außerhalb eines vorbestimmten, sicherheitsrelevanten Erfassungsbereichs (7, 7', 7") der Flügelanlage (20) abdecken, und
• aufweisend oder gekoppelt mit einer Aufweckeinrichtung, die bei Betätigung bzw. Auslösung den Sensor (11, 11', 11") in den Energiesparmodus oder Aktivmodus bringt.

9. Sensor (11, 11', 11") gemäß Anspruch 8, wobei die Aufweckeinrichtung einen Aktivierungssensor umfasst, der

• den sicherheitsrelevanten Erfassungsbereich (6, 6', 6", 7, 7', 7") abdeckt und
• bei Detektieren eines Objekts im sicherheitsrelevanten Erfassungsbereich (6, 6', 6", 7, 7', 7") den Sensor (11, 11', 11") in den Aktivmodus bringt.

10. Sensor (11, 11', 11") gemäß Anspruch 8 oder 9, wobei die Aufweckeinrichtung eine Schalteinrichtung umfasst, die eingerichtet ist, bei Aktivierung oder Deaktivierung den Sensor (11, 11', 11") in den Aktivmodus bzw. Inaktiviert- oder Schlafmodus zu schalten.

11. Flügelanlage (20), aufweisend zumindest einen Sensor (11, 11', 11") gemäß einem der vorhergehenden Ansprüche.

12. Flügelanlage (20) gemäß Anspruch 11, wobei sich der zu überwachende Erfassungsbereich (6, 6', 6", 7, 7', 7")

• im Erfassungsbereich (6, 6', 6", 7, 7', 7") einer Stirnkante bzw. Schließkante (24, 25) eines zugehörigen Flügels (21) der Flügelanlage (20) befindet und
• sich vom zugehörigen Flügel (21) weg erstreckt.

13. Verfahren zum Betrieb einer Flügelanlage (20) gemäß Anspruch 11 oder 12, aufweisend die Schritte:

• Starten (S11, S21, S41) und Initialisieren (S12, S22, S42) der Flügelanlage (20),
• Versetzen und Betreiben (S13, S25, S45) des zumindest einen ersten Sensors (11, 11', 11") in dessen Energiesparmodus und
• Prüfen (S14, S26, 6', 6", S46, 6', 6"), ob der zumindest eine erste Sensor (11, 11', 11") aufzuwecken ist oder nicht,
• wenn nicht, Zurückspringen zum Schritt (S13, S25, S45) des Betreibens des zumindest einen ersten Sensors (11, 11', 11") in dessen Energiesparmodus, und

• andernfalls, Betreiben (S15, S27, S47) des zumindest einen Sensors (11, 11', 11") im Aktivmodus.

14. Verfahren gemäß Anspruch 13, wobei der Energiesparmodus (S13, S25) die Teilschritte umfasst:

• Prüfen (S132, S252, S452), ob der betreffende Flügel (21) der Flügelanlage (20) eine Bewegung vollzieht oder nicht,
• wenn nicht, Zurückspringen zum Teilschritt (S132) des Prüfens, ob der betreffende Flügel (21) der Flügelanlage (20) eine Bewegung vollzieht oder nicht,
• andernfalls, Prüfen (S133, S253, S453), ob sich im gegenwärtig vom zumindest einen ersten Sensor (11, 11', 11") zu überwachenden Erfassungsbereich (6, 6', 6", 7, 7', 7") ein Objekt befindet oder nicht,
• wenn nicht, Zurückspringen zum Teilschritt (S132, S252, S452) des Prüfens, ob der betreffende Flügel (21) der Flügelanlage (20) eine Bewegung vollzieht oder nicht, und
• andernfalls, Initiieren (S134, S254, S454) des Aufweckens des zumindest einen ersten Sensors (11, 11', 11").

15. Verfahren gemäß Anspruch 13 oder 14, wobei der Aktivmodus (S15) die Teilschritte umfasst:

• Prüfen (S152, S272), ob der betreffende Flügel (21) der Flügelanlage (20) eine Bewegung vollzieht oder nicht,
• wenn nicht, Springen zu einem ersten nächsten Prüfschritt (S157, S277),
• andernfalls

- Erfassen (S153, S273) eines Abbilds des gegenwärtig zu überwachenden Erfassungsbereichs (6, 6', 6", 7, 7', 7") der Flügelanlage (20) mittels des zumindest einen ersten Sensors (11, 11', 11") und
- Prüfen (S154, S274), ob in dem erfassten Abbild ein sicherheitsrelevantes Objekt erfasst ist oder nicht,
- wenn nicht, Zurückspringen zum Teilschritt (S152, S272) des Prüfens, ob der betreffende Flügel (21) der Flügelanlage (20) eine Bewegung vollzieht oder nicht,
- andernfalls, Springen zu einem zweiten nächsten Prüfschritt (S155, S275),

• wobei im zweiten nächsten Prüfschritt (S155, S275) geprüft wird, ob für das aktuell erfasste, sicherheitsrelevante Objekt von der Flügelanlage (20) eine Gefahr ausgeht oder nicht, wobei,

- wenn nicht, zum Teilschritt (S152, S272) des Prüfens, ob der betreffende Flügel (21) der Flügelanlage (20) eine Bewegung vollzieht oder nicht, zurückgesprungen wird und
- andernfalls

· eine derart vorbestimmte Sicherheitsreaktion durchgeführt wird (S156, 6', 6", S276), dass die Gefahr für das Objekt zumindest gemindert wird, und
· zum ersten nächsten Prüfschritt (S157, S277) gesprungen wird,

• wobei im ersten nächsten Prüfschritt (S157, S27) geprüft wird, ob sich der betreffende Flügel (21) der Flügelanlage (20) in einer vorbestimmten Endstellung befindet oder nicht, wobei,

- wenn nicht, zum Schritt (S13) des Betreibens des zumindest einen ersten Sensors (11, 11', 11") im Energiesparmodus gesprungen wird,
- andernfalls zum Schritt (S152) des Prüfens, ob der betreffende Flügel (21) der Flügelanlage (20) eine Bewegung vollzieht oder nicht, gesprungen wird.

16. Verfahren gemäß Anspruch 13, wobei

• der zumindest eine Sensor (11, 11', 11") gemäß Anspruch 4 ausgebildet ist und
• das Verfahren zwischen den Schritten (S22) des Initialisierens der Flügelanlage (20) bzw. des Versetzens und Betreibens (S25) des zumindest einen ersten Sensors (11, 11', 11") in dessen Energiesparmodus ferner die Schritte aufweist:

- Versetzen (S23) des zumindest einen ersten Sensors (11, 11', 11") in den Schlafmodus und
- Prüfen (S24), ob die Flügelanlage (20) aktiviert ist oder nicht, wobei,

wenn nicht, zum Prüfschritt (S24), ob die Flügelanlage (20) aktiviert ist oder nicht, zurückgesprungen wird und

· andernfalls mit Schritt (S25) des Versetzens und Betreibens des zumindest einen ersten Sensors (11, 11', 11 ") in dessen Energiesparmodus fortgefahren wird.

17. Verfahren gemäß Ansprüchen 14 und 16, wobei, wenn in Schritt (S252) ermittelt ist, dass der Flügel (21) keine Bewegung vollzieht, zu einem Schritt (S256) des Prüfens, ob die Flügelanlage (20) inaktiviert ist oder nicht, gesprungen wird, wobei,

• wenn ja, zum Schritt (S23) des Versetzens des zumindest einen ersten Sensors (11, 11', 11") in den Schlafmodus gesprungen wird und
• andernfalls, zum Teilschritt (S252) des Prüfens, ob der betreffende Flügel (21) der Flügelanlage (20) eine Bewegung vollzieht oder nicht, zurückgesprungen wird.

18. Verfahren gemäß Anspruch 16 oder 17 und gemäß Anspruch 15, wobei,

• wenn im ersten nächsten Prüfschritt (S157, S27) ermittelt ist, dass sich der betreffende Flügel (21) der Flügelanlage (20) in der vorbestimmten Endstellung befindet, zum Schritt (S23) des Versetzens des zumindest einen ersten Sensors (11, 11', 11 ") in den Schlafmodus gesprungen wird und,
• andernfalls zum Schritt (S272) des Prüfens, ob der betreffende Flügel (21) der Flügelanlage (20) eine Bewegung vollzieht oder nicht, zurückgesprungen wird.

19. Verfahren gemäß Anspruch 14 oder 16, wobei der Schritt (S24) des Prüfen, ob die Flügelanlage (20) aktiviert ist oder nicht, durch einen Schritt (S34) des Prüfens, ob die Flügelanlage (20) geschlossen und zugleich inaktiviert ist, oder nicht, ersetzt ist.

20. Verfahren gemäß Anspruch 19, wobei der Aktivmodus (S37, 7', 7") die Teilschritte umfasst:

• Prüfen (S352), ob der betreffende Flügel (21) der Flügelanlage (20) eine Bewegung vollzieht oder nicht,
• wenn ja, Zurückspringen zum Schritt (S33) des Versetzens des zumindest einen ersten Sensors (11, 11', 11") in den Schlafmodus,
• andernfalls

- zeitlich aufeinander folgend, Erfassen (S363, S364) eines ersten und eines nächsten Abbilds des gegenwärtig zu überwachenden Erfassungsbereichs (6, 6', 6", 7, 7', 7") der Flügelanlage (20) mittels des zumindest einen ersten Sensors (11, 11', 11"),
- Prüfen (S365), ob sich das erfasste Objekt weiterhin im zu überwachenden Erfassungsbereich (6, 6', 6", 7, 7', 7") der Flügelanlage (20) befindet oder nicht,
- wenn nein, Zurückspringen zum Schritt (S33) des Versetzens des zumindest einen ersten Sensors (11, 11', 11") in den Schlafmodus, und
- andernfalls

Ermitteln (S366) einer Bewegungsrichtung des erfassten Objekts auf Basis zumindest zwei der zuletzt erfassten Abbilder und
Prüfen (S367) aufgrund der ermittelten Bewegungsrichtung und des Abstands des erfassten Objekts von der Flügelanlage (20), ob eine Begehung der Flügelanlage (20) durch das erfasste Objekt zu erwarten ist oder nicht,
wenn ja, Initiieren eines Öffnens (S368) der Flügelanlage (20) und Zurückspringen zum Schritt (S33) des Versetzens des zumindest einen ersten Sensors (11, 11', 11 ") in den Schlafmodus, und
andernfalls lediglich Zurückspringen zum Schritt (S33) des Versetzens des zumindest einen ersten Sensors (11, 11', 11 ") in den Schlafmodus.

**Figur 1**

**Figur 2a**

**Figur 2b**

**Figur 2c**

**Figur 3a**

**Figur 3b**          **Figur 3c**

**Figur 4a**

**Figur 4b**

**Figur 4c**

**Figur 5a**

**Figur 5b**

**Figur 5c**

**Figur 6a**

**Figur 6b**

**Figur 6c**

**Figur 6d**

**Figur 7a**

**Figur 7b**

**Figur 7c**

**Figur 8**

**Figur 9**

**Figur 10**

**Figur 11a**

**Figur 11b**

**Figur 11c**

**Figur 12**

Figur 13a

Figur 13b

S11

Start

S12

Initialisierung

S13

Energiesparmodus

S14

Aufwecken? — nein

ja

S15

Aktivmodus

**Figur 14a**

S131

Start

S132

Flügelbewegung? — nein

ja

S133

Objekt im gegenwärtig zu überwachenden Erfassungsbe- — nein

ja

S134

Initiierung Aufwecken

S135

Ende

**Figur 14b**

S151

Start

S152

nein ← Flügelbewegung?

ja

S153

Erfasse Abbild des gegenwärtig zu überwachenden Erfassungsbereichs der Flü-

S154

sicherheitsrelevantes Objekt im
Abbild erfasst? → nein

ja

S155

Gefahr für erfasstes, sicherheitsrelevantes Objekt? → nein

ja

S156

Sicherheitsreaktion

S157

Flügel in
Endstellung? → nein

ja

S13

**Figur 14c**

**Figur 15a**

S251

Start

S252

Flügelbewegung?

nein

ja

S253

Objekt im gegenwärtig zu überwachenden Erfassungsbenein

ja

S254

Initiierung Aufwecken

S255

Ende

S256

Flügelanlage
inaktiviert?

nein

ja

S23

**Figur 15b**

S271

Start

S272

Flügelbewegung?

nein

ja

Erfasse Abbild des gegenwärtig zu überwachenden Erfassungsbereichs der Flü-

S273

sicherheitsrelevantes Objekt im Abbild erfasst?

S274

nein

ja

Gefahr für erfasstes, sicherheitsrelevantes Objekt?

S275

nein

ja

Sicherheitsreaktion

S276

Flügel in Endstellung?

S277

nein

ja

S23

**Figur 15c**

**Figur 16a**

S351

Start

S353

Objekt im gegenwärtig zu überwachenden Erfassungsbenein

ja

S35

Initiieren Aufwecken

S355

Ende

**Figur 16b**

**Figur 16c**